# EUROPEAN PATENT APPLICATION

(11) **EP 4 806 974 A1**
(43) Date of publication of application: **16.09.2026**
(21) Application number: 24913057.6
(22) Date of filing: 26.12.2024
(51) Int. Cl.: C09K 3/18, D21H 21/14

(54) **OIL RESISTANT AGENT COMPOSITION**

(30) Priority: 27.12.2023 JP 2023221558
(71) Applicant: Daikin Industries, Ltd., Osaka-shi, Osaka 530-0001 (JP)
(72) Inventor: AKUTA, Ryo, Osaka-Shi, Osaka 530-0001 (JP); HIGASHI, Masahiro, Osaka-Shi, Osaka 530-0001 (JP); KISHIKAWA, Yosuke, Osaka-Shi, Osaka 530-0001 (JP); TSUCHII, Takane, Osaka-Shi, Osaka 530-0001 (JP)
(74) Representative: Hoffmann Eitle
(86) International application number: PCT/JP2024/046279
(87) International publication number: WO 2025/143171

(57) **Abstract**

Provided is an oil-resistant agent composition in solid form, comprising a liquid-repellent compound, a dispersant, and an excipient.

## Description

### Technical Field

The present disclosure relates to an oil-resistant agent composition.

### Background Art

Patent Literature 1 discloses a water dispersion of a powdery papermaking composition.

### Citation List

### Patent Literature

Patent Literature 1: JP 2005-60921 A

### Summary of Invention

### Technical Problem

The powdery papermaking composition of Patent Literature 1 is provided as an aqueous dispersion, and intended to be stored and used at an appropriate time and place. In the water dispersion of the powdery papermaking composition, the powdery papermaking composition may sediment during a period from provision to storage or use. A water dispersion in which sedimentation has occurred may fail to achieve the desired performance at the time of use.

### Solution to Problem

The present disclosure provides an oil-resistant agent composition in solid form capable of providing an oil-resistant agent water dispersion at the time of use.

The present disclosure includes the following embodiments.
[Item 1]
   An oil-resistant agent composition in solid form, comprising a liquid-repellent compound, a dispersant, and an excipient.
[Item 2]
   The oil-resistant agent composition according to item 1, wherein the liquid-repellent compound has a hydrocarbon group having 6 or more and 40 or less carbon atoms or a polysiloxane group.
[Item 3]
   The oil-resistant agent composition according to item 1 or 2, wherein the liquid-repellent compound comprises at least one selected from the group consisting of a modified body of amine, a modified body of polyol, a modified body of polycarboxylic acid, and other solid oils.
[Item 4]
   The oil-resistant agent composition according to any one of items 1 to 3, wherein
   the liquid-repellent compound is selected from the group consisting of a modified body of amine, a modified body of polyol, and a modified body of polycarboxylic acid,
   the modified body of amine is a compound having an amine backbone and one or more groups represented by the following formula:

      -Y^{N}-Z^{N}ₙ

      wherein Y^{N} is a 1+n valent group composed of one or more selected from the group consisting of Y^{N1} and Y^{N2}
      Y^{N1} is a group composed of one or more selected from the group consisting of a direct bond, -O-, -C(=O)-, -C(=NR')-, -C(=S)-, -S-, -S(=O)₂-, -NR'-, -C(OR')R'-, - C(OR')(-)₂, and -N(-)₂ wherein R' is independently at each occurrence a hydrogen atom or a hydrocarbon group having 1 to 30 carbon atoms,
      Y^{N2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
      Z^{N} is a monovalent hydrocarbon group having 1 or more and 40 or less carbon atoms and optionally having a substituent, or a monovalent polysiloxane group, and
      n is an integer of 1 or more and 3 or less,
   in which at least one -Y^{N}-Z^{N}ₙ is bonded to a nitrogen atom of the amine backbone;
   the modified body of polyol is a compound formed by replacing one or more hydroxy groups of the polyol by a group represented by the following formula:

      -Y^{O}-Z^{O}ₙ

      wherein Y^{O} is a 1+n valent group composed of one or more selected from the group consisting of Y^{O1} and Y^{O2},
      Y^{O1} is a group composed of one or more selected from the group consisting of a direct bond, -O-, -C(=O)-, -C(=NR')-, -C(=S)-, -S-, -S(=O)₂-, -NR'-, -C(OR')R'-, - C(OR') (-)₂, and -N(-)₂ wherein R' is independently at each occurrence a hydrogen atom or a hydrocarbon group having 1 to 30 carbon atoms,
      Y^{O2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
      Z^{O} is a monovalent hydrocarbon group having 1 or more and 40 or less carbon atoms and optionally having a substituent, or a monovalent polysiloxane group, and
      n is an integer of 1 or more and 3 or less; and
   the modified body of polycarboxylic acid is a compound formed by replacing a hydroxyl group(s) of one or more carboxyl groups of the polycarboxylic acid by a group represented by the following formula:

      -Y^{C}- Z^{C}ₙ

      wherein Y^{C} is a 1+n valent group composed of one or more selected from the group consisting of Y^{C1} and Y^{C2},
      Y^{C1} is a group composed of one or more selected from the group consisting of a direct bond, -O-, -C(=O)-, -C(=NR')-, -C(=S)-, -S-, -S(=O)₂-, -NR'-, -C(OR')R'-, - C(OR') (-)₂, and -N(-)₂ wherein R' is independently at each occurrence a hydrogen atom or a hydrocarbon group having 1 to 30 carbon atoms,
      Y^{C2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
      Z^{C} is a monovalent hydrocarbon group having 1 or more and 40 or less carbon atoms and optionally having a substituent, or a monovalent polysiloxane group, and n is an integer of 1 or more and 3 or less.
[Item 5]
   The oil-resistant agent composition according to item 4, wherein
   the amine backbone is obtained by removing at least one hydrogen atom bonded to a nitrogen atom of at least one amine compound selected from the group consisting of:
      ethylenediamine, propylenediamine, butylenediamine, pentanediamine, hexamethylenediamine;
      diethylenetriamine, triethylenetetramine, tetraethylenepentamine, pentaethylenehexamine, dipropylenetriamine, tripropylenetetramine, tetrapropylenepentamine;
      2-amino-1,3-propanediol;
      o-, m-, or p-xylylenediamine; and
      4,4'-diaminodiphenyl ether, 4,4'-diaminodiphenylmethane, and 4,4'-oxydianiline,
   the polyol is at least one selected from the group consisting of:
      glucose, fructose, galactose, and xylose;
      sucrose, cycloamylose, cyclodextrin, maltose, trehalose, lactose, and sucralose;
      sorbitol, maltitol, erythritol, isomalt, lactitol, mannitol, xylitol, sorbitan, and lactitol;
      starch, cellulose, curdlan, pullulan, alginic acid, carrageenan, guar gum, chitin, chitosan, locust bean gum, kappa-carrageenan, iota-carrageenan, isomaltodextrin, gellan gum, and tamarind seed gum;
      kojic acid, quinic acid, chlorogenic acid, and gluconic acid;
      glucosamine;
      ascorbic acid and inositol;
      catechin, quercetin, and anthocyanin;
      glycerol, ethylene glycol, propylene glycol, diethylene glycol, triethylene glycol, tetraethylene glycol, neopentyl glycol, trimethylene glycol, trimethylolpropane, and trimethylolethane; and
         polyglycerol, polyvinyl alcohol, hydroxyethyl (meth)acrylate polymer, hydroxypropyl (meth)acrylate polymer, and hydroxybutyl (meth)acrylate polymer, and
   the polycarboxylic acid is at least one selected from the group consisting of:
      citric acid, malic acid, glutaric acid, adipic acid, phthalic acid, alginic acid, tartaric acid, oxalic acid, malonic acid, succinic acid, fumaric acid, maleic acid, and aldaric acid;
      tricarballylic acid, t-aconitic acid, and trimellitic acid;
      pyromellitic acid;
      a polymer comprising a repeating unit derived from a compound represented by the following formula:

         CH₂=C(-Q)-C(=O)-OH
   wherein Q is a hydrogen atom, a monovalent organic group, or a halogen atom other than fluorine; and
   a derivative thereof.
[Item 6]
   The oil-resistant agent composition according to item 3, wherein the other solid oil comprises at least one selected from the group consisting of rice wax, carnauba wax, hydrogenated castor oil, hydrogenated soybean oil, hydrogenated jojoba oil, hydrogenated rapeseed oil, sunflower wax, candelilla wax, 12-hydroxystearic acid, and Chinese wax.
[Item 7]
   The oil-resistant agent composition according to any one of items 1 to 6, wherein the amount of the dispersant is 0.1 to 80 parts by weight and the amount of the excipient is 0.1 to 100 parts by weight based on 100 parts by weight of the liquid-repellent compound.
[Item 8]
   The oil-resistant agent composition according to any one of items 1 to 7, wherein the excipient comprises at least one selected from the group consisting of a sugar, a polysaccharide and a derivative of a polysaccharide, a water-soluble vinyl polymer and a salt thereof, and a silicate.
[Item 9]
   The oil-resistant agent composition according to any one of items 1 to 8, wherein the excipient comprises at least one selected from the group consisting of glucose, fructose, galactose, dextrin, sucrose, lactose, hydroxyethyl cellulose, hydroxypropyl cellulose, methyl cellulose, carboxymethyl cellulose, starch, modified starch, pullulan, guar gum, locust bean gum, tamarind seed gum, chitosan, gum arabic, karaya gum, pectin, konjac glucomannan, carrageenan, isomaltodextrin, mannitol, sorbitol, agar, alginic acid, xanthan gum, gellan gum, Agrobacterium succinoglycan, cationized guar gum, polyvinyl alcohol, polyacrylic acid, and sodium polyacrylate.
[Item 10]
   The oil-resistant agent composition according to any one of items 1 to 9, wherein the dispersant comprises at least one selected from the group consisting of a nonionic surfactant, a cationic surfactant, an anionic surfactant, an amphoteric surfactant, and a polymer dispersant.
[Item 11]
   The oil-resistant agent composition according to any one of items 1 to 10, wherein the oil-resistant agent composition is in a tablet form, and has a particle size of 2,000 to 100,000 µm.
[Item 12]
   The oil-resistant agent composition according to any one of items 1 to 11, wherein the water content of the oil-resistant agent composition is 0.01% by weight to 20% by weight.
[Item 13]
   The oil-resistant agent composition according to any one of items 1 to 12, further comprising at least one selected from the group consisting of a lubricant, a binder, and a disintegrant.
[Item 14]
   The oil-resistant agent composition according to any one of items 1 to 13, wherein
   the liquid-repellent compound is a modified body of amine, and
   the modified body of amine is a compound represented by the following formula:

      N(-C(=O)-Z^{N})ₚ(-H)_{q}-L¹-[N(-C(=O)-Z^{N})ᵣ(-H)ₛ-L¹-]ₜ-N(- C(=O)-Z^{N})ₚ(-H)_{q}

      wherein Z^{N} is independently at each occurrence an alkyl group having 14 or more and 24 or less carbon atoms;
      L¹ is independently at each occurrence a divalent aliphatic hydrocarbon group having 2 to 20 carbon atoms or an aromatic hydrocarbon group;
      p is independently at each occurrence an integer of 1 or 2;
      q is independently at each occurrence 0 or 1;
      p + q is 2 in each N(-C(=O)-Z^{N})ₚ(-H)_{q};
      r is independently at each occurrence 0 or 1;
      s is independently at each occurrence 0 or 1;
      r + s is 1 in each N(-C(=O)-Z^{N})ᵣ(-H)ₛ; and
      t is an integer of 0 to 3.
[Item 15]
   An oil-resistant paper comprising the liquid-repellent compound, the dispersant, and the excipient in the oil-resistant agent composition according to any one of items 1 to 14.
[Item 16]
   The oil-resistant paper according to item 15, wherein the oil-resistant paper is a pulp mold product.
[Item 17]
   A method for producing an oil-resistant agent composition, comprising:
   mixing a liquid-repellent compound, a dispersant, an excipient, and a liquid medium to obtain a precursor mixture; and
   subjecting the precursor mixture to a heat treatment or a drying treatment to obtain an oil-resistant agent composition in solid form.
[Item 18]
   The method for producing an oil-resistant agent composition according to item 17, further comprising tableting the oil-resistant agent composition.
[Item 19]
   A method for producing a paper product, comprising:
   mixing the oil-resistant agent composition according to any one of items 1 to 14 with water to prepare a water dispersion of the oil-resistant agent composition; and
   treating paper with the water dispersion by external addition treatment or internal addition treatment.
[Item 20]
   A method for producing a pulp mold, comprising:
   mixing the oil-resistant agent composition according to any one of items 1 to 14 with water to prepare a water dispersion of the oil-resistant agent composition; and
   filling a mold with the water dispersion and a pulp substrate, and allowing water to pass through the mold to form pulp.

### Advantageous Effect of Invention

The oil-resistant agent composition of the present disclosure is in solid form and is capable of providing an oil-resistant agent water dispersion at the time of use. The oil-resistant agent composition of the present disclosure can be provided in a solid state, eliminating the need for storage as a water dispersion prior to use.

### Description of Embodiments

### <Definition of Terms>

As used herein, the "n valent group" refers to a group having n bonds, i.e., a group forming n bonds. The "n valent organic group" refers to a n valent group containing carbon. Such organic groups are not limited, but can be hydrocarbon groups or derivatives thereof. The derivative of the hydrocarbon group refers to a group that has one or more of N, O, S, Si, amide, sulfonyl, siloxane, carbonyl, carbonyloxy, halogen and the like at the end or in the molecular chain of a hydrocarbon group.

As used herein, the "hydrocarbon group" refers to a group containing carbon and hydrogen and a group in which a hydrogen atom is removed from the hydrocarbon. Such hydrocarbon groups are not limited, but include C₁₋₂₀ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may include one or more ring structures. The hydrocarbon group may be substituted by one or more substituents.

Whether or not the phrases "independently at each occurrence", "independently with each other", "each independently" or similar expressions are explicitly described herein, unless otherwise described that they are exceptions, when a plurality of terms (symbols) that can occur in a chemical structure is defined, such definition is applied independently to each occurrence.

The chemical structures described herein should be understood not to encompass chemical structures that are recognized by those skilled in the art as being chemically impossible or extremely unstable.

### <Oil-resistant agent composition>

The oil-resistant agent composition of the present disclosure comprises a liquid-repellent compound, a dispersant, and an excipient, and is in solid form. The oil-resistant agent composition in the present disclosure adheres to a substrate (in particular, a pulp substrate) and is capable of imparting liquid repellency, for example, water resistance, oil resistance, water-repellency, oil-repellency, and/or antifouling properties to the substrate, and may function as a water-resistant agent, an oil-resistant agent, a water-repellent agent, an oil-repellent agent, and/or an antifouling agent. The oil-resistant agent composition of the present disclosure comprises a liquid-repellent compound. The liquid-repellent compound itself may be used as the oil-resistant agent composition, or may be used as the oil-resistant agent composition in combination with other components as described below.

The oil-resistant agent composition of the present disclosure is also useful as an additive for a paper product, and the paper product obtained from a pulp composition to which the oil-resistant agent composition has been added can exhibit improved performance (for example, water resistance, oil resistance, and paper strength).

The term "solid" means a state having a fixed shape and no flowability. One example of such a state is a solid body. A state that is not solid is liquid. A state that can maintain its shape even when subjected to an external force such as gravity when placed on a flat surface and does not flow out to the surroundings is referred to as "solid." Accordingly, the term "solid" includes not only a completely solid body but also states such as gel-like, rubber-like, paste-like, adhesive-like, and viscous states. In addition, powder is "solid" because it is an aggregate of fine solid particles. From the viewpoint of ease of handling, the oil-resistant agent composition of the present disclosure may be a solid body.

The oil-resistant agent composition of the present disclosure is capable of imparting oil resistance to a substrate, and is in solid form. The oil-resistant agent composition of the present disclosure can be provided in a solid state, eliminating the need for storage as a water dispersion prior to use. Unlike conventional water dispersions, the oil-resistant agent composition of the present disclosure is added to a liquid medium (for example, water) at the time of use to form a dispersion. Accordingly, the oil-resistant agent composition of the present disclosure does not undergo sedimentation of a dispersed substance during storage.

The water content of the oil-resistant agent composition of the present disclosure may be 0.01% by weight or more, 0.1% by weight or more, 0.3% by weight or more, 0.5% by weight or more, 0.7% by weight or more, 1.0% by weight or more, 1.5% by weight or more, 2.0% by weight or more, 3.0% by weight or more, 3.5% by weight or more, 4.0% by weight or more, 4.5% by weight or more, or 5.0% by weight or more. The water content of the oil-resistant agent composition of the present disclosure may be 20% by weight or less, 10% by weight or less, 9.0% by weight or less, 8.0% by weight or less, 7.0% by weight or less, 6.5% by weight or less, 6.0% by weight or less, 5.5% by weight or less, or 5.0% by weight or less. The water content of the oil-resistant agent composition can be determined in accordance with the Loss on Drying Method specified in JIS K 0068:2001 "Methods for Determination of Water in Chemical Products."

The oil-resistant agent composition of the present disclosure may not include one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group and a compound having a fluorine atom. The oil-resistant agent composition of the present disclosure can impart liquid-repellency to a substrate without these fluorine compounds.

The method for measuring the particle size of the oil-resistant agent composition in solid form of the present disclosure may be changed depending on the particle size. For example, when the oil-resistant agent composition is in powder form, its average particle size can be measured by laser diffraction scattering. When the oil-resistant agent composition is in tablet form described below, the particle size can be measured using calipers conforming to JIS B7507.

The volume abundance ratio of particles with a size of 100 µm or more in the oil-resistant agent composition in solid form of the present disclosure as measured by laser diffraction scattering may be 0.1% or more, 0.3% or more, 0.5% or more, 1% or more, 1.5% or more, 3% or more, 4% or more, 5% or more, or 10% or more. The volume abundance ratio of particles with a size of 100 µm or more in the oil-resistant agent composition of the present disclosure as measured by laser diffraction scattering may be 50% or less, 30% or less, 20% or less, 15% or less, 10% or less, 5% or less, 3% or less, or 1.5% or less. The method for setting the volume abundance ratio of particles with a size of 100 µm or more as measured by laser diffraction scattering to the above range is not limited, and for example, particles in the raw material and/or dispersion may be formed into fine particles using a pulverizer or a homogenizer.

The average particle size of the oil-resistant agent composition in solid form of the present disclosure as measured by laser diffraction scattering may be 0.1 µm or more, 0.25 µm or more, 0.5 µm or more, 0.75 µm or more, 1 µm or more, 3 µm or more, 5 µm or more, 10 µm or more, 15 µm or more, 30 µm or more, 50 µm or more, 100 µm or more, 200 µm or more, 400 µm or more, 800 µm or more, or 1,500 µm or more. The average particle size of the oil-resistant agent composition of the present disclosure as measured by laser diffraction scattering may be 3,000 µm or less, 1,000 µm or less, 500 µm or less, 50 µm or less, 30 µm or less, 20 µm or less, 10 µm or less, 5 µm or less, or 1 µm or less. The average particle size in this paragraph refers to the volume median diameter (D50) in a volume-based particle size distribution by laser diffraction scattering. Measurement by laser diffraction scattering is suitable when the oil-resistant agent composition is in powder form. The term "powder" means an aggregate of particles having a diameter of 3,000 µm or less.

The volume abundance ratio of particles with a size of 100 µm or more in the water-dispersible composition obtained by redispersing the oil-resistant agent composition of the present disclosure in water as measured by laser diffraction scattering may be 0.1% or more, 0.3% or more, 0.5% or more, 1% or more, 1.5% or more, 3% or more, 4% or more, 5% or more, or 10% or more. The volume abundance ratio of particles with a size of 100 µm or more in the water-dispersible composition obtained by redispersing the oil-resistant agent composition of the present disclosure in water as measured by laser diffraction scattering may be 50% or less, 30% or less, 20% or less, 15% or less, 10% or less, 5% or less, 3% or less, or 1.5% or less. The method for setting the volume abundance ratio of particles with a size of 100 µm or more as measured by laser diffraction scattering to the above range is not limited, and for example, particles in the raw material and/or dispersion may be formed into fine particles using a pulverizer or a homogenizer.

The average particle size of the water-dispersible composition obtained by redispersing the oil-resistant agent composition of the present disclosure in water as measured by laser diffraction scattering may be 0.01 µm or more, 0.05 µm or more, 0.1 µm or more, 0.25 µm or more, 0.5 µm or more, 0.75 µm or more, 1 µm or more, 3 µm or more, 5 µm or more, 10 µm or more, 15 µm or more, 30 µm or more, 50 µm or more, 100 µm or more, 200 µm or more, 400 µm or more, 800 µm or more, or 1,500 µm or more. The average particle size of the water-dispersible composition obtained by redispersing the oil-resistant agent composition of the present disclosure in water as measured by laser diffraction scattering may be 5,000 µm or less, 3,000 µm or less, 1,000 µm or less, 500 µm or less, 50 µm or less, 30 µm or less, 20 µm or less, 10 µm or less, 5 µm or less, or 1 µm or less. In the present disclosure, the average particle size refers to the volume median diameter (D50) in a volume-based particle size distribution by laser diffraction scattering.

The oil-resistant agent composition of the present disclosure may be in tablet form. The term "tablet form" means a solid body that retains a fixed shape, for example, a tablet-shaped mass. The shape of the oil-resistant agent composition in tablet form is not limited, and may be a cube, a rectangular prism, a sphere, a solid cylinder, a prism, a cone, a pyramid, an ellipsoid, a cylindrical body, or a combination thereof. Forming into tablet form can further improve handleability.

The oil-resistant agent composition in tablet form may be obtained, for example, by compressing and forming a powdery oil-resistant agent composition. For example, the oil-resistant agent composition in tablet form may be a molded body formed into a predetermined shape by highpressure tableting. In other words, the oil-resistant agent composition in tablet form may be an aggregate formed by consolidating powder. The oil-resistant agent composition in tablet form may also be produced by sintering a powdery oil-resistant agent composition. Alternatively, it may be produced by dissolving the oil-resistant agent composition in a liquid medium and molding it into a predetermined shape.

When the oil-resistant agent composition in solid form of the present disclosure is in tablet form, the particle size of the oil-resistant agent composition as measured by calipers may be 2,000 µm or more, 3,000 µm or more, 4,000 µm or more, 5,000 µm or more, 7,000 µm or more, 9,000 µm or more, 10,000 µm or more, 20,000 µm or more, 30,000 µm or more, 40,000 µm or more, or 50,000 µm or more. When the oil-resistant agent composition in solid form of the present disclosure is in tablet form, the particle size of the oil-resistant agent composition as measured by calipers may be 500,000 µm or less, 300,000 µm or less, 100,000 µm or less, 80,000 µm or less, 70,000 µm or less, 60,000 µm or less, 50,000 µm or less, 30,000 µm or less, 10,000 µm or less, 5,000 µm or less, 30,000 µm or less, 10,000 µm or less, or 5,000 um or less.

The size of the oil-resistant agent composition in tablet form may be 10 mm³ or more, 20 mm³ or more, 30 mm³ or more, 50 mm³ or more, 70 mm³ or more, 100 mm³ or more, 150 mm³ or more, 200 mm³ or more, 250 mm³ or more, 300 mm³ or more, 400 mm³ or more, or 500 mm³ or more. The size of the oil-resistant agent composition in tablet form may be 1,000 mm³ or less, 900 mm³ or less, 800 mm³ or less, 750 mm³ or less, 600 mm³ or less, 550 mm³ or less, or 500 mm³ or less.

### {Liquid-repellent compound}

The liquid-repellent compound in the present disclosure adheres to a substrate (in particular a pulp substrate) and is capable of imparting liquid repellency, for example, water resistance, oil resistance, water-repellency, oil-repellency, and/or antifouling properties to the substrate.

### [Characteristics]

Characteristics that the liquid-repellent compound may have are shown below. These characteristics may vary depending on the type of the compound.

The liquid repellent compound may have a HD (n-hexadecane) contact angle of 10° or more, 20° or more, 25° or more, 30° or more, 35° or more, 40° or more, 45° or more, 50° or more, 55° or more, 60° or more, or 65° or more, and is preferably 25° or more, more preferably 30° or more. The HD contact angle of the liquid-repellent compound may be 100° or less, 90° or less, or 75° or less. A HD contact angle of the liquid repellent compound of the lower limit or more can impart good liquid-repellency (in particular oil-repellency) to a substrate. The HD contact angle is a static contact angle of the liquid-repellent compound to a spin-coated film, which is obtained by dropping 2 µL of HD on a spin-coated film and measuring the contact angle one second after the droplet reaches the film.

The liquid repellent compound may have a water contact angle of 35° or more, 40° or more, 45° or more, 50° or more, 55° or more, 65° or more, 75° or more, 85° or more, 90° or more, or 100° or more. The water contact angle of the liquid-repellent compound may be 160° or less, 140° or less, 130° or less, 120° or less, 110° or less, 100° or less, or 90° or less. A water contact angle of the liquid repellent compound of the lower limit or more can impart good liquid-repellency (in particular water-repellency) to a substrate. The water contact angle is a static contact angle of a liquid-repellent compound to a spin-coated film, which is obtained by dropping 2 µL of water on a spin-coated film and measuring the contact angle one second after the droplet reaches the film.

The liquid repellent compound is preferably a biobased compound with carbon of biobased origin. A biobased content is measured in accordance with ASTM D6866. The biobased content may be 20% or more, preferably 30% or more, more preferably 50% or more, even more preferably 60% or more, still more preferably 70% or more, and most preferably 80% or more or 90% or more, and for example, 100%. A high biobased content means that the amount of use of fossil resource materials, which are typically petroleum, is small, and a higher biobased content of the liquid repellent compound is preferred from that point of view.

The liquid repellent compound has a biodegradation as of the 180^{th} day of preferably 5% or more. A higher biodegradation is preferred because of small environmental load. The liquid repellent compound may have a biodegradation as of the 180^{th} day of, for example, 10% or more, 20% or more, 30% or more, 50% or more, 60% or more, 70% or more, 80% or more, or 90% or more, and preferably 30% or more, more preferably 50% or more, further preferably 70% or more, and most preferably 80% or more. The liquid repellent compound has a biodegradation as of the 60^{th} day of preferably 5% or more. A higher biodegradation is preferred because of small environmental load. The liquid repellent compound may have a biodegradation as of the 60^{th} day of, for example, 10% or more, 15% or more, 20% or more, 25% or more, 30% or more, 35% or more, 40% or more, or 45% or more, and preferably 10% or more, and more preferably 30% or more. This biodegradation refers to the biodegradation specified in JIS K 6953-1 and ASTM D6400.

The liquid repellent compound may have a melting point of 30°C or more, 40°C or more, 60°C or more, 80°C or more, 100°C or more, or 120°C or more, and is preferably 40°C or more. The liquid-repellent compound may have a melting point of 250°C or lower, 225°C or lower, 200°C or lower, 150°C or lower, 130°C or lower, 120°C or lower, 110°C or lower, 100°C or lower, 80°C or lower, or 50°C or lower.

### [Structure]

The liquid repellent compound in the present disclosure may not have any one selected from the group consisting of a fluoroalkyl group having 8 or more carbon atoms, a perfluoroalkyl group having 8 or more carbon atoms, a fluoroalkyl group having 4 or more carbon atoms, a perfluoroalkyl group having 4 or more carbon atoms, a perfluoroalkyl group, a fluoroalkyl group, and a fluorine atom. The liquid repellent compound can impart liquid-repellency without including these fluorine-containing groups to a substrate.

The liquid-repellent compound may be a compound having a monovalent hydrocarbon group having 1 or more and 40 or less carbon atoms optionally having a substituent, or a monovalent polysiloxane group. From the viewpoint of liquid repellency, the liquid-repellent compound may have a hydrocarbon group having 6 or more and 40 or less carbon atoms (for example, an alkyl group).

### (Monovalent hydrocarbon group optionally having substituent)

The liquid-repellent compound may have a monovalent hydrocarbon group optionally having a substituent.

The hydrocarbon group may be a hydrocarbon group having 1 or more and 40 or less monovalent carbon atoms. The hydrocarbon group may be an aromatic hydrocarbon group or an aliphatic hydrocarbon group, and preferably may be an aliphatic hydrocarbon group, in particular, a saturated aliphatic hydrocarbon group (an alkyl group). The hydrocarbon group may be branched, cyclic or linear, and is preferably linear.

The hydrocarbon group may have 1 or more, 3 or more, 6 or more, 8 or more, 10 or more, 12 or more, 14 or more, 16 or more, 18 or more, 20 or more, or 22 or more, preferably 6 or more, 10 or more, 12 or more, or 16 or more carbon atoms. The hydrocarbon group may have 40 or less, 35 or less, 30 or less, 25 or less, 20 or less, 15 or less, or 10 or less, preferably 30 or less, 25 or less, or 20 or less carbon atoms.

The hydrocarbon group may have a substituent, but is preferably non-substituted. Examples of substituents include -OR', -N(R')₂, -COOR', and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon group having a substituent, the amount of carbon atom relative to the carbon atom and the heteroatom may be 70 mol% or more, 80 mol% or more, 90 mol% or more, 95 mol% or more, or 99 mol% or more, and preferably 75 mol% or more. In the hydrocarbon group having a substituent, the amount of carbon atom relative to the amount of carbon atom and heteroatom may be 95 mol% or less, 90 mol% or less, 85 mol% or less, or 80 mol% or less. The hydrocarbon group may have 1 to 3 (for example, 1) -OR' (in particular, -OH) as a substituent (for example at a site other than the end).

### (Monovalent polysiloxane group)

The liquid repellent compound may have a monovalent polysiloxane group. A (monovalent) polysiloxane group can impart liquid-repellency to the substrate as the (monovalent) hydrocarbon group.

The polysiloxane group may also be represented by the following formula:

-[-Si(R^{s})₂-O-]ₐ-

[wherein R^{s} is independently at each occurrence a hydrocarbon group having 1 to 40 carbon atoms or a reactive group, and
a is an integer of 5 or more and 10,000 or less].
R^{s} is a hydrocarbon group having 1 to 40 carbon atoms or a reactive group.

Examples of hydrocarbon groups having 1 to 40 carbon atoms include a hydrocarbon group having 1 to 5 carbon atoms and a hydrocarbon group having 6 to 40 carbon atoms.

Examples of hydrocarbon groups having 1 to 5 carbon atoms include a hydrocarbon group having 1 to 5 carbon atoms such as a methyl group, an ethyl group, a propyl group, a butyl group and a pentyl group (in particular an aliphatic hydrocarbon group, in particular an alkyl group, for example, a methyl group or an ethyl group, and in particular a methyl group).

The hydrocarbon group having 6 to 40 carbon atoms may be an aromatic hydrocarbon group or an aliphatic hydrocarbon group, and is preferably an aliphatic hydrocarbon group, and in particular a saturated aliphatic hydrocarbon group (an alkyl group). The hydrocarbon group may be cyclic, linear or branched, and preferably linear. The hydrocarbon group may have 6 or more, 8 or more, 10 or more, 12 or more, 14 or more, 16 or more, 18 or more, preferably 10 or more, and more preferably 12 or more carbon atoms. The hydrocarbon group may have 40 or less, 35 or less, 30 or less, 25 or less, 20 or less, 15 or less, or 10 or less, preferably 30 or less, and more preferably 25 or less carbon atoms.

Examples of reactive groups include a group having a functional group (for example, a hydroxy group, an amino group, a mercapto group, an epoxy group, a carboxyl group, a halogen-substituted alkyl group, a vinyl group, a (meth)acrylic group, a (meth)acryloyloxy group, a (meth)acrylamide group, and a hydrogen atom directly bonded to a silicon atom). These functional groups may be directly bonded to a silicon atom, or may be bonded to an organic group directly bonded to a silicon atom. The organic group may be a hydrocarbon group, and for example, an alkylene group or a divalent aromatic group. The hydrocarbon group may have 2 or more and 12 or less carbon atoms. An alkylene group having 2 or more and 10 or less carbon atoms is preferred. A divalent aromatic group having 6 or more and 12 or less carbon atoms is preferred. The reactive group may be a group selected from the group consisting of a hydroxy group, an epoxy ring, a carboxyl group, a (meth)acrylic group and an amino group, and for example, may be at least one selected from the group consisting of an epoxy ring, a hydroxy group, a (meth)acrylic group and a carboxyl group.

a is 3 or more, 5 or more, 10 or more, 30 or more, 50 or more, 100 or more, 500 or more, 1,000 or more, 2,000 or more, or 3,000 or more, and preferably 10 or more. a is 10,000 or less, 7,500 or less, 5,000 or less, 3,000 or less, 1,500 or less, 1,000 or less, 500 or less, 300 or less, 200 or less, 100 or less, or 50 or less, and preferably 500 or less.

In the polysiloxane group, the amount of R^{s}, which is a hydrocarbon group having 1 to 5 carbon atoms, may be 20 mol% or more, 40 mol% or more, 60 mol% or more, or 80 mol% or more, and preferably 50 mol% or more relative to the total amount of R^{s}. The amount of R^{s} which is a hydrocarbon group having 1 to 5 carbon atoms, may be 100 mol% or less, 90 mol% or less, 80 mol% or less, or 70 mol% or less, relative to the total amount of R^{s}. For example, 50 mol% or more of the total amount of the R^{s} group may be a methyl group or an ethyl group, and in particular, a methyl group.

In the polysiloxane group, the amount of R^{s}, which is a hydrocarbon group having 6 to 40 carbon atoms, may be 3 mol% or more, 10 mol% or more, 20 mol% or more, or 30 mol% or more. The amount of R^{s} which is a hydrocarbon group having 6 to 40 carbon atoms, may be 100 mol% or less, 90 mol% or less, 80 mol% or less, or 70 mol% or less, relative to the total amount of R^{s}.

In the polysiloxane group, the amount of R^{s}, which is a reactive group, may be 5 mol% or more, 10 mol% or more, 20 mol% or more, or 30 mol% or more relative to the total amount of R^{s}. The amount of R^{s} which is a reactive group may be 50 mol% or less, 40 mol% or less, 30 mol% or less, or 20 mol% or less, relative to the total amount of R^{s}.

The R^{s} group may be introduced randomly or in block, and preferably randomly.

The end structure of the polysiloxane group is not limited, and may be - OR^{s}, -Si(R^{s})₃ and the like. R^{s} in the end structure may have one or more reactive groups. Examples of reactive groups are as described above, and may be at least one selected from the group consisting of an epoxy ring, a hydroxy group, a (meth)acrylic group and a carboxyl group.

The polysiloxane group may have a linker. The raw material compound and the polysiloxane group may be linked by a linker, and examples of linkers are not limited, and include a hydrocarbon group having 1 to 40 (for example, 1 to 20) carbon atoms optionally disconnected via an oxygen atom, and may be, for example, a (poly)oxyalkylene group having 1 to 40 (for example 1 to 20) carbon atoms.

Examples of polysiloxane groups include

-[-Si(R^{s})₂-O-]ₐ-Si(R^{s})₃

-L^{s1}-[-Si(R^{s})₂-O-]ₐ-Si(R^{s})₃

-L^{s1}-O-L^{s1}-[-Si(R^{s})₂-O-]ₐ-R^{s}

-L^{s1}-[-Si(R^{s})2-O-]ₐ-Si(R^{s})₃

-L^{s1}-O-L^{s1}-[-Si(R^{s})2-O-]ₐ-R^{s}

-L^{s1}-[-Si(R^{s})2-O-]ₐ-Si(R^{s})₃,

-L^{s1}-[-Si(R^{s})₂-O-]ₐ-R^{s}

wherein R^{s} is independently at each occurrence a hydrocarbon group having 1 to 40 carbon atoms or a reactive group, and R^{s} at the end has one or more reactive groups,
methyl groups account for 50 mol% or more of the total amount of the R^{s} group,
L^{s1} is a hydrocarbon group having 1 to 20 carbon atoms, and
a is 5 or more and 10,000 or less, and 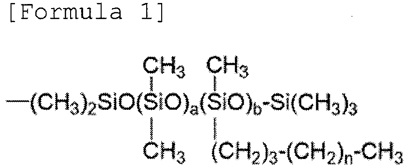
wherein a is an integer of 0 to 150, b is an integer of 1 to 150, (a + b) is 5 to 200 and n is an integer of 0 to 36.

### [Examples of liquid-repellent compound]

Examples of the liquid-repellent compound include a compound having a hydrocarbon group having 6 or more and 40 or less carbon atoms. Examples of hydrocarbon groups and their preferred ranges are as described above.

Examples of the liquid-repellent compound include a compound selected from the group consisting of a modified body of amine, a modified body of polyol, a modified body of polycarboxylic acid, and other liquid or solid oils (described in detail below).

The liquid repellent compound may include an ester group, an amide group, a urethane group, a urea group, an imide group, a thioamide group, a thiourethane group, a thiourea group, a thioimide group, a sulfone amide group, a sulfone urea group, a sulfone urethane group or a sulfone imide group (e.g., an ester group, an amide group, a urethane group, a urea group, an imide group). For example, the liquid repellent compound may include - C(=O)-O-, -O-C(=O)-, -C(=O)-NR'-, -O-C(=O)-NR'-, -NR'-C(=O)-, -NR'-C(=O)-NR'- or -SO₂NR'- wherein R' is independently at each occurrence a hydrogen atom or a hydrocarbon group having 1 to 30 (for example, 1 to 20, 1 to 10, or 1 to 4) carbon atoms. The liquid repellent compound may be a compound in which a raw material compound and a modifying group (in particular the above monovalent hydrocarbon group optionally having a substituent) are bonded through at least one of the above groups. The liquid repellent compound may include an amide structure. Inclusion of at least the amide structure in the liquid repellent compound may improve liquid repellency. Herein the amide structure may be an amide structure in the broad sense, and may be selected from the amide structure in an amide (acid amide) group, a urethane group, a urea group, an imide group, a thioamide group, a thiourethane group, a thiourea group, a thioimide group, a sulfone amide group, a sulfone urethane group, a sulfone urea group and a sulfone imide group. The amide structure may be selected from the group consisting of -(C=O)N(-)₂, -(C=S)N(-)₂ and - S(=O)₂N(-)₂ (each group may be left-right inverted). In this regard, of the bonds possessed by N in the amide structure, at least one may be bonded to a hydrogen atom. The amide structure is preferably -(C=O)N(-)₂, and may be an amide structure in a group selected from the group consisting of an amide group, a urethane group, a urea group and an imide group.

### [Amount of liquid-repellent compound]

The amount of the liquid-repellent compound may be 0.01% by weight or more, 0.5% by weight or more, 1% by weight or more, 3% by weight or more, 5% by weight or more, 10% by weight or more, 20% by weight or more, or 30% by weight or more in the oil-resistant agent composition. The amount of the liquid-repellent compound in the oil-resistant agent composition may be 95% by weight or less, 90% by weight or less, 80% by weight or less, 70% by weight or less, 60% by weight or less, 50% by weight or less, 40% by weight or less, 30% by weight or less, 20% by weight or less, 10% by weight or less, 5% by weight or less, or 3% by weight or less. The liquid-repellent compound alone may be used as the oil-resistant agent composition.

### {Modified body of amine}

The modified body of amine will be described as an example of the liquid repellent compound. A modified body of amine is a compound prepared by chemically modifying an amine compound so that the amine compound exhibits liquid repellency.

The modified body of amine according to the present disclosure is highly dispersible in liquid medium due to its structure, and thus the oil-resistant agent composition of the present disclosure can have stable properties. Oil-resistant agent compositions using a polymer compound as an active ingredient tend to have a wide molecular weight distribution and contain relatively large amounts of impurity components. On the other hand, the molecular weight of the modified body of amine can be reduced and the molecular weight distribution of the modified body of amine can be narrowed (monodisperse), and this can lead to better performance.

### [Structure]

The modified body of amine may have a molecular weight of 200 or more, 300 or more, 350 or more, 400 or more, 500 or more, 550 or more, or 750 or more. The modified body of amine may have a molecular weight of 3,000 or less, 2,500 or less, 2,000 or less, 1,500 or less, 1,000 or less, 900 or less, 800 or less, 750 or less, or 500 or less.

In some embodiments, the modified body of amine in the present disclosure does not have an active hydrogen-containing group. Examples of active hydrogen-containing groups include an amino group (an amino group not adjacent to a carbonyl group, e.g., a primary or secondary amino group), a hydroxy group and a carboxyl group. In some embodiments, the modified body of amine in the present disclosure does not have a primary or secondary amino group which is not adjacent to a carbonyl group.

The modified body of amine in the present disclosure may be polyamide having a plurality of amide structures, and for example, may be a polyamide in which amine (a raw material amine compound, for example, polyamine) is modified with a plurality of modifying group (e.g., Z^{N} described below) through an amide structure. Here, amide may have an amide structure included in a urethane group, a urea group, imide and the like.

The modified body of amine may be a compound in which amine (a raw material amine compound) is modified with a hydrocarbon group having 1 or more and 40 or less monovalent carbon atoms and optionally having a substituent or a monovalent polysiloxane group.

In the modified body of amine, one or more of amino groups in amine are substituted with a modifying group. The modifying group is preferably a monovalent hydrocarbon group optionally having a substituent, or a monovalent polysiloxane group. The modified body of amine may have a structure in which amine is modified with an alkyl group having 6 or more and 40 or less carbon atoms from the viewpoint of the improvement in liquid-repellency.

Details of the monovalent hydrocarbon group optionally having a substituent and the monovalent polysiloxane group are as described in the above (Monovalent hydrocarbon group optionally having substituent) and (Monovalent polysiloxane group).

### (Amine backbone)

The modified body of amine in the present disclosure has an amine backbone. The amine backbone has one or more amino groups which have a predetermined number of bonds (valence), obtained by removing a predetermined number of atoms or atomic groups (e.g., hydrogen) from an amine compound. The amino group in the amine backbone refers to a group selected from the group consisting of - NH₂, -NH- and -N(-)₂, and also includes an amino group adjacent to a carbonyl group, which is included in an amide group, a urethane group, a urea group, imide and the like. The amine backbone may be an aliphatic group or an aromatic group having one or more amino groups, and this does not exclude the presence of a heteroatom other than nitrogen.

The amine backbone may have a molecular weight of 30 or more, 50 or more, 100 or more, 200 or more, 300 or more, 400 or more, or 500 or more. The amine backbone may have a molecular weight of 2,800 or less, 2,500 or less, 2,000 or less, 1,500 or less, 1,000 or less, 750 or less, 600 or less, 450 or less, 300 or less, or 250 or less.

The amine backbone may have 1 or more, 2 or more, 3 or more, 4 or more, 6 or more, 8 or more, 10 or more, 12 or more, 14 or more, 16 or more, or 18 or more carbon atoms. The amine backbone may have 100 or less, 80 or less, 60 or less, 40 or less, 30 or less, 20 or less, 10 or less, or 5 or less carbon atoms, and has preferably 50 or less, and particularly preferably 30 or less carbon atoms.

The amine backbone has one or more amino groups. The amino group is a mono to trivalent amino group and is one or more groups selected from the group consisting of -NH₂, -NH- and -N(-)₂. The amine backbone may have 1 or more, 2 or more, 3 or more, 4 or more, 5 or more, or 6 or more, and preferably 2 or more amino groups. The number of amino groups of the amine backbone may be 12 or less, 10 or less, 8 or less, 6 or less, 4 or less, 3 or less, 2 or less, or 1.

The amine backbone has a hydrocarbon group (an aliphatic hydrocarbon group or an aromatic hydrocarbon group). The hydrocarbon group may be cyclic, branched or linear. The hydrocarbon group may be saturated or unsaturated (for example, saturated). In this case, the hydrocarbon group may be interrupted by an oxygen atom and/or a sulfur atom, and may be composed of only a carbon atom, a nitrogen atom and a hydrogen atom. The hydrocarbon group may be a hydrocarbon group optionally interrupted by an oxygen atom and/or a sulfur atom (e.g., a chain saturated aliphatic hydrocarbon group or an aromatic hydrocarbon group having 1 or 2 hydrocarbon aromatic rings), a usual hydrocarbon group (e.g., a chain saturated aliphatic hydrocarbon group or an aromatic hydrocarbon group having 1 or 2 hydrocarbon aromatic rings). When the hydrocarbon group is interrupted by an oxygen atom and/or a sulfur atom, the amine backbone has an ether, thioether, polyether or polythioether structure. The amine backbone may have 1 or more, 2 or more, 3 or more, 4 or more, 5 or more, or 6 or more hydrocarbon groups. The number of hydrocarbon groups of the amine backbone may be 12 or less, 10 or less, 8 or less, 6 or less, 4 or less, 3 or less, 2 or less, or 1.

The amine backbone may be composed of mono to trivalent amino group and a chain saturated aliphatic hydrocarbon group or aromatic hydrocarbon group optionally interrupted by an oxygen atom and/or a sulfur atom.

The molar ratio between the carbon atom and the nitrogen atom (C/N ratio) in the amine backbone may be 1 or more, 2 or more, 2.5 or more, 3 or more, 3.5 or more, or 4 or more. The molar ratio between the carbon atom and the nitrogen atom (C/N ratio) in the amine backbone may be 8 or less, 7 or less, 6 or less, 5 or less, 4 or less, 3.5 or less, 3 or less, 2.5 or less, or 2 or less, and is preferably 6 or less or 4 or less.

### (-Y^{N}-Z^{N}ₙ)

The modified body of amine in the present disclosure has one or more groups represented by the following formula:

-Y^{N}-Z^{N}ₙ

[wherein Y^{N} is a direct bond or a 1+n valent group,
Z^{N} is a monovalent hydrocarbon group having 1 or more and 40 or less carbon atoms and optionally having a substituent or a monovalent polysiloxane group, and
n is an integer of 1 or more and 3 or less], and
at least one -Y^{N}-Z^{N}ₙ is bonded to the nitrogen atom of the amine backbone.

The modified body of amine may have 1 or more, 2 or more, 3 or more, 4 or more, 5 or more, or 6 or more -Y^{N}-Z^{N}ₙ, and has preferably 2 or more -Y^{N}-Z^{N}ₙ. The modified body of amine may have 12 or less, 10 or less, 8 or less, 6 or less, 4 or less, 3 or less, 2 or less, or 1 -Y^{N}-Z^{N}ₙ.

At least one -Y^{N}-Z^{N}ₙ in the modified body of amine is bonded to the nitrogen atom of the amine backbone. The proportion of the number of -Y^{N}-Z^{N}ₙ bonded to the nitrogen atom of the amine backbone to the total number of -Y^{N}-Z^{N}ₙ in the modified body of amine may be 10% or more, 30% or more, 60% or more, 80% or more, or 100%. The proportion of the number of -Y^{N}-Z^{N}ₙ bonded to the nitrogen atom of the amine backbone to the total number of -Y^{N}-Z^{N}ₙ in the modified body of amine may be 75% or less, 50% or less, or 25% or less. -Y^{N}-Z^{N}ₙ not bonded to the nitrogen atom of the amine backbone is bonded to another group (e.g., a hydrocarbon group) of the amine backbone.

### (Y^{N})

Y^{N} is a direct bond or a 1+n valent group, and preferably a 1+n valent group. Y^{N} functions as a linker connecting the amine backbone and n Z^{N} groups.

n is the number of Z^{N} bonded to Y^{N}, and may be an integer of 1 or more and 3 or less. n may be 1 or more, 2 or more, or 3 or more. n may be 3 or less, 2 or less, or 1 or less, and is, for example, 2 or less.

Y^{N} may be an aliphatic group (unsaturated aliphatic group or saturated aliphatic group) or an aromatic group.

Y^{N} may have a molecular weight of 10 or more, 50 or more, 100 or more, 200 or more, 300 or more, 500 or more, or 750 or more. Y^{N} may have a molecular weight of 2,000 or less, 1,500 or less, 1,000 or less, 750 or less, 500 or less, or 300 or less.

Y^{N} may have a carbonyl group. Y^{N} may have one or more selected from the group consisting of an amide group, a urea group, a urethane group and an imide group. Alternatively, Y^{N} may form one or more selected from the group consisting of an amide group, a urea group, a urethane group and imide with the amino group in the amine backbone. Examples of the amide group, urea group, urethane group and imide group include:

-O-C(=O)-NR'-,

-NR'-C(=O) -,

-NR'-C(=O) -O-,

-NR'-C(=O)-NR'-

-C(=O)-NR'-

-C(=O)-NR'-C(=O)-

[wherein R' is a hydrogen atom or a hydrocarbon group having 1 to 30 (e.g., 1 to 20, 1 to 10, or 1 to 4) carbon atoms]. Y^{N} is preferably bonded to a nitrogen atom in the amine backbone through a -(C=O)- group.

Y^{N} may be a 1+n valent group composed of one or more selected from the group consisting of a direct bond, -O-, -C(=O)-, -C(=NR')-, -S-, -S(=O)₂-, -C(=S)-, -NR'-, - C(OR')R'-, -C(OR')(-)₂, -N(-)₂, a divalent to tetravalent aliphatic hydrocarbon group having 1 to 20 carbon atoms, a divalent to tetravalent hydrocarbon aromatic ring and a divalent to tetravalent heterocyclic ring wherein R' is a hydrogen atom or a hydrocarbon group having 1 to 30 (for example, 1 to 20, 1 to 10, or 1 to 4) carbon atoms.

Y^{N} is a 1+n valent group composed of one or more selected from the group consisting of Y^{N1} and Y^{N2}.
Y^{N1} is a group composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or a hydrocarbon group having 1 to 30 (for example, 1 to 20, 1 to 10, or 1 to 4) carbon atoms),
Y^{N2} is a group composed of one or more selected from the group consisting of a divalent to tetravalent aliphatic hydrocarbon group having 1 to 20 carbon atoms, a divalent to tetravalent hydrocarbon aromatic ring, and a divalent to tetravalent heterocyclic ring, and
may be a 1+n valent group composed of one or more selected from the group consisting of. In the present description, the left side of the group represented by Y^{N} is bonded to the amine backbone and the right side thereof is bonded to Z^{N}.

### o Y^{N1}

Y^{N1} is a non-hydrocarbon linker.

Y^{N1} is a direct bond or a divalent or higher valent group. Y^{N1} may have a valence of 2 to 4, 2 or 3, or 2. It is preferable that Y^{N1} is not limited to direct bond.

Y^{N1} may have a molecular weight of 10 or more, 50 or more, 100 or more, 200 or more, 300 or more, or 500 or more. Y^{N1} may have a molecular weight of 2,000 or less, 1,500 or less, 1,000 or less, 750 or less, or 500 or less.

Y^{N1} may be composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or a hydrocarbon group having 1 to 30 (for example, 1 to 20, 1 to 10, or 1 to 4) carbon atoms). Examples of Y^{N1} include:
a direct bond,
-O-,
-O-C(=O)-,
-O-C(=O)-O-,
-O-C(=O)-NR'-,
-NR'-,
-NR'-C(=O)-,
-NR'-C(=O)-O-,
-NR'-C(=O)-NR'-,
-C(=O)-,
-C(=O)-O-,
-C(=O)-NR'-,
-C(=O)-NR'-C(=O)-,
-C(=NR')-,
-S-,
-SO₂-,
-SO₂NR'-,
-C(OR')R'-,
-C(OR') (-)₂,
-N(-)₂
[wherein R' is independently at each occurrence a hydrogen atom or a hydrocarbon group having 1 to 30 (for example, 1 to 20, 1 to 10, or 1 to 4) carbon atoms]. When Y^{N1} is bonded to the nitrogen atom of the amine backbone, the nitrogen atom is regarded as a part of the amine backbone (an amino group).

### o Y^{N2}

Y^{N2} is a hydrocarbon optionally having a substituent, a hydrocarbon aromatic ring optionally having a substituent or a heterocyclic linker optionally having a substituent.

Y^{N2} may be a hydrocarbon group or a non-hydrocarbon group (including a heteroatom). Y^{N2} may be aliphatic or aromatic. Y^{N2} may be linear, branched or cyclic.

Y^{N2} is a divalent or higher valent group. Y^{N2} may have a valence of, for example, 2 to 4, 2 or 3, or 2.

Y^{N2} may have 1 or more, 2 or more, 3 or more, 4 or more, 6 or more, 8 or more, 10 or more, 12 or more, 14 or more, 16 or more, or 18 or more carbon atoms. Y^{N2} may have 40 or less, 35 or less, 30 or less, 25 or less, 20 or less, 15 or less, 10 or less, or 5 or less carbon atoms.

Y^{N2} is composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms. The aliphatic hydrocarbon having 1 to 40 carbon atoms may have 35 or less, 30 or less, 25 or less, 20 or less, 15 or less, 10 or less, or 5 or less carbon atoms. The aliphatic hydrocarbon group may have a valence of 2 or more, 3 or more, or 4, 4 or less, 3 or less, or 2.

The aliphatic hydrocarbon group may have a substituent. Examples of substituents include -OR', - N(R')₂, -COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more. In the aliphatic hydrocarbon group having a substituent, the amount of carbon atom relative to the amount of carbon atom and heteroatom may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene and coronene. The number of ring constituting atoms of the hydrocarbon aromatic ring is 3 to 20, 4 to 16, or 5 to 12 and preferably 5 to 12. The hydrocarbon aromatic ring may have a valence of 2 or more, 3 or more, or 4, may be 4 or less, 3 or less, or 2.

The hydrocarbon aromatic ring may have a substituent. Examples of substituents include -R', -OR', -N(R')₂, -COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon aromatic ring having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more. In the hydrocarbon aromatic ring having a substituent, the amount of carbon atom relative to the amount of carbon atom and heteroatom may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline, and the like. The number of ring constituting atom of the heterocyclic ring is 3 to 20, 4 to 16, or 5 to 12 and preferably 5 to 12. A valence of the heterocyclic ring may be 2 or more, 3 or more, or 4, may be 4 or less, 3 or less, or 2.

The heterocyclic ring may have a substituent. Examples of substituents include -R', -OR', -N(R')₂, - COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the carbon atom and the heteroatom may be 60 mol% or more, 70 mol% or more, 80 mol% or more, 90 mol% or more, 95 mol% or more, or 99 mol% or more, and is, for example, 65 mol% or more. In the heterocyclic ring having a substituent, the amount of carbon atom relative to the amount of carbon atom and heteroatom may be 95 mol% or less, 90 mol% or less, 85 mol% or less, 80 mol% or less, or 70 mol% or less.

Examples of Y^{N2} include
-Ali-
-Cy-
-Ali(-)₂
-Cy(-)₂
(-)₂Ali-
(-)₂Cy-
(-)₂Ali(-)₂
(-)₂Cy(-)₂
-Ali-Cy-
-Cy-Ali-
-Cy-Ali-Cy-
-Ali-Cy-Ali-
[wherein Ali is an aliphatic hydrocarbon group having 1 to 20 carbon atoms and Cy is a hydrocarbon aromatic ring or a heterocyclic ring].

Specific examples of Y^{N2} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

### Examples of Y^{N}

Examples of Y^{N} will be described. In the following, R' is independently at each occurrence a hydrogen atom or a hydrocarbon group having 1 to 30 (for example, 1 to 20, 1 to 10, or 1 to 4) carbon atoms.

When Y^{N} is divalent, examples of Y^{N} include -Y^{N1}-, - Y^{N1}-Y^{N2}-, -Y^{N1}-Y^{N2}-Y^{N1}-, -Y^{N1}-Y^{N2}-Y^{N1}-Y^{N2}-, -Y^{N2}-, -Y^{N2}-Y^{N1}-, - Y^{N2}-Y^{N1}-Y^{N2}- and -Y^{N2}-Y^{N1}-Y^{N2}-Y^{N1}-

When Y^{N} is trivalent, examples of Y^{N} include -Y^{N1}(-)₂, -Y^{N1}-Y^{N2}(-)₂, -Y_{N1}-(Y^{N2}-)₂ , -Y^{N1}-Y^{N2}-Y^{N1}(-)₂, -Y^{N1}-Y^{N2}-(-Y^{N1}-)₂, - Y^{N1}-(Y^{N2}-Y^{N1}-)₂, -Y^{N1}-Y^{N2}-Y^{N1}-Y^{N2}(-)₂, -Y^{N1}-Y^{N2}-Y^{N1}-(Y^{N2}-)₂, -Y^{N1}- Y^{N2}-(Y^{N1}-Y^{N2}-)₂, -Y^{N1}-(Y^{N2}-Y^{N1}-Y^{N2}-)₂;
-Y^{N2}(-)₂, -Y^{N2}-Y^{N1}(-)₂, -Y^{N2-}(Y^{N1}-)₂, -Y^{N2}-Y^{N1}-Y^{N2}(-)₂, -Y^{N2}-Y^{N1}(-Y^{N2}-)₂, -Y^{N2}-(Y^{N1}-Y^{N2}-)₂, -Y^{N2}-Y^{N1}-Y^{N2}-Y^{N1}(-)₂, -^{YN2}-Y^{N1}-Y^{N2}-(Y^{N1}-)₂, -Y^{N2}-Y^{N1}-(Y^{N2}-Y^{N1}-)₂, and -Y^{N2}-(Y^{N1}-Y^{N2}-Y^{N1}-)₂.

When Y^{N} is tetravalent, examples of Y^{N} include - Y^{N1}(-)₃, -Y^{N1}-Y^{N2}(-)₃, -Y_{N1}-(Y^{N2}-)₃, -Y^{N1}-Y^{N2}-Y^{N1}(-)₃, -Y^{N1}-Y^{N2}(-Y^{N1}-)₃, -Y^{N1}-(Y^{N2}-Y^{N1}-)₃, -Y^{N1}-Y^{N2}-Y^{N1}-Y^{N2}(-)₃, -Y^{N1}-Y^{N2}-Y^{N1}-(Y^{N2}-)₃, -Y^{N1}-Y^{N2}-(Y^{N1}-Y^{N2}-)₃, -Y^{N1}-(Y^{N2}-Y^{N1}-Y^{N2}-)₃;
-Y^{N2}(-)₃, -Y^{N2}-Y^{N1}(-)₃, -Y^{N2}-(Y^{N1}-)₃, -Y^{N2}-Y^{N1}-Y^{N2}(-)₃, -Y^{N2}-Y^{N1}(-Y^{N2}-)₃, -Y^{N2}-(Y^{N1}-Y^{N2}-)₃, -Y^{N2}-Y^{N1}-Y^{N2}-Y^{N1}(-)₃, -Y^{N2}-Y^{N1}-Y^{N2}-(Y^{N1}-)₃, -Y^{N2}-Y^{N1}-(Y^{N2}-Y^{N1}-) ₃, and -Y^{N2}-(Y^{N1}-Y^{N2}-Y^{N1}-)₃.

Preferred examples of Y^{N} include
-Y^{N1}-, -Y^{N1}-Y^{N2}-, -Y^{N1}-Y^{N2}-Y^{N1}- , -Y^{N1}-Y^{N2}(-)₂,
-Y^{N2}-, -Y^{N2}-Y^{N1}-, -Y^{N2}-Y^{N1}-Y^{N2}-, -Y^{N2}-Y^{N1}(-) ₂. It is preferable that in the modified body of amine, there is - (C=O)- at the end of the amine backbone in one or more Y^{N}, and one or more Y^{N} are bonded to the nitrogen atom in the amine backbone.

Y^{N} is preferably
-Y^{N1}-, -Y^{N1}-Y^{N2}-, -Y^{N1}-Y^{N2}-Y^{N1}-, -Y^{N1}-Y^{N2}(-)₂,
-Y^{N2}-, -Y^{N2}-Y^{N1}-, -Y^{N2}-Y^{N1}-Y^{N2}-, -Y^{N2}-Y^{N1}(-)₂,
[wherein Y^{N1} is independently at each occurrence a direct bond,
-O-,
-O-C(=O)-,
-O-C(=O)-O-,
-O-C(=O)-NR'-,
-NR'-,
-NR'-C(=O)-,
-NR'-C(=O)-O-,
-NR'-C(=O)-NR'-,
-C(=O)-,
-C(=O)-O- or
-C(=O)-NR'-
-C(=O)-NR'-C(=O)-
(wherein R' is independently at each occurrence a hydrogen atom or a hydrocarbon group having 1 to 30 (for example, 1 to 20, 1 to 10, or 1 to 4) carbon atoms), and
Y^{N2} is a divalent to tetravalent aliphatic hydrocarbon group having 1 to 10 carbon atoms, or a divalent aromatic group (for example, a divalent phenyl group or a divalent triazole group)]. By this, excellent liquid-repellency is imparted to substrates.

Specific examples of Y^{N} also include:
*-(C=O)-
-O-(C=O)-NR'-
[wherein * means a bond to a nitrogen atom in the amine backbone,
R' is a hydrogen atom or a hydrocarbon group having 1 to 30 (for example, 1 to 20, 1 to 10, or 1 to 4) carbon atoms].

### (Z^{N})

Z^{N} is a monovalent hydrocarbon group having 1 or more and 40 or less carbon atoms and optionally having a substituent or a monovalent polysiloxane group. The same explanation in the above (Monovalent hydrocarbon group optionally having substituent) and (Monovalent polysiloxane group) applies.

### [Examples of modified body of amine]

### (Example 1 of modified body of amine)

An example of the modified body of amine is (Example 1 of modified body of amine), which is a compound represented by the following formula:

N(-Y^{N}-Z^{N}ₙ)ₚ(-H)_{q}-L¹-[N(-Y^{N}-Z^{N}ₙ)ᵣ(-H)ₛ-L¹-]ₜ-N(-Y^{N}-Z^{N}ₙ)ₚ(- H)_{q}

[wherein Y^{N} is independently at each occurrence a direct bond or a 1+n valent group,
Z^{N} is independently at each occurrence a linear or branched monovalent hydrocarbon group having 6 or more and 40 or less carbon atoms and optionally having a substituent,
L¹ is independently at each occurrence a divalent aliphatic hydrocarbon group having 2 to 20 carbon atoms or an aromatic hydrocarbon group which are optionally interrupted by an oxygen atom and/or a sulfur atom,
n is independently at each occurrence an integer of 1 or more and 3 or less,
p is independently at each occurrence an integer of 0 or more and 2 or less,
q is independently at each occurrence an integer of 0 or more and 2 or less,
p + q is 2 in each N(-Y^{N}-Z^{N}ₙ)ₚ(-H)_{q},
r is independently at each occurrence 0 or 1,
s is independently at each occurrence 0 or 1,
r + s is 1 in each N(-Y^{N}-Z^{N}ₙ)ᵣ(-H)ₛ,
the sum of all p and all r is 1 or more and
t is an integer of 0 or more and 10 or less].

In Example 1 of the modified body of amine, the details of Y^{N}, Z^{N} and n are as described above.

In Example 1 of the modified body of amine, L¹ is a divalent aliphatic hydrocarbon group having 2 to 20 carbon atoms or an aromatic hydrocarbon group which are optionally interrupted by an oxygen atom and/or a sulfur atom, and may be a cyclic, branched or linear hydrocarbon group, and is preferably a chain hydrocarbon group or an aromatic hydrocarbon. L¹ may be the hydrocarbon group described in the above [Amine backbone]. The hydrocarbon group may be interrupted by an oxygen atom and/or a sulfur atom, may be composed of only a carbon atom, a nitrogen atom and hydrogen atom. L¹ may be, for example, a saturated or unsaturated (e.g., saturated) aliphatic hydrocarbon group or an aromatic hydrocarbon group with 1 or 2 hydrocarbon aromatic rings. L¹ is preferably a cyclic group having both a ring (e.g., an aromatic ring) and a chain structure (e.g., a linear structure, ether oxygen, or thioether sulfur). Specific examples thereof include 1,3-phenylenebisalkylene group, 1,4-phenylenebisalkylene group, diphenyl ether diyl group, diphenyl thioether diyl group. L¹ may have 2 or more, 3 or more, 4 or more, 6 or more, 8 or more, 10 or more, or 12 or more carbon atoms. L¹ may have 20 or less, 18 or less, 16 or less, 14 or less, 12 or less, 10 or less, 8 or less, 6 or less, 4 or less, or 3 or less carbon atoms.

In Example 1 of the modified body of amine, p is independently at each occurrence an integer of 0 or more and 2 or less, q is independently at each occurrence an integer of 0 or more and 2 or less, and p + q is 2 in each N(-Y^{N}-Z^{N}ₙ)ₚ(-H)_{q}. Preferably p may be independently at each occurrence 1 or more and is, for example, 2.

In Example 1 of the modified body of amine, r is independently at each occurrence 0 or 1, s is independently at each occurrence 0 or 1, and r + s is 1 in each N(-Y^{N}-Z^{N}ₙ)ᵣ(-H)ₛ. Preferably p may be independently at each occurrence 1 or more and is, for example, 2.

The sum of all p and all r is 1 or more, which means that Example 1 of the modified body of amine has one or more -Y^{N}-Z^{N}ₙ. The sum of all p and all r may be 1 or more, 3 or more, 5 or more, 7 or more, 9 or more, 12 or more (the sum of all q and all s may be 0). The sum of all p and all r may be 14 or less, 12 or less, 10 or less, 8 or less, 6 or less, or 4 or less.

In Example 1 of the modified body of amine, t is an integer of 0 or more and 10 or less. t may be 0 or more, 1 or more, 2 or more, 4 or more, or 6 or more, and is preferably 0 or more or 2 or more. t may be 8 or less, 6 or less, 4 or less, or 3 or less.

### (Example 2 of modified body of amine)

Another example of the modified body of amine is (Example 2 of modified body of amine), which is a compound represented by the following formula:

N(-Y^{N}-Z^{N}ₙ)ₚ(-H)_{q}-L²(-Y^{N}-Z^{N}ₙ)ᵤ

[wherein Y^{N} is independently at each occurrence a direct bond or a 1+n valent group,
Z^{N} is independently at each occurrence a linear or branched monovalent hydrocarbon group having 6 or more and 40 or less carbon atoms and optionally having a substituent,
L² is a 1+u valent aliphatic hydrocarbon group having 2 to 20 carbon atoms or an aromatic hydrocarbon group which are optionally interrupted by an oxygen atom and/or a sulfur atom,
n is independently at each occurrence an integer of 1 or more and 3 or less,
p is an integer of 0 or more and 2 or less,
q is an integer of 0 or more and 2 or less,
p + q is 2,
u is an integer of 1 or more and 3 or less, and
the sum of p and u is 1 or more].

In Example 2 of the modified body of amine, the details of Y^{N}, Z^{N} and n are as described above.

In Example 2 of the modified body of amine, L² is a 1+u valent aliphatic hydrocarbon group having 2 to 20 carbon atoms or an aromatic hydrocarbon group which are optionally interrupted by an oxygen atom and/or a sulfur atom, and may be a cyclic, branched or linear hydrocarbon group, and is preferably a chain hydrocarbon group or an aromatic hydrocarbon. L² may be the hydrocarbon group described in the above [Amine backbone]. The hydrocarbon group may be interrupted by an oxygen atom and/or a sulfur atom, may be composed of only a carbon atom, a nitrogen atom and hydrogen atom. L² may be, for example, a saturated or unsaturated (e.g., saturated) aliphatic hydrocarbon group or an aromatic hydrocarbon group with 1 or 2 hydrocarbon aromatic rings. L² is preferably a cyclic group having both a ring (e.g., an aromatic ring) and a chain structure (e.g., a linear structure, ether oxygen, or thioether sulfur). Specific examples thereof include 1,3-phenylenebisalkylene group, 1,4-phenylenebisalkylene group, diphenyl ether diyl group, diphenyl thioether diyl group. L² may have 2 or more, 3 or more, 4 or more, 6 or more, 8 or more, 10 or more, or 12 or more carbon atoms. L² may have 20 or less, 18 or less, 16 or less, 14 or less, 12 or less, 10 or less, 8 or less, 6 or less, 4 or less, or 3 or less carbon atoms.

In Example 2 of the modified body of amine, p is an integer of 0 or more and 2 or less, q is an integer of 0 or more and 2 or less, and p + q is 2. p may be preferably 1 or more and is, for example, 2.

In Example 2 of the modified body of amine, u is an integer of 1 or more and 3 or less. u is 1, 2 or 3, and for example 2 or 3.

In Example 2 of the modified body of amine, the sum of p and u is 1 or more, which means that Example 2 of the modified body of amine has one or more -Y^{N}-Z^{N}ₙ. The sum of all p and all u may be 1 or more, 2 or more, 3 or more, 4 or more, or 5 or more (the sum of all q may be 0). The sum of p and u may be 5 or less, 4 or less, 3 or less, or 2 or less.

### (Specific Examples)

Specific examples of modified bodies of amine include the compounds represented by the following formula. In the following formula, details of Y^{N}, Z^{N}, and n are as described in Z^{N} above.

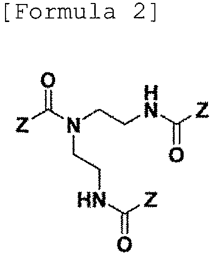

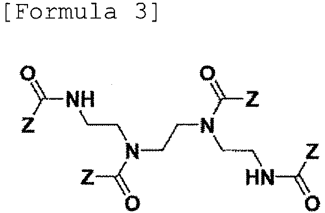

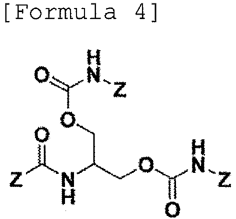

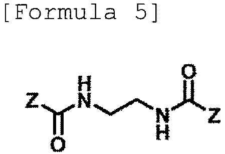

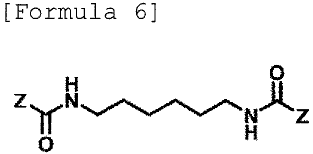

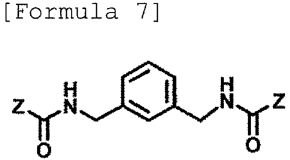

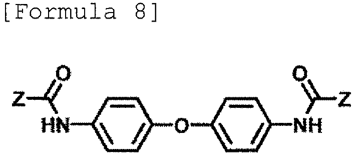

The modified body of amine may be a synthetic wax derived from animal or vegetable oil and fat. The synthetic wax may also be prepared by condensing fatty acid derived from animal or vegetable oil and fat and aliphatic amine or amine containing aromatic. Examples of synthetic wax include a fatty acid amide compound such as a hydroxy fatty acid amide compound, a palmitamide compound, an octadecanoic acid amide compound, a stearic acid amide compound, an arachidic acid amide compound, a behenic acid amide compound, a lignoceric acid amide compound, an oleic acid amide compound, a linoleic acid amide compound, an α-linolenic acid amide compound, γ-linolenic acid amide compound, an arachidonic acid amide compound, an icosapentaenoic acid amide compound and a docosahexaenoic acid amide compound.

### [Production Method]

The method for producing the modified body of amine is not limited, and examples thereof include a method in which a modified body of amine is synthesized by allowing various types of amines (raw material amines) to react with a Z^{N} group-containing carboxylic acid in the presence of a condensing agent, if necessary, and a method in which a modified body of amine is synthesized by allowing various types of amines to react with Z^{N} group-containing carboxylic acid chloride, acid anhydride, isocyanate or the like. A known condensing agent may be used, and examples thereof include DCC, EDCI, CDI, BOP, COMU, DMT-MM, DPPA and Py-Bop.

### (Amine (raw material amine))

Examples of amine (raw material amine), which is a precursor of amine backbone, include those capable of forming amine backbone, such as alkylamine such as methylamine, ethylamine, propylamine, butylamine and dibutylamine; alkylenediamine such as ethylenediamine, propylenediamine, butylenediamine, pentanediamine, hexamethylenediamine, cyclohexanediamine and methylenebiscyclohexylamine; polyalkylenepolyamine such as diethylenetriamine, triethylenetetramine, tris (2-aminoethyl) amine, tetraethylenepentamine, pentaethylenehexamine, dipropylenetriamine, tripropylenetetramine, tris (2-aminopropyl) amine, tetrapropylenepentamine, pentapropylenehexamine, iminobispropylamine, dibutylenetriamine, bis(2-aminoethoxy)ethane, bis(2-aminoethyl) ether, bis [2-(2-aminoethoxy)ethyl] ether, bis[2-(3-aminoprotoxy)ethyl] ether, spermine and spermidine; oxygen or sulfur-containing aliphatic amine such as 1-aminopropanediol, 2-amino-1,3-propanediol, 3-amino-1,2-propanediol, polyoxypropylenediamine and polyoxyethylenediamine; aromatic monoamine such as aniline, 1- or 2-naphthylamine, 1-, 2-, or 9-aminoanthracene, 9-aminophenanthracene and 2-, 3- or 4-aminobiphenyl; monocyclic aromatic polyamine such as o-, m- or p-phenylene diamine, o-, m- or p-xylylenediamine, diaminotoluene and 2,3-, 2,4- or 2,5-tolylenediamine; polycyclic aromatic polyamine such as diaminobiphenyl, bisaminophenoxyphenylpropane, diaminodiphenyl ether, diaminodiphenyl sulfide, diaminodiphenylsulfone, diaminobenzophenone, diaminodiphenylmethane, diaminophenylpropane, diaminophenyl hexafluoropropane, diaminophenylphenylethane, bisaminophenoxybenzene, bisaminobenzoyl benzene, bisaminodimethylbenzyl benzene, aminophenoxybiphenyl, aminophenoxyphenyl ketone, bisaminoditrifluoromethylbenzyl benzene, aminophenoxyphenyl sulfone, aminophenoxyphenyl ether, aminophenoxyphenyl propane, bis(aminophenoxybenzoyl) benzene, bis(aminophenoxy-α,α-dimethylbenzyl) benzene, bis[(aminoaryloxy)benzoyl] diphenylether, bis (amino-α,α-dimethylbenzylphenoxy) benzophenone, aminophenoxyphenyl sulfide, bis [amino-α,α-dimethylbenzylphenoxy]diphenyl sulfone, 4,4'-bis[aminophenoxyphenoxy]diphenyl sulfone, diaminodiaryloxybenzophenone, diaminoaryloxybenzophenone, 3,3'-dimethoxy-4,4'-diaminobiphenyl, 4,4'-diaminotriphenyl methane, 3,3'-dimethyl-4,4'-diaminobiphenyl, 4,4'-methylenebisaniline, 4,4'-oxydianiline, 1,3-bis(4-aminophenoxy)benzene, 4,4'-diaminodiphenylether and 4,4'-bis(aminophenyl)amine; oxygen or sulfur-containing polycyclic aromatic polyamine such as 2,2'-bis[4-(4-aminophenoxy)phenyl]propane, 1,3-bis(4-aminophenoxy)benzene, 1,3-bis(3-aminophenoxy)benzene, 3,4'-diaminodiphenyl ether and 4,4'-diaminodiphenylsulfide; and hydroxyl group-containing polyamine such as 2-hydroxyethylethylenediamine, 2-hydroxyethylpropylenediamine, di-2-hydroxyethylethylenediamine, di-2-hydroxyethylpropylenediamine, 2-hydroxypropylethylenediamine and di-2-hydroxypropylethylenediamine. Polyamine may also be a polymer of a polymerizable compound such as allylamine.

### {Modified body of polyol}

The modified body of polyol will be described as an example of the liquid repellent compound. A modified body of polyol is a compound prepared by chemically modifying polyol so that the polyol exhibits liquid repellency.

### [Structure]

The modified body of polyol may be a polymer having a degree of polymerization of 1 or more. The modified body of polyol may have a degree of polymerization of 2 or more, 3 or more, 5 or more, 6 or more, preferably 7 or more, more preferably 8 or more, and further preferably 9 or more from the viewpoint of the improvement in the liquid-repellency. The modified body of polyol may have a degree of polymerization of 100 or less, preferably 50 or less, more preferably 30 or less, and further preferably 15 or less from the viewpoint of the improvement in handling properties of the oil-resistant agent composition. The degree of polymerization means the repeating number of monomer units constituting the polymer.

The degree of polymerization in the present disclosure means an average degree of polymerization. The average degree of polymerization in the present disclosure is measured under the following conditions.

When the modified body of polyol in the present disclosure is a modified body of polyglycerol obtained by modifying polyglycerol, the degree of polymerization of the modified body of polyol means the average degree of polymerization of the polyglycerol. The average degree of polymerization of polyglycerol refers to an average degree of polymerization (n) calculated from the hydroxyl number determined by the end group analysis. More specifically, the average degree of polymerization and the average molecular weight are calculated from the following (Formula 1) and (Formula 2). $Average molecular weight = 74 n + 18$ 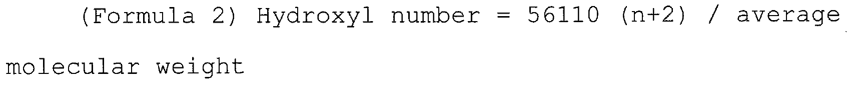 Hydroxyl number = 56110 (n+2) / average molecular weight

The hydroxyl number in the above (Formula 2) indicates the number of hydroxyl groups in polyglycerol. The hydroxyl number is calculated from the amount of potassium hydroxide necessary for neutralizing acetic acid used for acetylation of free hydroxyl groups contained in 1 g of polyglycerol, which is determined according to The JOCS Standard Methods for the Analysis of Fats, Oils and Related Materials (I), 2003, edited by Japan Oil Chemists' Society. The hydroxyl number of polyglycerol, which is the raw material, is actually measured by the above Standard Methods for the Analysis of Fats, Oils and Related Materials, and the average degree of polymerization and the average molecular weight of polyglycerol may be calculated by the above relational expression.

When the modified body of polyol in the present disclosure is a modified body of polyvinyl alcohol obtained by modifying polyvinyl alcohol, the degree of polymerization of the modified body of polyol means the average degree of polymerization of the polyvinyl alcohol. The average degree of polymerization of polyvinyl alcohol may be measured according to JIS K 6726, Testing Methods for Polyvinyl Alcohol.

When the modified body of polyol in the present disclosure is a modified body of polysaccharide obtained by modifying polysaccharide, the degree of polymerization of the modified body of polyol means the average degree of polymerization of the polysaccharide. The average degree of polymerization of polysaccharide may be analyzed as follows. The degree of polymerization refers to the number of monosaccharide units in polysaccharide (fructose and glucose units), and the average degree of polymerization means the maximum of the peaks in the results of analysis obtained by a common analytical method such as HPLC, GC or HPAEC as described below. The average degree of polymerization may be measured by using ULTRON PS-80N made by Shinwa Chemical Industries Ltd. (8 × 300 mm) (solvent: water, flow rate: 0.5 ml/ minute, temperature: 50°C) or TSK-GEL G30000 PWXL made by Tosoh Corporation (7.8 × 300 mm) (solvent: water, flow rate: 0.5 ml/ minute, temperature: 50°C) as the column, and a differential refractometer as the detector.

The modified body of polyol may be a low molecular weight compound (having a weight average molecular weight of less than 1,500, less than 1,000 or 500 or less) and/or a high molecular weight compound. The modified body of polyol may have a weight average molecular weight of 100 or more, 200 or more, 300 or more, 400 or more, 500 or more, 1,000 or more, 3,000 or more, 5,000 or more, 10,000 or more, 30,000 or more, 100,000 or more, 300,000 or more, or 500,000 or more. The modified body of polyol may have a weight average molecular weight of 1,000,000 or less, 750,000 or less, 500,000 or less, 300,000 or less, 100,000 or less, 75,000 or less, 50,000 or less, 30,000 or less, 10,000 or less, 9,000 or less, 8,000 or less, 7,000 or less, 6,000 or less, 5,000 or less, 3,000 or less, 2,000 or less, 1,000 or less, or 500 or less.

The hydroxy group substitution ratio of the modified body of polyol may be 1% or more, 3% or more, 5% or more, 10% or more, 20% or more, 30% or more, 40% or more, 50% or more, 60% or more, 70% or more, 80% or more, 90% or more, or 100%, and is preferably 10% or more, for example 30% or more, 40% or more, 50% or more, 60% or more, 70% or more, particularly 80% or more. The hydroxy group substitution ratio of the modified body of polyol may be 100% or less, 95% or less, 85% or less, 75% or less, 65% or less, 55% or less, 45% or less, 35% or less, 25% or less, 15% or less, and is, for example, 95% or less. The "substitution ratio" means the proportion (mol%) of modified hydroxy groups out of the hydroxy groups derived from polyol, and may mean the proportion (mol%) of hydroxy groups modified by a monovalent hydrocarbon group having 1 or more and 40 or less carbon atoms and optionally having a substituent, or a monovalent polysiloxane group.

The residual ratio of hydroxyl groups in the modified body of polyol may be 1% or more, 3% or more, 5% or more, 10% or more, 20% or more, 30% or more, 40% or more, 50% or more, 60% or more, 70% or more, 80% or more, or 90% or more, and for example, 5% or more. The residual ratio of hydroxyl groups in the modified body of polyol may be 100% or less, 95% or less, 85% or less, 75% or less, 65% or less, 55% or less, 45% or less, 35% or less, 25% or less, 15% or less, or 5% or less, and for example, 50% or less, 30% or less, or 10% or less. In this regard, the "residual ratio" means the proportion (mol%) of hydroxyl groups without modification, out of the hydroxy groups derived from the polyol.

The number of modifying groups that the modified body of polyol has may be 2 or more, 5 or more, 7 or more, 8 or more, 9 or more, 10 or more, 12 or more, 15 or more, 30 or more, or 50 or more. The number of modifying groups that the modified body of polyol has 1,000 or less, 750 or less, 500 or less, 300 or less, 100 or less, 50 or less, 30 or less, or 20 or less. In this regard, the modifying group is preferably a monovalent hydrocarbon group optionally having a substituent, or a monovalent polysiloxane group.

The modifying group equivalent of the modified body of polyol may be 150 or more, 250 or more, 350 or more, 450 or more, 550 or more, 650 or more, 750 or more, or 1,000 or more. The modifying group equivalent of the modified body of polyol may be 2,500 or less, 2,000 or less, 1,500 or less, 1,000 or less, 750 or less, 500 or less, or 400 or less. The modifying group equivalent is obtained by dividing the weight average molecular weight of modified body of polyol by the number of modifying groups. In this regard, the modifying group is preferably a monovalent hydrocarbon group optionally having a substituent, or a monovalent polysiloxane group.

In the modified body of polyol, one or more hydroxy groups in polyol are substituted by a modifying group. The modifying group is preferably a monovalent hydrocarbon group optionally having a substituent, or a monovalent polysiloxane group. The modified body of polyol may have a structure in which polyol is modified with an alkyl group having 6 or more and 40 or less carbon atoms from the viewpoint of the improvement in liquid-repellency.

Details of the monovalent hydrocarbon group optionally having a substituent and the monovalent polysiloxane group are as described in the above (Monovalent hydrocarbon group optionally having substituent) and (Monovalent polysiloxane group).

### (-Y^{O}-Z^{O}ₙ)

In the modified body of polyol in the present disclosure, one or more hydroxy groups in polyol are optionally substituted by a group represented by the following formula:

-Y^{O}-Z^{O}ₙ

[wherein Y^{O} is a 1+n valent group composed of one or more selected from the group consisting of Y^{O1} and Y^{O2},
Y^{O1} is a group composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or a hydrocarbon group having 1 to 30 (for example, 1 to 20, 1 to 10, or 1 to 4) carbon atoms,
Y^{O2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
Z^{O} is a monovalent hydrocarbon group having 1 or more and 40 or less carbon atoms and optionally having a substituent or a monovalent polysiloxane group, and
n is an integer of 1 or more and 3 or less].

### (Y^{O})

Y^{O} is a 1+n valent group composed of one or more selected from the group consisting of Y^{O1} and Y^{O2},
Y^{O1} is a group composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or hydrocarbon group having 1 to 30 (for example, 1 to 20, 1 to 10, or 1 to 4) carbon atoms),
Y^{O2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

n is the number of Z^{O} bonded to Y^{O}, and may be an integer of 1 or more and 3 or less. n may be 1 or more, 2 or more, or 3 or more. n may be 3 or less, 2 or less, or 1 or less, and is, for example, 2 or less.

Y^{O} may have a molecular weight of 10 or more, 50 or more, 100 or more, 200 or more, 300 or more, 500 or more, or 750 or more. Y^{O} may have a molecular weight of 3,000 or less, 2,500 or less, 2,000 or less, 1,500 or less, 1,000 or less, 750 or less, 500 or less, 300 or less, 200 or less, 100 or less, or 50 or less.

Y^{O} may include at least an amide group, a urethane group, a urea group, an imide group, a thioamide group, a thiourethane group, a thiourea group, a thioimide group, a sulfone amide group, a sulfone urea group, a sulfone urethane group, or a sulfone imide group. For example, Y^{O} may include -C(=O)-NR'-, -C(=S)-NR'-, -O-C(=O)-NR'-, - NR'-C(=O)-, -NR'-C(=O)-NR'- or -SO₂NR'-. Inclusion of these groups in Y^{O} may improve liquid repellency.

### o Y^{O1}

Y^{O1} is a non-hydrocarbon linker.

Y^{O1} is a direct bond or a divalent or higher valent group. Y^{O1} may have a valence of 2 to 4, 2 or 3, or 2. It is preferable that Y^{O1} is not limited to direct bond.

Y^{O1} may have a molecular weight of 10 or more, 50 or more, 100 or more, 200 or more, 300 or more, or 500 or more. Y^{O1} may have a molecular weight of 2,000 or less, 1,500 or less, 1,000 or less, 750 or less, or 500 or less.

Y^{O1} may be composed of one or more selected from the group consisting of a direct bond, -O-, -C(=O)-, - S(=O)₂-, -NR'-, -C(OR')R'- and -C(OR')(-)₂ (wherein R' is independently at each occurrence a hydrogen atom or a hydrocarbon group having 1 to 30 (for example, 1 to 20, 1 to 10, or 1 to 4) carbon atoms). Examples of Y^{O1} include: a direct bond,
-O-,
-O-C(=O)-,
-O-C(=O)-O-,
-O-C(=O)-NR'-,
-NR'-,
-NR'-C(=O)-,
-NR'-C(=O)-O-,
-NR'-C(=O)-NR'-,
-C(=O)-,
-C(=O)-O-,
-C(=O)-NR'-,
-SO₂-,
-SO₂NR'-,
-C(OR')R'-,
and -C(OR')(-)₂
(wherein R' is independently at each occurrence a hydrogen atom or a hydrocarbon group having 1 to 30 (for example, 1 to 20, 1 to 10, or 1 to 4) carbon atoms).

Y^{O1} may include at least an amide group, a urethane group, a urea group, an imide group, a thioamide group, a thiourethane group, a thiourea group, a thioimide group, a sulfone amide group, a sulfone urea group, a sulfone urethane group, or a sulfone imide group. For example, Y^{O2} may include -C(=O)-NR'-, -O-C(=O)-NR'-, -NR'-C(=O)-, -NR'-C(=O)-NR'- or -SO₂NR'-. Inclusion of these groups in Y^{O1} may improve liquid repellency.

### o Y^{O2}

Y^{O2} is a hydrocarbon optionally having a substituent, a hydrocarbon aromatic ring optionally having a substituent or a heterocyclic linker optionally having a substituent.

Y^{O2} may be a hydrocarbon group or a non-hydrocarbon group (including a heteroatom). Y^{O2} may be aliphatic or aromatic. Y^{O2} may be linear, branched or cyclic.

Y^{O2} is a divalent or higher valent group. Y^{O2} may have a valence of, for example, 2 to 4, 2 or 3, or 2.

Y^{O2} may have 1 or more, 2 or more, 3 or more, 4 or more, 6 or more, 8 or more, 10 or more, 12 or more, 14 or more, 16 or more, or 18 or more carbon atoms. Y^{O2} may have 40 or less, 35 or less, 30 or less, 25 or less, 20 or less, 15 or less, 10 or less, or 5 or less carbon atoms.

Y^{O2} is composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms. The aliphatic hydrocarbon having 1 to 40 carbon atoms may have 35 or less, 30 or less, 25 or less, 20 or less, 15 or less, 10 or less, or 5 or less carbon atoms. The aliphatic hydrocarbon group may have a valence of 2 or more, 3 or more, or 4, and 4 or less, 3 or less, or 2.

The aliphatic hydrocarbon group may have a substituent. Examples of substituents include -OR', - N(R')₂, -COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more. In the aliphatic hydrocarbon group having a substituent, the amount of carbon atom relative to the amount of carbon atom and heteroatom may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene and coronene. The number of ring constituting atoms of the hydrocarbon aromatic ring is 3 to 20, 4 to 16, or 5 to 12 and preferably 5 to 12. The valence of the hydrocarbon aromatic ring may be 2 or more, 3 or more, or 4, and may be 4 or less, 3 or less, or 2.

The hydrocarbon aromatic ring may have a substituent. Examples of substituents include -R', -OR', -N(R')₂, -COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon aromatic ring having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more. In the hydrocarbon aromatic ring having a substituent, the amount of carbon atom relative to the amount of carbon atom and heteroatom may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline and the like. The number of ring constituting atoms of the heterocyclic ring is 3 to 20, 4 to 16, or 5 to 12 and preferably 5 to 12. The heterocyclic ring may have a valence of 2 or more, 3 or more, or 4, and 4 or less, 3 or less, or 2.

The heterocyclic ring may have a substituent. Examples of substituents include -R', -OR', -N(R')₂, - COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the carbon atom and the heteroatom may be 60 mol% or more, 70 mol% or more, 80 mol% or more, 90 mol% or more, 95 mol% or more, or 99 mol% or more, and is, for example, 65 mol% or more. In the heterocyclic ring having a substituent, the amount of carbon atom relative to the amount of carbon atom and heteroatom may be 95 mol% or less, 90 mol% or less, 85 mol% or less, 80 mol% or less, or 70 mol% or less.

Examples of Y^{O2} include
-Ali-
-Cy-
-Ali(-)₂
-Cy(-)₂
(-)₂Ali-
(-)₂Cy-
(-)₂Ali(-)₂
(-)₂Cy(-)₂
-Ali-Cy-
-Cy-Ali-
-Cy-Ali-Cy-
-Ali-Cy-Ali-
[wherein Ali is an aliphatic hydrocarbon group having 1 to 20 carbon atoms and Cy is a hydrocarbon aromatic ring or a heterocyclic ring].

Specific examples of Y^{O2} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

### (Example of Y^{O})

Examples of Y^{O} will be described. In the following, R' is independently at each occurrence a hydrogen atom or a hydrocarbon group having 1 to 30 (for example, 1 to 20, 1 to 10, or 1 to 4) carbon atoms.

When Y^{O} is divalent, examples of Y^{O} include -Y^{O1}-, - Y^{O1}-Y^{O2}-, -Y^{O1}-Y^{O2}-Y^{O1}-, -Y^{O1}-Y^{O2}-Y^{O1}-Y^{O2}-, -Y^{O2}-, -Y^{O2}-Y^{O1}-, - Y^{O2}-Y^{O1}-Y^{O2}- and -Y^{O2}-Y^{O1}-Y^{O2}-Y^{O1}-.

When Y^{O} is trivalent, examples of Y^{O} include -Y^{O1}(-)₂, -Y^{O1}-Y^{O2}(-)₂, -Y^{O1}-(Y^{O2}-)₂, -Y^{O1}-Y^{O2}-Y^{O1}(-)₂, -Y^{O1}-Y^{O2}(-Y^{O1}-)₂, - Y^{O1}-(Y^{O2}-Y^{O1}-)₂, -Y^{O1}-Y^{O2}-Y^{O1}-Y^{O2}(-)₂, -Y^{O1}-Y^{O2}-Y^{O1}-(Y^{O2}-)₂, -Y^{O1}-Y^{O2}-(-Y^{O1}-Y^{O2}-)₂, -Y^{O1}-(Y^{O2}-Y^{O1}-Y^{O2}-)₂;
-Y^{O2}(-)₂, -Y^{O2}-Y^{O1}(-)₂, -Y^{O2}-(Y^{O1}-)₂, -Y^{O2}-Y^{O1}-Y^{O2}(-)₂, -Y^{O2}-Y^{O1}(-Y^{O2}-)₂, -Y^{O2}-(Y^{O1}-Y^{O2}-)₂, -Y^{O2}-Y^{O1}-Y^{O2}-Y^{O1}(-)₂, -Y^{O2}-Y^{O1}-Y^{O2}-(Y^{O1}-)₂, -Y^{O2}-Y^{O1}(Y^{O2}-Y^{O1}-)₂, and -Y^{O2}-(Y^{O1}-Y^{O2}-Y^{O1}-)₂.

When Y^{O} is tetravalent, examples of Y^{O} include - Y^{O1}(-)₃, -Y^{O1}-Y^{O2}(-)₃, -Y^{O1}-(Y^{O2}-)₃, -Y^{O1}-Y^{O2}-Y^{O1}(-)₃, -Y^{O1}-Y^{O2}(-Y^{O1}-)₃, -Y^{O1}-(Y^{O2}-Y^{O1}-)₃, -Y^{O1}-Y^{O2}-Y^{O1}-Y^{O2}(-)₃, -Y^{O1}-Y^{O2}-Y^{O1}-(Y^{O2}-)₃, -Y^{O1}-Y^{O2}-(-Y^{O1}-Y^{O2}-)₃, -Y^{O1}-(Y^{O2}-Y^{O1}-Y^{O2}-)₃;
-Y^{O2}(-)₃, -Y^{O2}-Y^{O1}(-)₃, -Y^{O2}-(Y^{O1}-)₃, -Y^{O2}-Y^{O1}-Y^{O2}(-)₃, -Y^{O2}-Y^{O1}(-Y^{O2}-)₃, -Y^{O2}-(-Y^{O1}-Y^{O2}-)₃, -Y^{O2}-Y^{O1}-Y^{O2}-Y^{O1}(-) ₃, -Y^{O2}-Y^{O1}-Y^{O2}-(Y^{O1}-)₃, -Y^{O2}-Y^{O1}-(Y^{O2}-Y^{O1}-)₃, and -Y^{O2}-(Y^{O1}-Y^{O2}-Y^{O1}-)₃.

Preferred examples of Y^{O} include
-Y^{O1}-, -Y^{O1}-Y^{O2}-, -Y^{O1}-Y^{O2}-Y^{O1}, -Y^{O1}-Y^{O2}(-) ₂,
-Y^{O2}-, -Y^{O2}-Y^{O1}-, -Y^{O2}-Y^{O1}-Y^{O2}-, -Y^{O2}-Y^{O1}(-)₂.

(Preferred example of Y^{O})
Y^{O} may be preferably
-O-Y^{O11}- or
-O-Y^{O11}-Y^{O21}-Y^{O12}-
[wherein, independently at each occurrence,
Y^{O11} is a direct bond, -C(=O)-, -C(=O)-NR'- or - C(=S)-NR'-,
Y^{O21} is a hydrocarbon group having 1 to 40 carbon atoms, and
Y^{O12} is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, -C(=O)-, -C(=O)-O-, -C(=O)-NR'-, -SO₂-, - SO₂NR'-, -C(OR')R'- or -C(OR')(-)₂].
Y^{O11} is a non-hydrocarbon linker, and is a direct bond or divalent or higher valent group.

The molecular weight of Y^{O11} may be 2,000 or less, 1,500 or less, 1,000 or less, 750 or less, or 500 or less. The molecular weight of Y^{O11} may be 10 or more, 50 or more, 100 or more, 200 or more, 300 or more, or 500 or more.

Y^{O11} is a direct bond, -C(=O)-, -C(=O)-NR'- or - C(=S)-NR'-.

Y^{O21} is a divalent hydrocarbon linker, and may be a hydrocarbon group having 1 to 40 carbon atoms.

Y^{O21} may have 1 or more, 2 or more, 3 or more, 4 or more, 6 or more, 8 or more, 10 or more, 12 or more, 14 or more, 16 or more, or 18 or more carbon atoms. Y^{O21} may have 40 or less, 35 or less, 30 or less, 25 or less, 20 or less, 15 or less, 10 or less, or 5 or less carbon atoms.

The hydrocarbon group having 1 to 40 carbon atoms may be cyclic, branched or linear, and may be a saturated or unsaturated (e.g., saturated) aliphatic hydrocarbon group.

Specific examples of Y^{O21} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

Y^{O12} may be -O-, -O-C(=O)-, -O-C(=O)-O-, -O-C(=O)-NR'-, -NR'-, -NR'-C(=O)-, -NR'-C(=O)-O-, -NR'-C(=O)-NR'-, -C(=O)-, -C(=O)-O-, -C(=O)-NR'-, -SO₂-, -SO₂NR'-, - C(OR')R'- or -C(OR')(-)₂.

Y^{O12} may include at least an amide group, a urethane group, a urea group, an imide group, a thioamide group, a thiourethane group, a thiourea group, a thioimide group, a sulfone amide group, a sulfone urea group, a sulfone urethane group, or a sulfone imide group. For example, Y^{O11} may be -C(=O)-NR'-, -O-C(=O)-NR'-, -NR'-C(=O)-, -NR'-C(=O)-NR'- or -SO₂NR'-. Inclusion of these groups in Y^{C12} may improve liquid repellency.

### (Z^{O})

Z^{O} is a monovalent hydrocarbon group having 1 or more and 40 or less carbon atoms and optionally having a substituent, or a monovalent polysiloxane group. The same explanation in the above (Monovalent hydrocarbon group optionally having substituent) and (Monovalent polysiloxane group) applies.

### [Other modifying groups]

The hydroxy group of polyol may be substituted by a modifying group other than -Y^{O}-Z^{O}ₙ. Examples of modifying groups include an anionic group and/or a cationic group.

Examples of anionic groups include a monomer having a carboxyl group, a sulfonic acid group or a phosphoric acid group.

Examples of salts of the anionic group include alkaline metal salt, alkaline earth metal salt, or an ammonium salt such as methyl ammonium salt, ethanol ammonium salt and triethanol ammonium salt.

Examples of cationic groups include an amino group, which is preferably a tertiary amino group and a quaternary amino group. It is preferable that in the tertiary amino group, two groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., a benzyl group (C₆H₅-CH₂-)). It is preferable that in the quaternary amino group, three groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., benzyl group (C₆H₅-CH₂-)). In the tertiary amino group and the quaternary amino group, the last group bonded to the nitrogen atom may have a carbon-carbon double bond. The cationic group may be in the form of salt.

The cationic group in the form of salt is a salt with an acid (an organic acid or an inorganic acid). An organic acid such as a carboxylic acid having 1 to 20 carbon atoms (in particular, a monocarboxylic acid such as acetic acid, propionic acid, butyric acid and stearic acid) is preferred.

### [Production Method]

The modified body of polyol may be produced by reacting a modifying agent including a modifying group (or a precursor structure of the modifying group) with the hydroxy group of polyol.

### (Polyol)

Polyol has two or more hydroxy groups and is a raw material of the modified body of polyol. Polyol has two or more hydroxy groups in the molecule. Polyol may be aliphatic or aromatic, and is preferably aliphatic.

Polyol may have an ether bond. Preferably polyol may have two or more ether bonds. More specifically, polyol is preferably a compound having two or more hydroxy groups and two or more ether bonds. In other words, polyol is preferably polyether having two or more hydroxy groups.

When polyol is a polymer, polyol may have a hydroxy group and an ether bond in the repeating structure of the monomer unit.

Polyol may be a low molecular weight compound (having a weight average molecular weight of, for example, less than 1,000 or 500 or less) and/or a high molecular weight compound. The polyol may have a weight average molecular weight of 50 or more, 100 or more, 300 or more, 500 or more, 1,000 or more, 3,000 or more, 5,000 or more, 10,000 or more, 30,000 or more, 100,000 or more, 300,000 or more, or 500,000 or more. The polyol may have a weight average molecular weight of 1,000,000 or less, 750,000 or less, 500,000 or less, 300,000 or less, 100,000 or less, 75,000 or less, 50,000 or less, 30,000 or less, 10,000 or less, 5,000 or less, 3,000 or less, 2,000 or less, 1,000 or less, or 500 or less.

The number of hydroxy groups of the polyol may be 2 or more, 5 or more, 7 or more, 10 or more, 15 or more, 30 or more, 50 or more, or 100 or more. The number of hydroxy groups of the polyol may be 3,000 or less, 1,000 or less, 750 or less, 500 or less, 300 or less, 100 or less, 50 or less, 30 or less, or 20 or less.

The hydroxy equivalent of the polyol may be 20 or more, 40 or more, 60 or more, 80 or more, 100 or more, 120 or more, or 150 or more. The hydroxy equivalent of the polyol may be 1,000 or less, 800 or less, 600 or less, 400 or less, 200 or less, 100 or less, or 75 or less. Dividing the weight average molecular weight of polyol by the number of hydroxyl groups gives the hydroxy group equivalent of polyol.

Polyol may be a natural product. The natural product may be a high molecular weight natural product, a low molecular weight natural product, or a derivative thereof. The above natural product also includes a compound converted from microorganisms. Examples of polyol include a monosaccharide, an oligosaccharide, a polysaccharide, a sugar alcohol (reducing sugar), a hydroxy acid, an amino acid, vitamin, flavonol, hydroxyhydrocarbon, a polymer of a hydroxy group-containing compound, polyether polyol, polymer polyol, polyester polyol and other polyols.

Examples of monosaccharides include glucose, fructose, galactose and xylose.

Examples of oligosaccharides include sucrose, cycloamylose, cyclodextrin, maltose, trehalose, lactose and sucralose.

Examples of sugar alcohols (reducing sugar) include sorbitol, maltitol, erythritol, isomalt, lactitol, mannitol, xylitol, sorbitan and lactitol.

Examples of polysaccharides include starch, cellulose, curdlan, pullulan, alginic acid, carrageenan, guar gum, chitin, chitosan, locust bean gum, kappa-carrageenan, iota-carrageenan, isomaltodextrin, gellan gum and tamarind seed gum.

Examples of hydroxy acids include ascorbic acid, kojic acid, quinic acid, chlorogenic acid and gluconic acid.

Examples of amino acids include glucosamine.

Examples of vitamins include ascorbic acid and inositol.

Examples of flavonols include catechin, quercetin and anthocyanin.

Examples of hydroxyhydrocarbons include ethylene glycol, propylene glycol, diethylene glycol, triethylene glycol, tetraethylene glycol, neopentyl glycol, trimethylene glycol, glycerol, trimethylolpropane and trimethylolethane. The hydroxyhydrocarbon is a hydrocarbon having a hydroxy group, and may be aliphatic or aromatic, and is preferably aliphatic. The term "hydroxyhydrocarbon" may also mean a hydroxyhydrocarbon other than the compounds included in a different group, such as polysaccharide (other hydroxyhydrocarbons).

Examples of polymers of a hydroxy group-containing compound include polyglycerol, polyvinyl alcohol, hydroxyethyl (meth)acrylate polymer, hydroxypropyl (meth)acrylate polymer and hydroxybutyl (meth)acrylate polymer.

Polyether polyol may be a compound obtained by addition polymerization of alkylene oxide onto an initiator. Examples of initiators include a difunctional or higher functional compound having a hydroxyl group. Examples of initiators include propylene glycol, polypropylene glycol, ethylene glycol, polyethylene glycol, glycerol, polyglycerol, trimethylol propane, triethanolamine, pentaerythritol, ethylenediamine, aromatic diamine, diethylenetriamine, sorbitol and sucrose. Alkylene oxide include ethylene oxide and propylene oxide. The polyether polyol, which is obtained by addition polymerization of alkylene oxide onto the initiator, is also referred to as polyoxyalkylene polyol, or an oxyalkylene derivative of polyol. Typical examples of polyether polyol include polyoxypropylene triol obtained by addition polymerization of propylene oxide onto glycerol and polyoxypropylene polyglyceryl ether obtained by addition polymerization of propylene oxide onto polyglycerol.

An example of polymer polyol is a compound obtained by polymerizing at least a moiety of polyether polyol in the polyether polyol with an ethylenically unsaturated monomer. Examples of ethylenically unsaturated monomers include acrylonitrile and styrene.

An example of polyester polyol may be a compound obtained by dehydration condensation of a difunctional or higher functional compound having a carboxyl group and a difunctional or higher functional compound having a hydroxyl group. Examples of difunctional or higher functional compounds having a carboxyl group include terephthalic acid, isophthalic acid, phthalic acid, methylphthalic acid, trimellitic acid, pyromellitic acid, adipic acid, sebacic acid, succinic acid, maleic acid, fumaric acid, tetrahydrophthalic acid, methyltetrahydrophthalic acid, hexahydrophthalic acid and an acid anhydride thereof. Examples of difunctional or higher functional compounds having a hydroxyl group include ethylene glycol, propylene glycol, propanediol, neopentyl glycol, glycerol, trimethylolethane, trimethylolpropane, pentaerythritol and a polymer thereof.

### (Modifying agent)

The modifying agent is preferably a compound which is reactive to polyol and comprises the monovalent hydrocarbon group having 1 or more and 40 or less carbon atoms and optionally having a substituent or the monovalent polysiloxane group described above.

Examples of modifying agents are as follows:

| | |
|---|---|
| Acid halide | G(O=)C-Z^{O} |
| Acid anhydride | O(C(=O)-Z^{O})₂ |
| Carboxylic acid | HO(O=)C-Z^{O} |
| Isocyanate | O=C=N-Z^{O} |
| Thioisocyanate | S=C=N-Z^{O} |
| Epoxy | (CH₂OCH)CH₂O-Z^{O} |
| Halide | G-Z^{O} |
| Amine | H₂N-Z^{O} |
| Hydroxy | HO-Z^{O} |

[In the formula, Z^{O} is as described above, and G is a halogen atom (e.g., F, Cl, Br or I)].

Z^{O} in the structure of the above modifying agent may be replaced with any group constituting the modifying group. For example, Z^{O} may be a monovalent hydrocarbon group having 1 or more and 40 or less carbon atoms and optionally having a substituent or a monovalent polysiloxane group, and Z^{O} may be -Y^{O}-Z^{O}ₙ.

The modified body of polyol may also be synthesized by reacting polyol and a modifying agent. For example, the modified body of polyol may be synthesized by forming an ester bond by reacting a modifying agent, which is an acid halide compound, acid anhydride or carboxylic acid, with the hydroxy group of polyol. Alternatively, the modified body of polyol may be produced by forming an ether bond by reacting a modifying agent, which is a halide compound or an epoxy compound, with the hydroxy group of polyol. Conditions of the reaction between polyol and the modifying agent may be suitably designed by a person skilled in the art, including use of a catalyst (e.g., acid catalyst and base catalyst) and use of a condensing agent depending on the intended product.

### {Modified body of polycarboxylic acid}

The modified body of polycarboxylic acid will be described as an example of the liquid repellent compound. The modified body of polycarboxylic acid is a compound prepared by chemically modifying polycarboxylic acid so that polycarboxylic acid exhibits liquid repellency.

### [Structure]

The modified body of polycarboxylic acid may be a low molecular weight compound (having a weight average molecular weight of, for example, less than 1,500, less than 1,000 or 500 or less) and/or a high molecular weight compound. The modified body of polycarboxylic acid may have a weight average molecular weight of 100 or more, 200 or more, 300 or more, 400 or more, 500 or more, 1,000 or more, 3,000 or more, 5,000 or more, 10,000 or more, 30,000 or more, 100,000 or more, 300,000 or more, or 500,000 or more. The modified body of polycarboxylic acid may have a weight average molecular weight of 1,000,000 or less, 750,000 or less, 500,000 or less, 300,000 or less, 100,000 or less, 75,000 or less, 50,000 or less, 30,000 or less, 10,000 or less, 9,000 or less, 8,000 or less, 7,000 or less, 6,000 or less, 5,000 or less, 3,000 or less, 2,000 or less, 1,000 or less, or 500 or less.

The weight average molecular weight (Mw) and the number average molecular weight (Mn) of the modified body of polycarboxylic acid may be measured by GFC using polyethylene glycol/polyethylene oxide as a standard sample by the following apparatus under the following conditions.
Separation column: SB-806M (8 mm × 30 mm, Shodex)
Column temperature: 40°C
Solvent for mobile phase: ion-exchanged water
Flow rate of mobile phase: 1.0 mL/min
Sample concentration: 0.5 wt%
Injection amount: 50 µL
Detector: RI detector (Waters 2414 made by Waters)

The weight average molecular weight (Mw), the number average molecular weight (Mn) and polydispersity (Mw/Mn) of the modified body of polycarboxylic acid in terms of polystyrene may be determined by gel permeation chromatography (GPC) using tetrahydrofuran (THF) as an eluent and Shodex KF400RL and KF400RH columns (polystyrene gel) made by SHOWA DENKO K.K.

The hydroxy group substitution ratio in the carboxyl group of the modified body of polycarboxylic acid may be 1% or more, 3% or more, 5% or more, 10% or more, 20% or more, 30% or more, 40% or more, 50% or more, 60% or more, 70% or more, 80% or more, 90% or more, or 100%, and is preferably 10% or more, for example 30% or more, 40% or more, 50% or more, 60% or more, 70% or more, particularly 80% or more. The hydroxy group substitution ratio in the carboxyl group of the modified body of polycarboxylic acid may be 100% or less, 95% or less, 85% or less, 75% or less, 65% or less, 55% or less, 45% or less, 35% or less, 25% or less, or 15% or less, for example 95% or less. In this regard, the "substitution ratio" means the proportion (mol%) of modified hydroxy groups out of the hydroxy groups in the carboxyl group derived from polycarboxylic acid, and may mean the proportion (mol%) of hydroxy groups modified by a monovalent hydrocarbon group having 1 or more and 40 or less carbon atoms and optionally having a substituent, or a monovalent polysiloxane group.

The residual ratio of hydroxyl groups in the carboxyl group in the modified body of polycarboxylic acid may be 1% or more, 3% or more, 5% or more, 10% or more, 20% or more, 30% or more, 40% or more, 50% or more, 60% or more, 70% or more, 80% or more, or 90% or more, for example 5% or more. The residual ratio of hydroxyl groups in the carboxyl group in the modified body of polycarboxylic acid may be 100% or less, 95% or less, 85% or less, 75% or less, 65% or less, 55% or less, 45% or less, 35% or less, 25% or less, 15% or less, or 5% or less, for example 50% or less, 30% or less, or 10% or less. In this regard, the "residual ratio" means the proportion (mol%) of hydroxyl groups without modification, out of the hydroxy groups in the carboxyl group derived from polycarboxylic acid.

The number of modifying groups that the modified body of polycarboxylic acid has may be 2 or more, 5 or more, 7 or more, 10 or more, 15 or more, 30 or more, or 50 or more. The number of modifying groups that the modified body of polycarboxylic acid has may be 1,000 or less, 750 or less, 500 or less, 300 or less, 100 or less, 50 or less, 30 or less, or 20 or less. In this regard, the modifying group is preferably a monovalent hydrocarbon group optionally having a substituent, or a monovalent polysiloxane group.

The modifying group equivalent of the modified body of polycarboxylic acid may be 150 or more, 250 or more, 350 or more, 450 or more, 550 or more, 650 or more, 750 or more, or 1,000 or more. The modifying group equivalent of the modified body of polycarboxylic acid may be 2,500 or less, 2,000 or less, 1,500 or less, 1,000 or less, 750 or less, 500 or less, or 400 or less. The modifying group equivalent is obtained by dividing the weight average molecular weight of the modified body of polycarboxylic acid by the number of modifying groups. In this regard, the modifying group is preferably a monovalent hydrocarbon group optionally having a substituent, or a monovalent polysiloxane group.

In the modified body of polycarboxylic acid, one or more hydroxy groups in polycarboxylic acid are modified by a modifying group. The modifying group is preferably a monovalent hydrocarbon group optionally having a substituent, or a monovalent polysiloxane group. The modified body of polycarboxylic acid may have an alkyl group having 6 or more and 40 or less carbon atoms for polycarboxylic acid from the viewpoint of the improvement in liquid repellency.

Details of the monovalent hydrocarbon group optionally having a substituent and the monovalent polysiloxane group are as described in the above (Monovalent hydrocarbon group optionally having substituent) and (Monovalent polysiloxane group).

### (-Y^{C}-Z^{C}ₙ)

In the modified body of polycarboxylic acid of the present disclosure, the hydroxyl group(s) of one or more carboxyl groups of the polycarboxylic acid may be replaced by a group represented by the following formula:

-Y^{C}-Z^{C}ₙ

wherein Y^{C} is a 1+n valent group composed of one or more selected from the group consisting of Y^{C1} and Y^{C2},
Y^{C1} is a group composed of one or more selected from the group consisting of a direct bond, -O-, -C(=O)-, - C(=NR')-, -S-, -S(=O)₂-, -C(=S)-,-NR'-, -C(OR')R'-, - C(OR') (-)₂, and -N(-)₂ wherein R' is independently at each occurrence a hydrogen atom or a hydrocarbon group having 1 to 30 (for example, 1 to 20, 1 to 10, or 1 to 4) carbon atoms,
Y^{C2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
Z^{C} is a monovalent hydrocarbon group having 1 or more and 40 or less carbon atoms and optionally having a substituent, or a monovalent polysiloxane group, and
n is an integer of 1 or more and 3 or less.

### (Y^{C})

Y^{C} is a 1+n valent group composed of one or more selected from the group consisting of Y^{C1} and Y^{C2},
Y^{C1} is a group composed of one or more selected from the group consisting of a direct bond, -O-, -C(=O)-, - C(=NR')-, -S-, -S(=O)₂-, -C(=S)-, -NR'-, -C(OR')R'-, - C(OR') (-)₂ and -N(-)₂ (wherein R' is independently at each occurrence a hydrogen atom or a hydrocarbon group having 1 to 30 (for example, 1 to 20, 1 to 10, or 1 to 4) carbon atoms), and
Y^{C2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

n is the number of Z^{C} bonded to Y^{C}, and may be an integer of 1 or more and 3 or less. n may be 1 or more, 2 or more, or 3 or more. n may be 3 or less, 2 or less, or 1 or less, and is, for example, 2 or less.

Y^{C} may have a molecular weight of 10 or more, 50 or more, 100 or more, 200 or more, 300 or more, 500 or more, or 750 or more. Y^{C} may have a molecular weight of 3,000 or less, 2,500 or less, 2,000 or less, 1,500 or less, 1,000 or less, 750 or less, 500 or less, 300 or less, 200 or less, 100 or less, or 50 or less.

Y^{C} may include at least an amide group, a urethane group, a urea group, an imide group, a thioamide group, a thiourethane group, a thiourea group, a thioimide group, a sulfone amide group, a sulfone urea group, a sulfone urethane group, or a sulfone imide group. For example, Y^{C} may be -C(=O)-NR'-, -O-C(=O)-NR'-, -NR'-C(=O)-, -NR'-C(=O)-NR'- or -SO₂NR'-. Inclusion of these groups in Y^{C} may improve liquid repellency.

### ∘ Y^{C1}

Y^{C1} is a non-hydrocarbon linker.

Y^{C1} is a direct bond or a divalent or higher valent group. Y^{C1} may have a valence of 2 to 4, 2 or 3, or 2. It is preferable that Y^{C1} is not limited to direct bond.

Y^{C1} may have a molecular weight of 10 or more, 50 or more, 100 or more, 200 or more, 300 or more, or 500 or more. Y^{C1} may have a molecular weight of 2,000 or less, 1,500 or less, 1,000 or less, 750 or less, or 500 or less.

Y^{C1} may be composed of one or more selected from the group consisting of a direct bond, -O-, -C(=O)-, - S(=O)₂-, -NR'-, -C(OR')R'-, and -C(OR') (-)₂, (wherein R' is independently at each occurrence a hydrogen atom or a hydrocarbon group having 1 to 30 (for example, 1 to 20, 1 to 10, or 1 to 4) carbon atoms). Examples of Y^{C1} include: a direct bond,
-O-,
-O-C(=O)-,
-O-C(=O)-O-,
-O-C(=O)-NR'-,
-NR'-,
-NR'-C(=O)-,
-NR'-C(=O)-O-,
-NR'-C(=O)-NR'-,
-C(=O)-,
-C(=O)-O-,
-C(=O)-NR'-,
-SO₂-,
-SO₂NR'-,
-C(OR')R'-,
-C(OR')(-)₂
wherein R' is independently at each occurrence a hydrogen atom or a hydrocarbon group having 1 to 30 (for example, 1 to 20, 1 to 10, or 1 to 4) carbon atoms.

Y^{C1} may include at least an amide group, a urethane group, a urea group, an imide group, a thioamide group, a thiourethane group, a thiourea group, a thioimide group, a sulfone amide group, a sulfone urea group, a sulfone urethane group or a sulfone imide group. For example, Y^{C1} may include -C(=O)-NR'-, -O-C(=O)-NR'-, -NR'-C(=O)-, - NR'-C(=O)-NR'- or -SO₂NR'-. Inclusion of these groups in Y^{C} may improve liquid repellency.

### o Y^{C2}

Y^{C2} is a hydrocarbon optionally having a substituent, a hydrocarbon aromatic ring optionally having a substituent or a heterocyclic linker optionally having a substituent.

Y^{C2} may be a hydrocarbon group or a non-hydrocarbon group (including a heteroatom). Y^{C2} may be aliphatic or aromatic. Y^{C2} may be linear, branched or cyclic.

Y^{C2} is a divalent or higher valent group. Y^{C2} may have a valence of, for example, 2 to 4, 2 or 3, or 2.

Y^{C2} may have 1 or more, 2 or more, 3 or more, 4 or more, 6 or more, 8 or more, 10 or more, 12 or more, 14 or more, 16 or more, or 18 or more carbon atoms. Y^{C2} may have 40 or less, 35 or less, 30 or less, 25 or less, 20 or less, 15 or less, 10 or less, or 5 or less carbon atoms.

Y^{C2} is composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms. The aliphatic hydrocarbon having 1 to 40 carbon atoms may have 35 or less, 30 or less, 25 or less, 20 or less, 15 or less, 10 or less, or 5 or less carbon atoms. The aliphatic hydrocarbon group may have a valence of 2 or more, 3 or more, or 4, and 4 or less, 3 or less, or 2.

The aliphatic hydrocarbon group may have a substituent. Examples of substituents include -OR', - N(R')₂, -COOR', and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more. In the aliphatic hydrocarbon group having a substituent, the amount of carbon atom relative to the amount of carbon atom and heteroatom may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene and coronene. The number of ring constituting atom of the hydrocarbon aromatic ring is 3 to 20, 4 to 16, or 5 to 12, and preferably 5 to 12. The hydrocarbon aromatic ring may have a valence of 2 or more, 3 or more, or 4, and 4 or less, 3 or less, or 2.

The hydrocarbon aromatic ring may have a substituent. Examples of substituents include -R', -OR', -N(R')₂, -COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon aromatic ring having a substituent, the amount of carbon atom relative to the carbon atom and the heteroatom may be 70 mol% or more, 80 mol% or more, 90 mol% or more, 95 mol% or more, or 99 mol% or more, and is preferably 75 mol% or more. In the hydrocarbon aromatic ring having a substituent, the amount of carbon atom relative to the amount of carbon atom and heteroatom may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline and the like. The number of ring constituting atom of the heterocyclic ring is 3 to 20, 4 to 16, or 5 to 12 and preferably 5 to 12. A valence of the heterocyclic ring may be 2 or more, 3 or more, or 4, and may be 4 or less, 3 or less, or 2.

The heterocyclic ring may have a substituent. Examples of substituents include -R', -OR', -N(R')₂, - COOR' and a halogen atom (wherein R' is independently at each occurrence a hydrogen atom or hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the carbon atom and the heteroatom may be 60 mol% or more, 70 mol% or more, 80 mol% or more, 90 mol% or more, 95 mol% or more, or 99 mol% or more, and for example, 65 mol% or more. In the heterocyclic ring having a substituent, the amount of carbon atom relative to the amount of carbon atom and heteroatom may be 95 mol% or less, 90 mol% or less, 85 mol% or less, 80 mol% or less, or 70 mol% or less.

Examples of Y^{C2} include
-Ali-
-Cy-
- Ali(-)₂
-Cy(-)₂
(-)₂Ali-
(-)₂Cy-
(-)₂Ali(-)₂
(-)₂Cy(-)₂
-Ali-Cy-
-Cy-Ali-
-Cy-Ali-Cy- and
-Ali-Cy-Ali-
[wherein Ali is an aliphatic hydrocarbon group having 1 to 20 carbon atoms and Cy is a hydrocarbon aromatic ring or a heterocyclic ring].

Specific examples of Y^{C2} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

### (Example of Y^{C})

Examples of Y^{C} will be described. In the following, R' is independently at each occurrence a hydrogen atom or a hydrocarbon group having 1 to 30 (for example, 1 to 20, 1 to 10, or 1 to 4) carbon atoms.

When Y^{C} is divalent, examples of Y^{C} include -Y^{C1}-, - Y^{C1}-Y^{C2}-, -Y^{C1}-Y^{C2}-Y^{C1}-, -Y^{C1}-Y^{C2}-Y^{C1}-Y^{C2}-, -Y^{C2}-, -Y^{C2}-Y^{C1}-, - Y^{C2}-Y^{C1}-Y^{C2}-, and -Y^{C2}-Y^{C1}-Y^{C2}-Y^{C1}-.

When Y^{C} is trivalent, examples of Y^{C} include -Y^{C1}(-)₂, -Y^{C1}-Y^{C2}(-)₂, -Y^{C1}-(Y^{C2}-)₂, -Y^{C1}-Y^{C2}-Y^{C1}(-)₂, -Y^{C1}-Y^{C2}(-Y^{C1}-)₂, - Y^{C1}-(Y^{C2}-Y^{C1}-)₂, -Y^{C1}-Y^{C2}-Y^{C1}-Y^{C2}(-)₂, -Y^{C1}-Y^{C2}-Y^{C1}-(Y^{C2}-)₂, -Y^{C1}-Y^{C2}-(Y^{C1}-Y^{C2}-)₂, -Y^{C1}-(Y^{C2}-Y^{C1}-Y^{C2}-)₂;
-Y^{C2}(-)₂, -Y^{C2}-Y^{C1}(-)₂, -Y^{C2}-(Y^{C1}-)₂, -Y^{C2}-Y^{C1}-Y^{C2}(-)₂, -Y^{C2}-Y^{C1}(-Y^{C2}-)₂, -Y^{C2}-(Y^{C1}-Y^{C2}-)₂, -Y^{C2}-Y^{C1}-Y^{C2}-Y^{C1}(-)₂, -Y^{C2}-Y^{C1}-Y^{C2}-(Y^{C1}-)₂, -Y^{C2}-Y^{C1}-(Y^{C2}-Y^{C1}-)₂, and -Y^{C2}-(Y^{C1}-Y^{C2}-Y^{C1}-)_{2.}

When Y^{C} is tetravalent, examples of Y^{C} include - Y^{C1}(-)₃, -Y^{C1}-Y^{C2}(-)₃, -Y^{C1}-(Y^{C2}-)₃, -Y^{C1}-Y^{C2}-Y^{C1}(-)₃, -Y^{C1}-Y^{C2}(-Y^{C1}-)₃, -Y^{C1}-(Y^{C2}-Y^{C1}-)₃, -Y^{C1}-Y^{C2}-Y^{C1}-Y^{C2}(-)₃, -Y^{C1}-Y^{C2}-Y^{C1}-(Y^{C2}-)₃, -Y^{C1}-Y^{C2}-(Y^{C1}-Y^{C2}-)₃, -Y^{C1}-(Y^{C2}-Y^{C1}-Y^{C2}-)₃;
-Y^{C2}(-)₃, -Y^{C2}-Y^{C1}(-)₃, -Y^{C2}-(Y^{C1}-)₃, -Y^{C2}-Y^{C1}-Y^{C2}(-)₃, -Y^{C2}-Y^{C1}(-Y^{C2}-)₃, -Y^{C2}-(Y^{C1}-Y^{C2}-)₃, -Y^{C2}-Y^{C1}-Y^{C2}-Y^{C1} (-) ₃, -Y^{C2}-Y^{C1}-Y^{C2}-(Y^{C2}-)₃, -Y^{C2}-Y^{C1}-(Y^{C2}-Y^{C1}-)₃, -Y^{C2}-(Y^{C1}-Y^{C2}-Y^{C1}-)₃.

Preferred examples of Y^{C} include
-Y^{C1}- -Y^{C1}-Y^{C2}-, -Y^{C1}-Y^{C2}-Y^{C1}-, -Y^{C1}-Y^{C2}(-)₂,
-Y^{C2}-, -Y^{C2}-Y^{C1-}, -Y^{C2}-Y^{C1}-Y^{C2}-, -Y^{C2}-Y^{C1}(-)₂.

(Preferred Example of Y^{C})
Preferably Y^{C} may be
-Y^{C11}- or
-Y^{C11}-Y^{C21}-Y^{C12}-
wherein, independently at each occurrence,
Y^{C11} is -O- or -NR'-,
Y^{C21} is a hydrocarbon group having 1 to 40 carbon atoms and
Y^{C12} is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, -C(=O)-, -C(=O)-O-, -C(=O)-NR'-, -SO₂-, - SO₂NR'-, -C(OR')R'- or -C(OR')(-)₂.

Y^{C11} is a non-hydrocarbon linker, and is a direct bond or divalent or higher valent group.

Y^{C11} may have a molecular weight of 2,000 or less, 1,500 or less, 1,000 or less, 750 or less, or 500 or less. Y^{O11} may have a molecular weight of 10 or more, 50 or more, 100 or more, 200 or more, 300 or more, or 500 or more.

Y^{C11} may be a direct bond, -C(=O)-, -C(=O)-NR'- or - C(=S)-NR'-.

Y^{C21} is a divalent hydrocarbon linker, and may be a hydrocarbon group having 1 to 40 carbon atoms.

Y^{C21} may have 1 or more, 2 or more, 3 or more, 4 or more, 6 or more, 8 or more, 10 or more, 12 or more, 14 or more, 16 or more, or 18 or more carbon atoms. Y^{C21} may have 40 or less, 35 or less, 30 or less, 25 or less, 20 or less, 15 or less, 10 or less, or 5 or less carbon atoms.

The hydrocarbon group having 1 to 40 carbon atoms may be cyclic, branched or linear hydrocarbon group, and may be a saturated or unsaturated (e.g., saturated) aliphatic hydrocarbon group.

Specific examples of Y^{C21} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

Y^{C12} may be -O-, -O-C(=O)-, -O-C(=O)-O-, -O-C(=O)-NR'-, -NR'-, -NR'-C(=O)-, -NR'-C(=O)-O-, -NR'-C(=O)-NR'-, -C(=O)-, -C(=O)-O-, -C(=O)-NR'-, -SO₂-, -SO₂NR'-, - C(OR')R'- or -C(OR')(-)₂.

Y^{C12} may include at least an amide group, a urethane group, a urea group, an imide group, a thioamide group, a thiourethane group, a thiourea group, a thioimide group, a sulfone amide group, a sulfone urea group, a sulfone urethane group or a sulfone imide group. For example, Y^{C12} may be -C(=O)-NR'-, -O-C(=O)-NR'-, -NR'-C(=O)-, -NR'-C(=O)-NR'- or -SO₂NR'-. Inclusion of these groups in Y^{C12} may improve liquid repellency.

### (Z^{C})

Z^{C} is a monovalent hydrocarbon group having 1 or more and 40 or less carbon atoms and optionally having a substituent or a monovalent polysiloxane group. The same explanation in the above (Monovalent hydrocarbon group optionally having a substituent) and (Monovalent polysiloxane group) applies.

### [Other modifying groups]

The hydroxy group of polycarboxylic acid may be substituted by a modifying group other than -Y^{C}-Z^{C}ₙ. Examples of modifying groups include an anionic group and/or a cationic group. The anionic group and/or cationic group are as described in [Other modifying groups] in the polyol described above.

### [Production Method]

The modified body of polycarboxylic acid may be produced by reacting a modifying agent including a modifying group (or a precursor structure of the modifying group) with the hydroxy group of polycarboxylic acid.

### (Polycarboxylic acid)

Polycarboxylic acid has two or more carboxyl groups and is a raw material of the modified body of polycarboxylic acid. Polycarboxylic acid has two or more carboxyl groups in the molecule. Polycarboxylic acid may be aliphatic or aromatic, and is preferably aliphatic.

Polycarboxylic acid may be a low molecular weight compound (having a weight average molecular weight of, for example, less than 1,000 or 500 or less) and/or a high molecular weight compound. Polycarboxylic acid may have a weight average molecular weight of 100 or more, 300 or more, 500 or more, 1,000 or more, 3,000 or more, 5,000 or more, 10,000 or more, 30,000 or more, 100,000 or more, 300,000 or more, or 500,000 or more. Polycarboxylic acid may have a weight average molecular weight of 1,000,000 or less, 750,000 or less, 500,000 or less, 300,000 or less, 100,000 or less, 75,000 or less, 50,000 or less, 30,000 or less, 10,000 or less, 5,000 or less, 3,000 or less, 2,000 or less, 1,000 or less, or 500 or less.

Polycarboxylic acid may have 2 or more, 5 or more, 7 or more, 10 or more, 15 or more, 30 or more, 50 or more, or 100 or more carboxyl groups. Polycarboxylic acid may have 3,000 or less, 1,000 or less, 750 or less, 500 or less, 300 or less, 100 or less, 50 or less, 30 or less, or 20 or less carboxyl groups.

The carboxyl group equivalent of polycarboxylic acid may be 20 or more, 40 or more, 60 or more, 80 or more, 100 or more, 120 or more, 150 or more. The carboxyl group equivalent of polycarboxylic acid may be 1,000 or less, 800 or less, 600 or less, 400 or less, 200 or less, 100 or less, or 75 or less. The carboxyl equivalent of the polycarboxylic acid is obtained by dividing the weight average molecular weight of polycarboxylic acid by the number of hydroxyl groups.

Polycarboxylic acid may be a natural product. The natural product may be a high molecular weight natural product, a low molecular weight natural product or a derivative thereof. The above natural product also includes a compound converted from microorganisms.

Polycarboxylic acid may be at least one selected from the group consisting of a dicarboxylic acid, a tricarboxylic acid, a tetracarboxylic acid, a polymer of a carboxyl group-containing compound.

Dicarboxylic acid has two carboxyl groups, and examples thereof include oxalic acid, malonic acid, succinic acid, maleic acid, fumaric acid, adipic acid, phthalic acid, terephthalic acid, malic acid, tartaric acid, aldaric acid and a salt thereof.

Tricarboxylic acid has three carboxyl groups, and examples thereof include citric acid, tricarballylic acid, t-aconitic acid, trimellitic acid and a salt thereof.

Tetracarboxylic acid has four carboxyl groups, and examples thereof include pyromellitic acid and a salt thereof.

The polymer of a carboxyl group-containing compound has five or more carboxyl groups, and examples thereof include alginic acid, gum tragacanth, gum arabic, polyacrylic acid, polymethacrylic acid, polymaleic acid, polyaspartic acid, polyglutamic acid, hyaluronic acid, heparin, xanthan gum, gellan gum, carboxymethyl cellulose alginate, galacturonic acid, mannuronic acid and a salt thereof.

The polycarboxylic acid may be a polymer comprising a repeating unit derived from a compound represented by the following formula:

CH₂=C(-Q)-C(=O)-OH

wherein Q is a hydrogen atom, a monovalent organic group, or a halogen atom.

Q is a hydrogen atom, a monovalent organic group, or a halogen atom other than fluorine.

Q may be a hydrogen atom, a methyl group, a halogen, a substituted or unsubstituted benzyl group, or a substituted or unsubstituted phenyl group. Examples of Q include a hydrogen atom, a methyl group, a fluorine atom, a chlorine atom, a bromine atom, an iodine atom, and a cyano group. Q is preferably a hydrogen atom, a methyl group, or a chlorine atom. Q is particularly preferably a hydrogen atom.

### (Modifying agent)

The modifying agent is preferably a compound which is reactive to polycarboxylic acid and comprises the monovalent hydrocarbon group having 1 or more and 40 or less carbon atoms and optionally having a substituent or the monovalent polysiloxane group described above.

Examples of modifying agents are as follows:

| | |
|---|---|
| Epoxy | (CH₂OCH)CH₂O-Z^{C} |
| Amine | H₂N-Z^{C} |
| Hydroxy | HO-Z^{C} |

[In the formula, Z^{C} is as described above].

Z^{C} in the structure of the above modifying agent may be replaced with any group constituting the modifying group. For example, Z^{C} may be a monovalent hydrocarbon group having 1 or more and 40 or less carbon atoms and optionally having a substituent, and for example, Z^{C} may be -Y^{C}-Z^{C}ₙ.

The modified body of polycarboxylic acid may also be synthesized by reacting polycarboxylic acid and a modifying agent. For example, the modified body of polycarboxylic acid may be produced by forming an ester bond by reacting a modifying agent, which is an epoxy compound, with the carboxy group of polycarboxylic acid. Conditions of the reaction between polycarboxylic acid and the modifying agent may be suitably designed by a person skilled in the art, including use of a catalyst (e.g., acid catalyst and base catalyst) and use of a condensing agent depending on the intended product.

### {Vinyl polymer}

As one example of the liquid-repellent compound, a vinyl polymers will be described. The vinyl polymer is a polymer obtained by polymerization of a vinyl monomer and exhibits liquid repellency.

### [Characteristics]

The vinyl polymer is preferably a compound with carbon of biobased origin. The biobased content is measured in accordance with ASTM D6866. The vinyl polymer may have a biobased content of 20% or more, and is preferably 30% or more, more preferably 50% or more, even more preferably 60% or more, still more preferably 70% or more, and most preferably 80% or more or 90% or more, and for example, 100%. A high biobased content means that the amount of use of fossil resource materials, which are typically petroleum, is small, and a higher biobased content of the vinyl polymer is preferred from that point of view.

The vinyl polymer may have a melting point of 30°C or higher, 40°C or higher, 60°C or higher, 80°C or higher, 100°C or higher, or 120°C or higher, and preferably 40°C or higher. The vinyl polymer may have a melting point of 250°C or lower, 225°C or lower, 200°C or lower, 150°C or lower, 130°C or lower, 120°C or lower, 110°C or lower, 100°C or lower, 80°C or lower, or 50°C or lower.

### [Structure]

The vinyl polymer may have a weight average molecular weight of 3,000 or more, 5,000 or more, 10,000 or more, 30,000 or more, 100,000 or more, 300,000 or more, or 500,000 or more. The vinyl polymer may have a weight average molecular weight of 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, or 5,000 or less. The weight average molecular weight may be measured by GPC in terms of polystyrene.

### (a) Hydrocarbon group-containing monomer

The vinyl polymer may comprise a repeating unit derived from a monomer (a) containing a hydrocarbon group having 6 or more and 40 or less carbon atoms.

The hydrocarbon group which the monomer (a) has may be an aromatic hydrocarbon group or an aliphatic hydrocarbon group, and is preferably an aliphatic hydrocarbon group, and in particular a saturated aliphatic hydrocarbon group (an alkyl group). The hydrocarbon group is branched or linear, and preferably linear. The hydrocarbon group may be saturated or unsaturated. The hydrocarbon group is preferably a saturated aliphatic hydrocarbon group (alkyl group). The hydrocarbon group may have 6 or more, 8 or more, 10 or more, 12 or more, 14 or more, 16 or more, 18 or more, 20 or more, or 22 or more carbon atoms, and has preferably 10 or more, 12 or more, 14 or more, or 16 or more carbon atoms. The hydrocarbon group may have 40 or less, 35 or less, 30 or less, 25 or less, 20 or less, 15 or less, or 10 or less, and preferably 30 or less, 25 or less, or 20 or less carbon atoms.

The monomer (a) may have an amide group, a urea group, or a urethane group. The hydrocarbon-based monomer may be a combination of a hydrocarbon-based monomer having an amide group, a urea group, or a urethane group and a hydrocarbon-based monomer not having an amide group, a urea group, or a urethane group. When the monomer (a) includes such groups, the effects of the present disclosure may be favorably achieved.

The monomer (a) having a hydrocarbon group having 6 or more and 40 or less carbon atoms is preferably a monomer represented by the following formula:

CH₂=C(-X^{a})-C (=O) -Y^{a}(R^{a})ₖ

wherein R^{a} is independently at each occurrence a hydrocarbon group having 6 to 40 carbon atoms,
X^{a} is a hydrogen atom, a monovalent organic group, or a halogen atom,
Y^{a} is a group composed of at least one selected from a divalent to tetravalent hydrocarbon group having 1 carbon atom (in particular, -CH₂- and -CH=), -C₆H₄-, -O-, -C(=O)-, -S(=O)₂-, and -NH- (excluding a hydrocarbon group), and
k is 1 to 3].

X^{a} may be a hydrogen atom, a methyl group, a halogen excluding a fluorine atom, a substituted or non-substituted benzyl group, or a substituted or non-substituted phenyl group. Examples of X^{a} include a hydrogen atom, a methyl group, a chlorine atom, a bromine atom, an iodine atom and a cyano group. X^{a} is preferably a hydrogen atom, a methyl group or a chlorine atom. X^{a} is particularly preferably a hydrogen atom.

Y^{a} is a divalent to tetravalent group. Y^{a} is preferably a divalent group.

Y^{a} is preferably a group composed of at least one selected from a hydrocarbon group having 1 carbon atom, - C₆H₄-, -O-, -C(=O)-, -S(=O)₂-, and -NH- (excluding a hydrocarbon group). Examples of hydrocarbon groups having 1 carbon atom include -CH₂-, -CH= having a branched structure, and -C≡ having a branched structure.

Y^{a} may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-,
[wherein Y' is a direct bond, -O-, -NH- or -S(=O)₂-, and R' is -(CH₂)ₘ- in which m is an integer of 1 to 5, or -C₆H₄- (a phenylene group)].

Specific examples of Y^{a} include -O-, -NH-, -O-C(=O)-, -C(=O)-NH-, -NH-C(=O)-, -O-C(=O)-NH-, -NH-C(=O)-O-, -NH-C(=O)-NH-, -O-C₆H₄-, -O-(CH₂)ₘ-O-, -NH-(CH₂)ₘ-NH-, -O- (CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, - O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH-(CH₂)ₘ-NH-C₆H₄-, -NH-(CH₂)ₘ-NH-S(=O)₂-, or -NH-(CH₂)ₘ-S(=O)₂-NH- wherein m is 1 to 5, in particular 2 or 4.

Y^{a} is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂-, - O- (CH₂)ₘ-S(=O)₂-NH-, -NH- (CH₂)ₘ-NH-S(=O)₂-, or -NH-(CH₂)ₘ-S(=O)₂-NH- wherein m is an integer of 1 to 5, in particular 2 or 4. Y^{a} is more preferably -O- or -O-(CH₂)ₘ-NH-C(=O)-, in particular -O-(CH₂)ₘ-NH-C(=O)-.

R^{a} is preferably a linear or branched hydrocarbon group. The hydrocarbon group may particularly be a linear hydrocarbon group. The hydrocarbon group is preferably an aliphatic hydrocarbon group, particularly preferably a saturated aliphatic hydrocarbon group and especially preferably an alkyl group. The hydrocarbon group has preferably 12 to 30, for example 16 to 26 or 15 to 26, and particularly preferably 18 to 22 or 17 to 22 carbon atoms.

Examples of the monomer (a) include:
(a1) a monomer represented by the formula:

   CH₂=C(-X^{a1})-C(=O)-Y^{a1}-R^{a1}

   wherein R^{a1} is a hydrocarbon group having 6 to 40 carbon atoms,
   X^{a1} is a hydrogen atom, a monovalent organic group, or a halogen atom, and
   Y^{a1} is -O- or -NH-, and
(a2) a monomer represented by the formula:

   CH₂=C(-X^{a2})-C (=O)-Y^{a21}-Z(-Y^{a22}-R^{a2})ₙ

   wherein R^{a2} is independently at each occurrence a hydrocarbon group having 6 to 40 carbon atoms,
   X^{a2} is a hydrogen atom, a monovalent organic group, or a halogen atom,
   Y^{a21} is -O- or -NH-,
   Y^{a22} is independently at each occurrence a direct bond or a group composed of at least one selected from - O-, -C(=O)-, -S(=O)₂-, -NH-, and -CH₂-,
   Z is a direct bond or a divalent or trivalent hydrocarbon group having 1 to 5 carbon atoms, and
   n is 1 or 2.

### (a1) Monomer

The monomer (a1) is a compound represented by the formula:

CH₂=C(-X^{a1})-C (=O)-Y^{a1}-R^{a1}

wherein R^{a1} is a hydrocarbon group having 6 to 40 carbon atoms,
X^{a1} is a hydrogen atom, a monovalent organic group, or a halogen atom, and
Y^{a1} is -O- or -NH-.

The monomer (a1) is a long-chain acrylate ester monomer in which Y^{a1} is -O-, or a long-chain acrylamide monomer in which Y^{a1} is -NH-.

R^{a1} is preferably an aliphatic hydrocarbon group, particularly preferably a saturated aliphatic hydrocarbon group and especially preferably an alkyl group. In R^{a1}, the hydrocarbon group preferably has 12 to 30, for example 16 to 26, and particularly preferably 18 to 22 carbon atoms.

X^{a1} may be a hydrogen atom, a methyl group, a halogen excluding a fluorine atom, a substituted or non-substituted benzyl group, or a substituted or non-substituted phenyl group. X^{a1} is preferably a hydrogen atom, a methyl group or a chlorine atom.

Preferred specific examples of long chain acrylate ester monomers include lauryl (meth)acrylate, stearyl (meth)acrylate, icosyl (meth)acrylate, behenyl (meth)acrylate, stearyl α-chloroacrylate, icosyl α-chloroacrylate and behenyl α-chloroacrylate.

Preferred examples of long-chain acrylamide monomers include stearyl (meth)acrylamide, icosyl (meth)acrylamide, and behenyl (meth)acrylamide.

### (a2) Monomer

The monomer (a2) is a monomer different from the monomer (a1). The monomer (a2) is a (meth)acrylate or a (meth)acrylamide having a group composed of at least one selected from -O-, -C(=O)-, -S(=O)₂-, -NH-, and -CH₂-.

The monomer (a2) may be a compound represented by the formula:

CH₂=C(-X^{a2})-C (=O)-Y^{a21}-Z(-Y^{a22}-R^{a2})ₙ

wherein R^{a2} is independently at each occurrence a hydrocarbon group having 6 to 40 carbon atoms,
X^{a2} is a hydrogen atom, a monovalent organic group, or a halogen atom,
Y^{a21} is -O- or -NH-,
Y^{a22} is each independently a group composed of a direct bond or at least one selected from -O-, -C(=O)-, - S(=O)₂-, -NH-, and -CH₂-,
Z is a direct bond or a divalent or trivalent hydrocarbon group having 1 to 5 carbon atoms, and
n is 1 or 2. Y^{a22} and/or Z need not be a direct bond. Y^{a22} and Z need not both be direct bonds.

R^{a2} is preferably an aliphatic hydrocarbon group, particularly preferably a saturated aliphatic hydrocarbon group, and especially preferably an alkyl group. In R^{a2}, the hydrocarbon group has preferably 12 to 30, for example 16 to 26 or 15 to 26, and particularly preferably 18 to 22 or 17 to 22 carbon atoms.

X^{a2} may be a hydrogen atom, a methyl group, a halogen atom other than fluorine, a substituted or unsubstituted benzyl group, or a substituted or unsubstituted phenyl group. X^{a2} is preferably a hydrogen atom, a methyl group, or a chlorine atom.

Y^{a22} may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-,
wherein Y' is each independently a direct bond, -O-, -NH-, or -S(=O)₂-, and
R' is -(CH₂)ₘ- in which m is an integer of 1 to 5, a linear hydrocarbon group having 1 to 5 carbon atoms and having an unsaturated bond, a hydrocarbon group having 1 to 5 carbon atoms and having a branched structure, or - (CH₂)₁-C₆H₄-(CH₂)₁- in which l is each independently an integer of 0 to 5 and -C₆H₄- is a phenylene group.

Specific examples of Y^{a22} include a direct bond, -O-, -NH-, -O-C(=O)-, -C(=O)-O-, -C(=O)-NH-, -NH-C(=O)-, -NH-S(=O)₂-, -S(=O)₂-NH-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O- (CH₂)ₘ-O-C(=O)-, -O-(CH₂)ₘ-C(=O)-O-, -NH- (CH₂)ₘ-O-C(=O)-, -NH- (CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, - O- (CH₂)ₘ-O-C₆H₄-, -NH- (CH₂)ₘ-O-C(=O)-NH-, -NH- (CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘO-C₆H₄-, and -NH-(CH₂)ₘ-NH-C₆H₄- wherein m is an integer of 1 to 5.

Y^{a22} is preferably -O-, -NH-, -O-C(=O)-, -C(=O)-O-, - C(=O)-NH-, -NH-C(=O)-, -NH-S(=O)₂-, -S(=O)₂-NH-, -O-C (=O) -NH-, -NH-C (=O) -O-, -NH-C (=O) -NH-, or -O-C₆H₄-. Y^{a22} is more preferably -NH-C(=O)-, -C(=O)-NH-, -O-C(=O)-NH-, -NH-C(=O)-O-, or -NH-C(=O)-NH-. Y^{a22} need not be a direct bond.

Z is a direct bond or a divalent or trivalent hydrocarbon group having 1 to 5 carbon atoms, and may have a linear structure or a branched structure. Z preferably has 2 to 4, particularly preferably 2 carbon atoms. Specific examples of Z include a direct bond, - CH₂-, -CH₂CH₂-, -CH₂CH₂CH₂-, -CH₂CH₂CH₂CH₂-, - CH₂CH₂CH₂CH₂CH₂-, -CH₂CH= having a branched structure, - CH₂(CH-)CH₂- having a branched structure, -CH₂CH₂CH= having a branched structure, -CH₂CH₂CH₂CH₂CH= having a branched structure, -CH₂CH₂(CH-)CH₂- having a branched structure, and -CH₂CH₂CH₂CH= having a branched structure. Z need not be a direct bond.

The monomer (a2) is preferably CH₂=C(-X^{a2})-C (=O) -O-(CH₂)ₘ-NH-C(=O) -R^{a2}, CH₂=C(-X²²) -C (=O)-O-(CH₂)ₘ-O-C(=O)-NH-R^{a2}, CH₂=C(-X^{a2})-C (=O)-O-(CH₂)ₘ-NH-C(=O)-O-R^{a2}, or CH₂=C(-X^{a2})-C (=O)-O-(CH₂)ₘ-NH-C(=O) -NH-R^{a2} wherein R^{a2} and X^{a2} are as described above.

The monomer (a2) is particularly preferably CH₂=C(-X^{a2})-C(=O) -O-(CH₂)ₘ-NH-C(=O) -R^{a2}.

The monomer (a2) may be produced by reacting hydroxyalkyl (meth)acrylate or hydroxyalkyl (meth)acrylamide with long chain alkyl isocyanate. Examples of long chain alkyl isocyanate include lauryl isocyanate, myristyl isocyanate, cetyl isocyanate, stearyl isocyanate, oleyl isocyanate and behenyl isocyanate.

The monomer (a2) may also be produced by reacting (meth)acrylate having an isocyanate group in the side chain, such as 2-methacryloyloxyethyl methacrylate, with long chain alkylamine or long chain alkyl alcohol. Examples of long chain alkylamine include laurylamine, myristylamine, cetylamine, stearylamine, oleylamine and behenylamine. Examples of long chain alkyl alcohol include lauryl alcohol, myristyl alcohol, cetyl alcohol, stearyl alcohol, oleyl alcohol and behenyl alcohol.

Preferred examples of monomers (a) are as follows:
stearyl (meth)acrylate, behenyl (meth)acrylate, stearyl α-chloroacrylate, and behenyl α-chloroacrylate;
stearyl (meth)acrylamide and behenyl (meth)acrylamide; 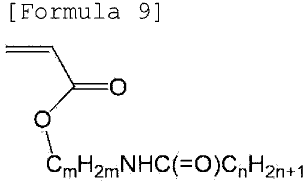 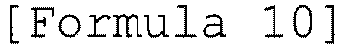 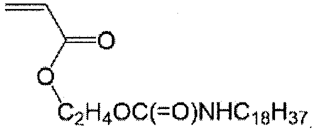 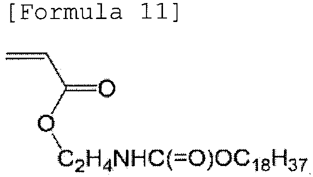 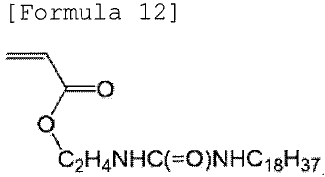 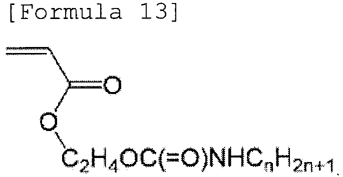 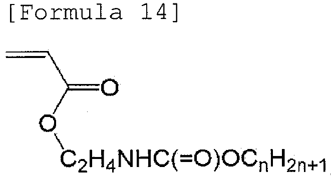 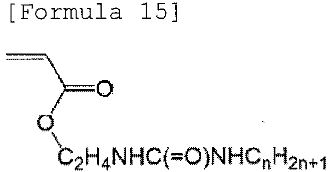 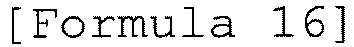 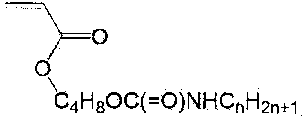 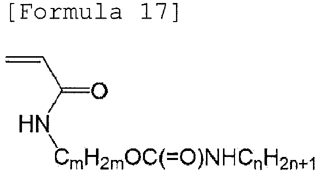 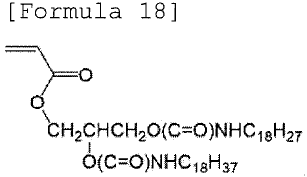 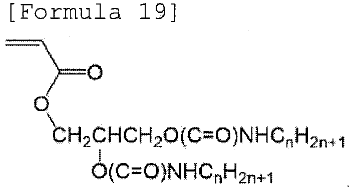 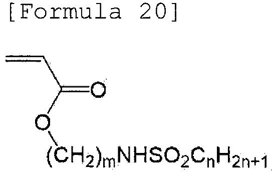 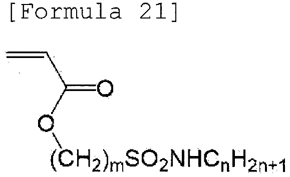
wherein n is a number of 6 to 40, and m is a number of 1 to 5.

The compounds of the above formula are an acrylic compound having a hydrogen atom at the α position, and specific examples thereof may also include a methacrylic compound having a methyl group at the α position and an α-chloroacrylic compound having a chlorine atom at the α position.

The monomer (a2) is preferably an amide group-containing monomer represented by the formula:

R^{a22}-C(=O) -NH-R^{a23}-O-R^{a21}

wherein R^{a21} is an organic residue having an ethylenically unsaturated polymerizable group,
R^{a22} is a hydrocarbon group having 6 to 40 carbon atoms, and
R^{a23} is a hydrocarbon group having 1 to 5 carbon atoms.

R^{a21} is an organic residue having an ethylenically unsaturated polymerizable group, and is not limited as long as it has a carbon-carbon double bond. Specific examples include an organic residue having an ethylenically unsaturated polymerizable group, such as - C (=O) CR^{a111}=CH₂, -CHR^{a111}=CH₂ and -CH₂CHR^{a111}=CH₂, in which R^{a211} is a hydrogen atom or an alkyl group having 1 to 4 carbon atoms. R^{a21} may have various organic groups other than the ethylenically unsaturated polymerizable group, including, for example, an organic group such as chain hydrocarbon, cyclic hydrocarbon, a polyoxyalkylene group and a polysiloxane group. These organic groups may be substituted by a substituent. R^{a21} is preferably - C (=O)CR^{a211}=CH₂.

R^{a22} is a hydrocarbon group having 6 or more and 40 or less carbon atoms, preferably an alkyl group, and examples thereof include a chain hydrocarbon group and a cyclic hydrocarbon group. Among these, a chain hydrocarbon group is preferred, and a linear saturated hydrocarbon group is particularly preferred. R^{a22} has 6 or more and 40 or less, preferably 11 to 27, and particularly preferably 15 to 23 carbon atoms.

R^{a23} is a hydrocarbon group having 1 to 5 carbon atoms, preferably an alkyl group. The hydrocarbon group having 1 to 5 carbon atoms may be linear or branched, and may have an unsaturated bond, and is preferably linear. R^{a23} preferably has 2 to 4, and particularly preferably 2 carbon atoms. R^{a23} is preferably an alkylene group.

The amide group-containing monomer may be a monomer with only one type of R^{a22} (e.g., a compound with only R^{a22} having 17 carbon atoms), or a monomer in which more than one R^{a22}'s are combined (e.g., a mixture of a compound with R^{a22} having 17 carbon atoms and a compound with R^{a22} having 15 carbon atoms).

Examples of the amide group-containing monomer include carboxylic acid amide alkyl (meth)acrylate.

Specific examples of amide group-containing monomers include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethyl amide (meth)acrylate, oleic acid ethylamide (meth)acrylate, t-butyl cyclohexylcaproic acid amide ethyl (meth)acrylate, adamantanecarboxylic acid ethylamide (meth)acrylate, naphthalenecarboxylic acid amide ethyl (meth)acrylate, anthracenecarboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether and a mixture thereof.

It is preferable that the amide group-containing monomer is stearic acid amide ethyl (meth)acrylate. The amide group-containing monomer may be a mixture containing stearic acid amide ethyl (meth)acrylate. The amount of stearic acid amide ethyl (meth)acrylate in the mixture containing stearic acid amide ethyl (meth)acrylate may be, for example, 40% by weight or more, 50% by weight or more, 60% by weight or more, or 70% by weight or more based on the total weight of the amide group-containing monomers. The amount of stearic acid amide ethyl (meth)acrylate may be 90% by weight or less, 80% by weight or less, or 70% by weight or less based on the total weight of the amide group-containing monomers. The rest of the monomers may be, for example, palmitic acid amide ethyl (meth)acrylate.

The amount of the monomer (a2) in the monomer (a) may be 10% by weight or more, 20% by weight or more, 30% by weight or more, 40% by weight or more, 50% by weight or more, 60% by weight or more, 70% by weight or more, or 80% by weight or more, and is preferably 30% by weight or more.

### (b) Hydrophilic group-containing monomer

The vinyl polymer may comprise a hydrophilic group-containing monomer (b). The monomer (b) is different from the monomer (a), and has a hydrophilic group. The hydrophilic group is preferably an oxyalkylene group (in which the alkylene group has 2 to 6 carbon atoms), and particularly preferably an oxyethylene group. The monomer (b) is preferably oxyalkylene (meth)acrylate, for example, polyalkylene (or monoalkylene) glycol mono(meth)acrylate and/or polyalkylene (or monoalkylene) glycol di(meth)acrylate, polyalkylene (or monoalkylene) glycol mono(meth)acrylamide.

The monomer (b) is preferably oxyalkylene (meth)acrylate represented by the formula:

CH₂=CX^{b}C(=O) -Y^{b}-(R^{b}O)ₙ-A^{b}

wherein X^{b} is a hydrogen atom or a methyl group,
Y^{b} is -O- or -NH-,
R^{b} is each independently an alkylene group having 2 to 6 carbon atoms,
A^{b} is a hydrogen atom, an unsaturated or saturated hydrocarbon group having 1 to 22 carbon atoms or CH₂=CX^{b}C(=O)-, and
n is an integer of 1 to 90.

Examples of monomer (b) are preferably those represented by the formula (monomer (b1), monomer (b2), monomer (b3), respectively):

CH₂=CX^{b}C(=O)-O-(R^{b}O)ₙ-A^{bi} (bl)

CH₂=CX^{b}C(=O)-O-(R^{b}O)ₙ-C(=O)CX^{b}=CH₂ (b2),

or

CH₂=CX^{b}C(=O)-NH- (R^{b}O)ₙ-A^{bi} (b3),

[wherein
X^{b} is each independently a hydrogen atom or a methyl group,
R^{b} is each independently an alkylene group having 2 to 6 carbon atoms
A^{bi} is each independently a hydrogen atom or an unsaturated or saturated hydrocarbon group having 1 to 22 carbon atoms, and
n is an integer of 1 to 90.]

n is, for example, 1 to 50, in particular 1 to 30, especially 1 to 15 or 2 to 15. Or, n may be, for example, 1.

R^{b} may be a linear or branched alkylene group, and may be, for example, a group represented by the formula - (CH₂)ₓ- or -(CH₂)ₓ₁-(CH(CH₃))ₓ₂- wherein x1 and x2 are 0 to 6, for example, 2 to 5, and the sum of x1 and x2 is 1 to 6, and the order of -(CH₂)ₓ₁- and -(CH(CH₃))ₓ₂- is not limited to the order in the formula described, and may be random.

In -(R^{b}O)ₙ-, there may be 2 or more types of Rs (e.g., 2 to 4 types, in particular, 2 types). -(R^{b}O)ₙ-may be, for example, a combination of -(R^{l}O)ₙ₁- and - (R²O)ₙ₂- wherein R¹ and R² are different from each other and are an alkylene group having 2 to 6 carbon atoms, n1 and n2 are a number of 1 or more, and the sum of n1 and n2 is 2 to 90.

In the formula (b1), (b2) and (b3), R^{b} is preferably an ethylene group, a propylene group or a butylene group, and particularly preferably a butylene group. In the formula (b1), (b2) and (b3), R^{b} may be a combination of two or more alkylene groups. In that case, at least one R is preferably an ethylene group, propylene group or a butylene group. Examples of combinations of R^{b} include a combination of an ethylene group/ a propylene group, a combination of an ethylene group/ a butylene group and a combination of a propylene group/ a butylene group. The monomer (b) may be a mixture of two or more. In that case, at least one of the monomer (b) is preferably a monomer in which R^{b} in the formula (b1), (b2) and (b3) is an ethylene group, a propylene group or a butylene group. When polyalkylene glycol di(meth)acrylate represented by the formula (b2) is used, using only polyalkylene glycol di(meth)acrylate as the monomer (b) is not preferred, and using it together with the monomer (b1) is preferred. Even in that case, it is preferable to keep the proportion of the compound represented by the formula (b2) at less than 30% by weight in the monomers (b) used.

Specific examples of monomers (b) include, but are not limited to, the following monomers:
CH₂=CHCOO-CH₂CH₂O-H
CH₂=CHCOO-CH₂CH₂CH₂O-H
CH₂=CHCOO-CH₂CH(CH₃)O-H
CH₂=CHCOO-CH(CH₃)CH₂O-H
CH₂=CHCOO-CH₂CH₂CH₂CH₂O-H
CH₂=CHCOO-CH₂CH₂CH(CH₃)O-H
CH₂=CHCOO-CH₂CH(CH₃)CH₂O-H
CH₂=CHCOO-CH(CH₃)CH₂CH₂O-H
CH₂=CHCOO-CH₂CH(CH₂CH₃)O-H
CH₂=CHCOO-CH₂C(CH₃)₂O-H
CH₂=CHCOO-CH(CH₂CH₃)CH₂O-H
CH₂=CHCOO-C(CH₃)₂CH₂O-H
CH₂=CHCOO-CH(CH₃)CH (CH₃)O-H
CH₂=CHCOO-C(CH₃)(CH₂CH₃)O-H
CH₂=CHCOO-(CH₂CH₂O)₂-H
CH₂=CHCOO-(CH₂CH₂O)₄-H
CH₂=CHCOO-(CH₂CH₂O)₅-H
CH₂=CHCOO-(CH₂CH₂O)₆-H
CH₂=CHCOO-(CH₂CH₂O)₅-CH₃
CH₂=CHCOO-(CH₂CH₂O)₉-CH₃
CH₂=CHCOO-(CH₂CH₂O)₂₃-CH₃
CH₂=CHCOO-(CH₂CH₂O)₉₀-CH₃
CH₂=CHCOO-(CH₂CH(CH₃)O)₉-H
CH₂=CHCOO-(CH₂CH(CH₃)O)₉-CH₃
CH₂=CHCOO-(CH₂CH(CH₃)O)₁₂-CH₃
CH₂=CHCOO-(CH₂CH₂O)₅-(CH₂CH(CH₃)O)₂-H
CH₂=CHCOO-(CH₂CH₂O)₅-(CH₂CH(CH₃)O)₃-CH₃
CH₂=CHCOO-(CH₂CH₂O)₈-(CH₂CH(CH₃)O)₆-CH₂CH(C₂H₅)C₄H₉
CH₂=CHCOO-(CH₂CH₂O)₂₃-OOC(CH₃)C=CH₂
CH₂=CHCOO-(CH₂CH₂O)₂₀-(CH₂CH(CH₃)O)₅-CH₂-CH=CH₂
CH₂=CHCOO-(CH₂CH₂O)₉-H
CH₂=C(CH₃)COO-CH₂CH₂O-H
CH₂=C(CH₃)COO-CH₂CH₂CH₂O-H
CH₂=C(CH₃)COO-CH₂CH(CH₃)O-H
CH₂=C(CH₃)COO-CH (CH₃)CH₂O-H
CH₂=C(CH₃)COO-CH₂CH₂CH₂CH₂O-H
CH₂=C(CH₃)COO-CH₂CH₂CH(CH₃)O-H
CH₂=C(CH₃)COO-CH₂CH(CH₃)CH₂O-H
CH₂=C(CH₃)COO-CH (CH₃)CH₂CH₂O-H
CH₂=C(CH₃)COO-CH₂CH(CH₂CH₃)O-H
CH₂=C(CH₃)COO-CH₂C(CH₃)₂O-H
CH₂=C(CH₃)COO-CH (CH₂CH₃)CH₂O-H
CH₂=C(CH₃)COO-C (CH₃)₂CH₂O-H
CH₂=C(CH₃)COO-CH (CH₃)CH (CH₃)O-H
CH₂=C(CH₃)COO-C (CH₃)(CH₂CH₃)O-H
CH₂=C(CH₃)COO- (CH₂CH₂O)₂-H
CH₂=C(CH₃)COO- (CH₂CH₂O)₄-H
CH₂=C(CH₃)COO- (CH₂CH₂O)₅-H
CH₂=C(CH₃)COO- (CH₂CH₂O)₆-H
CH₂=C(CH₃)COO- (CH₂CH₂O)₉-H
CH₂=C(CH₃)COO- (CH₂CH₂O)₅-CH₃
CH₂=C(CH₃)COO- (CH₂CH₂O)₉-CH₃
CH₂=C(CH₃)COO- (CH₂CH₂O)₂₃-CH₃
CH₂=C(CH₃)COO- (CH₂CH₂O)₉₀-CH₃
CH₂=C(CH₃)COO-(CH₂CH(CH₃)O)₉-H
CH₂=C(CH₃)COO-(CH₂CH(CH₃)O)₉-CH₃
CH₂=C(CH₃)COO-(CH₂CH(CH₃)O)₁₂-CH₃
CH₂=C(CH₃)COO- (CH₂CH₂O)₅-(CH₂CH(CH₃)O) ₂-H
CH₂=C(CH₃)COO- (CH₂CH₂O)₅-(CH₂CH(CH₃)O)₃-CH₃
CH₂=C(CH₃)COO- (CH₂CH₂O)₈-(CH₂CH(CH₃)O)₆-CH₂CH(C₂H₅)C₄H₉
CH₂=C(CH₃)COO- (CH₂CH₂O)₂₃-OOC(CH₃)C=CH₂
CH₂=C(CH₃)COO- (CH₂CH₂O)₂₀-(CH₂CH(CH₃)O)₅-CH₂-CH=CH₂
CH₂=CH-C(=O) -NH-CH₂CH₂O-H
CH₂=CH-C(=O) -NH-CH₂CH₂CH₂O-H
CH₂=CH-C(=O) -NH-CH₂CH(CH₃)O-H
CH₂=CH-C(=O) -NH-CH (CH₃)CH₂O-H
CH₂=CH-C(=O) -NH-CH₂CH₂CH₂CH₂O-H
CH₂=CH-C(=O) -NH-CH₂CH₂CH(CH₃)O-H
CH₂=CH-C(=O) -NH-CH₂CH(CH₃)CH₂O-H
CH₂=CH-C(=O) -NH-CH (CH₃)CH₂CH₂O-H
CH₂=CH-C(=O) -NH-CH₂CH(CH₂CH₃)O-H
CH₂=CH-C(=O) -NH-CH₂C(CH₃)₂O-H
CH₂=CH-C(=O) -NH-CH (CH₂CH₃)CH₂O-H
CH₂=CH-C(=O) -NH-C (CH₃)₂CH₂O-H
CH₂=CH-C(=O) -NH-CH (CH₃)CH (CH₃)O-H
CH₂=CH-C(=O) -NH-C (CH₃)(CH₂CH₃)O-H
CH₂=CH-C(=O) -NH- (CH₂CH₂O)₂-H
CH₂=CH-C(=O)-NH- (CH₂CH₂O)₄-H
CH₂=CH-C(=O)-NH- (CH₂CH₂O)₅-H
CH₂=CH-C(=O)-NH- (CH₂CH₂O)₆-H
CH₂=CH-C(=O) -NH- (CH₂CH₂O)₉-H
CH₂=CH-C(=O)-NH- (CH₂CH₂O)₅-CH₃
CH₂=CH-C(=O)-NH- (CH₂CH₂O)₉-CH₃
CH₂=CH-C(=O)-NH- (CH₂CH₂O)₂₃-CH₃
CH₂=CH-C(=O)-NH-(CH₂CH₂O)₉₀-CH₃
CH₂=CH-C(=O)-NH-(CH₂CH(CH₃)O)₉-H
CH₂=CH-C(=O)-NH-(CH₂CH(CH₃)O)₉-CH₃
CH₂=CH-C(=O)-NH-(CH₂CH(CH₃)O)₁₂-CH₃
CH₂=CH-C(=O)-NH-(CH₂CH₂O)₅-(CH₂CH(CH₃)O)₂-H
CH₂=CH-C(=O)-NH-(CH₂CH₂O)₅-(CH₂CH(CH₃)O)₃-CH₃
CH₂=CH-C(=O)-NH-(CH₂CH₂O)₆-(CH₂CH(CH₃)O)₆-CH₂CH(C₂H₅)C₄H₉
CH₂=C(CH₃)-C(=O)-NH-CH₂CH₂O-H
CH₂=C(CH₃)-C(=O)-NH-CH₂CH₂CH₂O-H
CH₂=C(CH₃)-C(=O)-NH-CH₂CH(CH₃)O-H
CH₂=C(CH₃)-C(=O)-NH-CH(CH₃)CH₂O-H
CH₂=C(CH₃)-C(=O)-NH-CH₂CH₂CH₂CH₂O-H
CH₂=C(CH₃)-C(=O)-NH-CH₂CH₂CH(CH₃)O-H
CH₂=C(CH₃)-C(=O)-NH-CH₂CH(CH₃)CH₂O-H
CH₂=C(CH₃)-C(=O)-NH-CH(CH₃)CH₂CH₂O-H
CH₂=C(CH₃)-C(=O)-NH-CH₂CH(CH₂CH₃)O-H
CH₂=C(CH₃)-C(=O)-NH-CH₂C(CH₃)₂O-H
CH₂=C(CH₃)-C(=O)-NH-CH(CH₂CH₃)CH₂O-H
CH₂=C(CH₃)-C(=O)-NH-C(CH₃)₂CH₂O-H
CH₂=C(CH₃)-C(=O)-NH-CH(CH₃)CH(CH₃)O-H
CH₂=C(CH₃)-C(=O)-NH-C(CH₃)(CH₂CH₃)O-H
CH₂=C(CH₃)-C(=O)-NH-(CH₂CH₂O)₂-H
CH₂=C(CH₃)-C(=O)-NH-(CH₂CH₂O)₄-H
CH₂=C(CH₃)-C(=O)-NH-(CH₂CH₂O)₅-H
CH₂=C(CH₃)-C(=O)-NH-(CH₂CH₂O)₆-H
CH₂=C(CH₃)-C(=O)-NH- (CH₂CH₂O)₉-H
CH₂=C(CH₃)-C(=O)-NH-(CH₂CH₂O)₅-CH₃
CH₂=C(CH₃)-C(=O)-NH-(CH₂CH₂O)₉-CH₃
CH₂=C(CH₃)-C(=O)-NH-(CH₂CH₂O)₂₃-CH₃
CH₂=C(CH₃)-C(=O)-NH-(CH₂CH₂O)₉₀-CH₃
CH₂=C(CH₃)-C(=O)-NH-(CH₂CH(CH₃)O)₉-H
CH₂=C(CH₃)-C(=O)-NH-(CH₂CH(CH₃)O)₉-CH₃
CH₂=C(CH₃)-C(=O)-NH-(CH₂CH(CH₃)O)₁₂-CH₃
CH₂=C(CH₃)-C(=O)-NH-(CH₂CH₂O)₅-(CH₂CH(CH₃)O)₂-H
CH₂=C(CH₃)-C(=O)-NH-(CH₂CH₂O)₅-(CH₂CH(CH₃)O)₃-CH₃
CH₂=C(CH₃)-C(=O)-NH-(CH₂CH₂O)₈-(CH₂CH(CH₃)O)₆-
CH₂CH(C₂H₅)C₄H₉.

Acrylate and acrylamide in which X² is a hydrogen atom are preferred as the monomer (b). The monomer (b) is particularly preferably hydroxyethyl acrylate, hydroxypropyl acrylate, hydroxybutyl acrylate or hydroxyethyl acrylamide.

### (c) Ion-donating group-containing monomer

The vinyl polymer may comprise an ion-donating group-containing monomer (c). The monomer (c) is preferably a monomer containing an olefinic carbon-carbon double bond and an ion-donating group, particularly an acrylic monomer. The ion-donating group is an anion donating group and/or a cation donating group.

Examples of monomers having an anion donating group include a monomer having a carboxyl group, a sulfonic acid group or a phosphate group. Specific examples of monomers having an anion donating group include (meth)acrylic acid, crotonic acid, maleic acid, fumaric acid, itaconic acid, citraconic acid, vinylsulfonic acid, (meth)allylsulfonic acid, styrene sulfonic acid, phosphoric acid (meth)acrylate, vinylbenzene sulfonic acid, acrylamide t-butylsulfonic acid and a salt thereof.

Examples of salts of the anion donating group include alkali metal salt, alkaline earth metal salt, and an ammonium salt such as methyl ammonium salt, ethanol ammonium salt and triethanol ammonium salt.

In the monomer having a cation donating group, examples of cation donating groups include an amino group, which is preferably a tertiary amino group and a quaternary amino group. It is preferable that in the tertiary amino group, two groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., a benzyl group (C₆H₅-CH₂-)). In the tertiary amino group and the quaternary amino group, the last group bonded to the nitrogen atom may have a carbon-carbon double bond. The cation donating group may be in the form of salt.

The cation donating group in the form of salt is a salt with an acid (an organic acid or an inorganic acid). An organic acid such as a carboxylic acid having 1 to 20 carbon atoms (in particular, a monocarboxylic acid such as acetic acid, propionic acid, butyric acid and stearic acid) are preferred. Dimethylaminoethyl methacrylate, diethylaminoethyl methacrylate and a salt thereof are preferred.

Specific examples of monomers having a cation donating are as follows:
CH₂=CHCOO-CH₂CH₂-N(CH₃)₂ and a salt thereof (e.g., acetate)
CH₂=CHCOO-CH₂CH₂-N(CH₂CH₃)₂ and a salt thereof (e.g., acetate)
CH₂=C(CH₃)COO-CH₂CH₂-N(CH₃)₂ and a salt thereof (e.g., acetate)
CH₂=C(CH₃)COO-CH₂CH₂-N(CH₂CH₃)₂ and a salt thereof (e.g., acetate)
CH₂=CHC(O)N(H)-CH₂CH₂CH₂-N(-CH₃)₂ and a salt thereof (e.g., acetate)
CH₂=CHCOO-CH₂CH₂-N(-CH₃)(-CH₂-C₆H₅) and a salt thereof (e.g., acetate)
CH₂=C(CH₃)COO-CH₂CH₂-N(-CH₂CH₃)(-CH₂-C₆H₅) and a salt thereof (e.g., acetate)
CH₂=CHCOO-CH₂CH₂-N⁺(CH₃)₃Cl⁻
CH₂=CHCOO-CH₂CH₂-N⁺(-CH₃)₂(-CH₂-C₆H₃)Cl⁻
CH₂=C(CH₃)COO-CH₂CH₂-N⁺(CH₃)₃Cl⁻
CH₂=CHCOO-CH₂CH(OH)CH₂-N⁺(CH₃)₃Cl⁻
CH₂=C(CH₃)COO-CH₂CH(OH)CH₂-N⁺(CH₃)₃Cl⁻
CH₂=C(CH₃)COO-CH₂CH(OH)CH₂-N⁺(-CH₂CH₃)₂(-CH₂-C₆H₅)Cl⁻
CH₂=C(CH₃)COO-CH₂CH₂-N⁺(CH₃)₃Br⁻
CH₂=C(CH₃)COO-CH₂CH₂-N⁺(CH₃)₃I⁻
CH₂=C(CH₃)COO-CH₂CH₂-N⁺(CH₃)₃O⁻SO₃CH₃
CH₂=C(CH₃)COO-CH₂CH₂-N⁺(CH₃)(-CH₂-C₆H₅)₂Br⁻.

Methacrylic acid, acrylic acid and dimethylaminoethyl methacrylate are preferred, and methacrylic acid and dimethylaminoethyl methacrylate are more preferred as the ion-donating group-containing monomer (c).

### (d) Halogenated olefin monomer

The vinyl polymer may comprise a repeating unit derived from a halogenated olefin monomer (d). The halogenated olefin monomer (d) may not have a fluorine atom. The halogenated olefin monomer (d) is preferably an olefin having 2 to 20 carbon atoms and substituted by 1 to 10 chlorine atoms, bromine atoms or iodine atoms. The halogenated olefin monomer (d) is preferably chlorinated olefin having 2 to 20 carbon atoms, and particularly preferably an olefin having 2 to 5 carbon atoms and 1 to 5 chlorine atoms. Preferred examples of halogenated olefin monomers (d) include halogenated vinyl such as vinyl chloride, vinyl bromide and vinyl iodide, and halogenated vinylidene such as vinylidene chloride, vinylidene bromide and vinylidene iodide. Vinyl chloride and vinylidene chloride are preferred because they increase water-repellency, in particular, durability of water-repellency. The presence of the repeating unit derived from a halogenated olefin monomer (d) improves wash durability provided by the vinyl polymer.

### (e) Cross-linkable monomer

The vinyl polymer may comprise a repeating unit derived from a Cross-linkable monomer (e). the crosslinkable monomer (e) has at least two reactive groups and/or ethylenically unsaturated double bonds (preferably (meth)acrylate groups). The crosslinkable monomer (e) may be a monomer which does not include a fluorine atom. The crosslinkable monomer (e) may be a compound free from fluorine atoms. The cross-linkable monomer (e) may be a compound having at least two ethylenically unsaturated double bonds (preferably a (meth)acrylate group), or a compound having at least one ethylenically unsaturated double bond and at least one reactive group. Examples of reactive groups include a hydroxyl group, an epoxy group, chloromethyl group, a blocked isocyanate group, an amino group and a carboxyl group.

The crosslinkable monomer may be a mono(meth)acrylate, di(meth)acrylate, or di(meth)acrylamide having a reactive group.

One example of the crosslinkable monomer is a vinyl monomer having a reactive group.

Examples of crosslinkable monomers include, but are not limited to, diacetone (meth)acrylamide, 3-chloro-2-hydroxypropyl(meth)acrylate, 2-acetoacetoxyethyl (meth)acrylate, butadiene, isoprene, chloroprene, vinyl monochloroacetate, vinyl methacrylate, glycidyl (meth)acrylate, 1,4-butanediol di(meth)acrylate, 1,6-hexanediol di(meth)acrylate, 1,9-nonanediol di(meth)acrylate and neopentylglycol di(meth)acrylate.

### (f) Cyclic hydrocarbon group-containing monomer

The vinyl polymer may comprise a repeating unit derived from a cyclic hydrocarbon group-containing monomer (f). The cyclic hydrocarbon group-containing monomer (f) has a cyclic hydrocarbon group, and may have an ethylenically unsaturated double bond and a cyclic hydrocarbon group.

The cyclic hydrocarbon group-containing monomer (f) preferably has a (meth)acrylic group as the ethylenically unsaturated double bond, and for example, may have a (meth)acrylate group or a (meth)acrylamide group as the ethylenically unsaturated double bond.

The cyclic hydrocarbon group may be alicyclic or aromatic, and is preferably alicyclic. The cyclic hydrocarbon group may be saturated or unsaturated, and is preferably saturated. The cyclic hydrocarbon group may be a monocyclic group, a polycyclic group, or a bridged ring group, and is preferably a bridged ring group. The cyclic hydrocarbon group may have a chain group (for example, a linear or branched chain hydrocarbon group).

The cyclic hydrocarbon group may have 4 or more, 6 or more, or 8 or more, and 30 or less, 26 or less, 22 or less, 18 or less, or 14 or less carbon atoms.

Specific examples of cyclic hydrocarbon groups include a cyclohexyl group, a t-butylcyclohexyl group, an adamantyl group, a 2-methyl-2-adamantyl group, a 2-ethyl-2-adamantyl group, a bornyl group, an isobornyl group, a norbornyl group, a dicyclopentanyl group, a dicyclopentenyl group, a benzyl group, a phenyl group, a naphthyl group, a 2-t-butylphenyl group, a residue formed by eliminating one or more hydrogen atoms from those groups (e.g., a cyclohexylene group, an adamantylene group, a phenylene group and a naphthylene group), and a substituted group thereof.

Specific examples of cyclic hydrocarbon group-containing monomers include cyclohexyl(meth)acrylate, t-butylcyclohexyl(meth)acrylate, benzyl (meth)acrylate, isobornyl (meth)acrylate, dicyclopentanyl(meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, 2-ethyl-2-adamantyl (meth)acrylate and a compound in which such acrylate is substituted with acrylamide. These may be used alone, or two or more of them may be used in combination.

### (g) Other monomers

Other monomers are not limited to those examples, and include acrylonitrile, organosiloxane-containing (meth)acrylate, short-chain alkyl (meth)acrylate, vinyl acetate, styrene, α-methylstyrene, p-methylstyrene, and vinyl alkyl ether. Other monomers (g) may be used alone, or two or more of them may be used in combination.

### [Composition of polymer]

The combination of the monomers (a) to (g) constituting the repeating unit of the vinyl polymer is not limited, and is for example, as follows (parentheses omitted).
a
b
c $a + b$ $a + b + c$ $a + c$ $a + d$ $a + b + c + d$ $a + b + c + d + e$ $a + b + c + d + e + f$

Other monomers (g) may also be used together with the above combinations. When the vinyl polymer is used for a pulp product, preferably the monomer (a), the monomer (b) and the monomer (c) are used together.

The amount of the repeating unit derived from the monomer (a) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more based on the vinyl polymer.

The amount of the repeating unit derived from the monomer (a) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (b) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more based on the vinyl polymer.

The amount of the repeating unit derived from the monomer (b) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (b) may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more based on 100 parts by weight of the repeating unit derived from the monomer (a).

The amount of the repeating unit derived from the monomer (b) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by weight of the repeating unit derived from the monomer (a).

The amount of the repeating unit derived from the monomer (c) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more based on the vinyl polymer.

The amount of the repeating unit derived from the monomer (c) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (c) may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more based on 100 parts by weight of the repeating unit derived from the monomer (a).

The amount of the repeating unit derived from the monomer (c) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by weight of the repeating unit derived from the monomer (a).

The amount of the repeating unit derived from the monomer (d) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more based on the vinyl polymer.

The amount of the repeating unit derived from the monomer (d) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (d) may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more based on 100 parts by weight of the repeating unit derived from the monomer (a).

The amount of the repeating unit derived from the monomer (d) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by weight of the repeating unit derived from the monomer (a).

The amount of the repeating unit derived from the monomer (e) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more based on the vinyl polymer.

The amount of the repeating unit derived from the monomer (e) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (e) may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more based on 100 parts by weight of the repeating unit derived from the monomer (a).

The amount of the repeating unit derived from the monomer (e) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by weight of the repeating unit derived from the monomer (a).

The amount of the repeating unit derived from the monomer (f) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more based on the vinyl polymer.

The amount of the repeating unit derived from the monomer (f) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (f) may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more based on 100 parts by weight of the repeating unit derived from the monomer (a).

The amount of the repeating unit derived from the monomer (f) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by weight of the repeating unit derived from the monomer (a).

The amount of the repeating unit derived from the monomer (g) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more based on the vinyl polymer.

The amount of the repeating unit derived from the monomer (g) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (g) may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more based on 100 parts by weight of the repeating unit derived from the monomer (a).

The amount of the repeating unit derived from the monomer (g) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by weight of the repeating unit derived from the monomer (a).

### [Polymerization method]

The vinyl polymer may be polymerized by a known polymerization method, and conditions of polymerization reaction may be optionally selected. Examples of polymerization methods include solution polymerization, suspension polymerization, emulsion polymerization, and condensation polymerization.

Solution polymerization uses a method in which monomer is dissolved in an organic solvent in the presence of a polymerization initiator, and after nitrogen replacement, the mixture is heated and stirred at 30 to 120°C for 1 to 10 hours. Examples of polymerization initiators include azobisisobutyronitrile, benzoyl peroxide, di-t-butyl peroxide, lauryl peroxide, cumene hydroperoxide, t-butyl peroxypivalate and diisopropyl peroxydicarbonate. 0.01 to 20 parts by weight, for example, 0.01 to 10 parts by weight of polymerization initiator is used based on 100 parts by weight of the monomer.

Organic solvents are inert to monomers and dissolves them. Examples thereof include ester (e.g., ester having 2 to 40 carbon atoms such as ethyl acetate and butyl acetate), ketone (e.g., ketone having 2 to 40 carbon atoms such as methyl ethyl ketone, diisobutyl ketone and methyl isobutyl ketone), alcohol (e.g., alcohol having 1 to 40 carbon atoms such as ethanol, butanol and isopropyl alcohol). Specific examples of organic solvents include acetone, chloroform, HCHC-225, isopropyl alcohol, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane and trichlorotrifluoroethane. The organic solvent is used in an amount of 10 to 3,000 parts by weight, for example 50 to 2,000 parts by weight based on 100 parts by weight of the total amount of the monomers.

Emulsion polymerization uses a method in which monomer is emulsified in water in the presence of a polymerization initiator and an emulsifier, and after nitrogen replacement, the monomer is polymerized by stirring at 50 to 80°C for 1 to 20 hours. As the polymerization initiator, a water-soluble initiator such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, sodium peroxide, potassium persulfate and ammonium persulfate, and an oil-soluble initiator such as azobisisobutyronitrile, benzoyl peroxide, di-t-butylperoxide, lauryl peroxide, cumene hydroperoxide, t-butyl peroxypivalate and diisopropyl peroxydicarbonate are used. 0.01 to 10 parts by weight of polymerization initiator is used based on 100 parts by weight of the monomer.

To obtain an aqueous polymer dispersion having excellent standing stability, it is desirable to perform polymerization by forming fine particles of monomers in water by using an emulsification device which can offer high crush energy, such as a high pressure homogenizer and a ultrasonic homogenizer. The emulsifier may be anionic, cationic or nonionic, and 0.5 to 20 parts by weight of the emulsifier may be used based on 100 parts by weight of the monomer. It is preferable to use an anionic and/or nonionic and/or cationic emulsifier. If monomers are not completely dissolved, it is preferable to add a compatibilizer which dissolves the monomers completely, such as a water-soluble organic solvent or a low molecular weight monomer. Addition of the compatibilizer improves emulsifiability and copolymerizability.

The above organic solvent may be used as the aqueous organic solvent. Examples thereof include acetone, methyl ethyl ketone, ethyl acetate, propylene glycol, dipropylene glycol monomethyl ether, dipropylene glycol, tripropylene glycol and ethanol. 1 to 50 parts by weight, for example, 10 to 40 parts by weight of the organic solvent may be used based on 100 parts by weight of water. Examples of low molecular weight monomers include methyl methacrylate, glycidyl methacrylate and 2,2,2-trifluoroethyl methacrylate. 1 to 50 parts by weight, for example, 10 to 40 parts by weight of the low molecular weight monomer may be used based on 100 parts by weight of the total amount of the monomers.

A chain transfer agent may also be used in polymerization. The molecular weight of the polymer can be changed depending on the amount of use of the chain transfer agent. Examples of chain transfer agents include a mercaptan group-containing compound, in particular, alkyl mercaptan having 1 to 40 carbon atoms, such as lauryl mercaptan, thioglycol and thioglycerol, and an inorganic salt such as sodium hypophosphite and sodium hydrogen sulfide. 0.01 to 10 parts by weight, for example, 0.1 to 5 parts by weight of the chain transfer agent may be used based on 100 parts by weight of the total amount of the monomers.

### {Oil}

As one example of the liquid-repellent compound, oil will be described. The oil may be liquid or solid (wax) at room temperature. The oil may be selected from a synthetic oil, a mineral oil, an animal oil, and a vegetable oil. The oil may be a hydrocarbon oil or a non-hydrocarbon oil, and is typically a compound having a higher hydrocarbon structure (for example, having 10 or more, 20 or more, or 30 or more carbon atoms). Hydrocarbon groups that the oil may have are as described above. The oil may be different from the above-described modified body of amine, modified body of polyol, and modified body of polycarboxylic acid. The oil may be a nonvolatile oily compound, and have a boiling point of, for example, 200°C or higher, 250°C or higher, or 300°C or higher.

The oil may have a melting point of -100°C or higher, -75°C or higher, -50°C or higher, 0°C or higher, 30°C or higher, 40°C or higher, 60°C or higher, 80°C or higher, 100°C or higher, or 120°C or higher, and is preferably 40°C or higher, 50°C or higher, 60°C or higher, 70°C or higher, or 80°C or higher, and may be 250°C or lower, 225°C or lower, 200°C or lower, 150°C or lower, 130°C or lower, 120°C or lower, 110°C or lower, 100°C or lower, 80°C or lower, 50°C or lower, 25°C or lower, 0°C or lower, -25°C or lower, -50°C or lower, - 75°C or lower, or -100°C or lower, for example 150°C or lower, 100°C or lower, 50°C or lower, 0°C or lower, or - 50°C or lower. The melting point of the oil may be measured according to JIS K 2235-1991.

The oil may be of low molecular weight (with a molecular weight of, for example, 1,000 or less, or 500 or less) or of high molecular weight. When the oil is a high molecular weight compound, the wax may have a weight average molecular weight of 1,000 or more, 3,000 or more, 5,000 or more, 7,500 or more, 10,000 or more, 30,000 or more, 100,000 or more, 300,000 or more, or 500,000 or more, and 10,000,000 or less, 7,500,000 or less, 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, 7,500 or less, 5,000 or less, or 3,000 or less.

### [Synthetic oil]

The synthetic oil is an oil (oily compound) obtained by chemical synthesis, and may be liquid or solid (wax) at room temperature. Examples of synthetic oils include a hydrocarbon oil, an ester oil, an ether oil, an amide oil, and a silicone oil.

### [Mineral oil]

The mineral oil may be liquid or solid (wax) at room temperature. Examples of mineral oils include petrolatum, liquid paraffin, paraffin wax, microcrystalline wax, montan wax, ozokerite wax, ceresin wax, and petrolatum wax.

### [Vegetable oil and animal oil]

The vegetable oil and the animal oil may be liquid or solid (wax) at room temperature. Examples include soybean oil, hydrogenated soybean oil, rapeseed oil, sunflower oil, safflower oil, peanut oil, corn oil, cottonseed oil, rice bran oil, kapok oil, sesame oil, olive oil, linseed oil, castor oil, jojoba oil, hydrogenated jojoba oil, cocoa butter, palm oil, palm kernel oil, coconut oil, rapeseed seed oil, hydrogenated rapeseed seed oil, hemp seed oil, rice oil, tea seed oil, castor oil, hydrogenated castor oil, sesame oil, fish oil, shark liver oil, squalene oil, squalene, beef tallow, lard (pork fat), mutton tallow, neat's-foot oil, whale oil, salmon oil, bonito oil, herring oil, cod liver oil, a hardened oil or hydrogenated oil thereof; rice wax, carnauba wax, sunflower wax, candelilla wax, Japan wax, beeswax, lanolin, spermaceti wax, Chinese wax; fatty acids such as stearic acid, capric acid, caproic acid, linoleic acid, linolenic acid, palmitic acid, lauric acid, and eleostearic acid; fatty alcohols such as lauryl alcohol, cetostearyl alcohol, stearyl alcohol, cetyl alcohol, and myristyl alcohol; fatty acid esters such as glycerol monostearate, glycerol monooleate, acetylated monoglyceride, tristearin, tripalmitin, and cetyl ester glyceryl palmitostearate; glyceryl behenate; medium-chain triglycerides; and the like.

### {Dispersant}

The oil-resistant agent composition in the present disclosure may comprise a dispersant. The dispersant may be at least one selected from an organic dispersant and an inorganic dispersant. The dispersant may be at least one selected from an anionic dispersant, a nonionic dispersant, a cationic dispersant, an amphoteric dispersant and an inorganic dispersant.

An organic dispersant and an inorganic dispersant may be used as the dispersant, respectively, or an organic dispersant and an inorganic dispersant may be used in combination.

An organic dispersant may be used as the dispersant. The organic dispersant may be classified into a nonionic dispersant, an anionic dispersant, a cationic dispersant and an amphoteric dispersant. The organic dispersant may mean a surfactant.

The dispersant may be free from fluorine.

### [Nonionic dispersant]

The dispersant may comprise a nonionic dispersant. The nonionic dispersant may be a nonionic surfactant.

The nonionic dispersant may be of low molecular weight or of high molecular weight. The nonionic dispersant may have a molecular weight of 100 or more, 500 or more, 1,000 or more, 2,000 or more, 4,000 or more, or 6,000 or more. The nonionic dispersant may have a molecular weight of 100,000 or less, 10,000 or less, 7,500 or less, 5,000 or less, 25,000 or less, 750 or less, or 250 or less.

Examples of nonionic dispersant include ether, ester, ester ether, alkanolamide, polyol and amine oxide.

The ether is, for example, a compound having an oxyalkylene group (preferably a polyoxyethylene group).

The ester is, for example, an ester of an alcohol and a fatty acid. The alcohol is, for example, an alcohol which is 1 to 30 hydric (particularly dihydric to decahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is 1 to 30 hydric (particularly dihydric to decahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5 hydroxyl groups, having 2 to 50, particularly 5 to 30 carbon atoms.

The polyol may be, for example, a dihydric to pentahydric alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.

The nonionic dispersant is selected from the group consisting of an ether, an ester, an ester ether, an alkanolamide, a polyol and an amine oxide, and is preferably a nonionic dispersant having an oxyalkylene group.

The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example).

Furthermore, the nonionic dispersant may not include an aromatic group.

The nonionic dispersant may be the compound represented by the formula:

R¹O-(CH₂CH₂O)ₚ-(R²O)_{q}-R³

[wherein R¹ is an alkyl group having 1 to 22 carbon atoms, an alkenyl group or an acyl group, having 2 to 22 carbon atoms,
R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is a numeral of 2 or more,
q is 0 or a numeral of 1 or more.].

R¹ preferably has 8 to 20 carbon atoms, particularly 10 to 18 carbon atoms. Preferred examples of R¹ include an octyl group, a nonyl group, a trimethylnonyl group, a lauryl group, a tridecyl group, an oleyl group and a stearyl group.

R² is, for example, a propylene group and a butylene group.

In the nonionic dispersant, for example, p may be a numeral of 3 or more (for example, 5 to 200) and q may be a numeral of 2 or more (for example, 5 to 200). Namely, -(R²O)_{q}- may form, for example, a polyoxyalkylene chain.

The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.

Specific examples of the nonionic dispersants include a condensation product of ethylene oxide with hexylphenol, isooctatylphenol, hexadecanol, oleic acid, an alkane (C₁₂-C₁₆)thiol, a sorbitan monofatty acid (C₇-C₁₉), an alkyl(C₁₂-C₁₈)amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin derivative. Examples of nonionic dispersants include polyoxyethylene alkyl ether, polyoxyethylene polyoxypropylene alkyl ether, polyoxyethylene polyoxybutylene alkyl ether, polyoxyethylene polyoxypropylene glycol and polyethyleneimine ethoxylate.

The proportion of the polyoxyethylene block can be 5 to 80% by weight, for example, 30 to 75% by weight, particularly 40 to 70% by weight, based on a molecular weight of the nonionic dispersant (copolymer).

The average molecular weight of the nonionic dispersant is generally 300 to 5,000, for example, 500 to 3,000.

For example, the nonionic dispersant may be used singly or in admixture of two or more. The nonionic dispersant may be a mixture of a compound with an HLB (hydrophilic-hydrophobic balance) of less than 15 (particularly 5 or less) and a compound with an HLB of 15 or more. More specifically, it is preferable to select the nonionic dispersant from polyoxyethylene alkyl ether, polyoxyethylene polyoxypropylene alkyl ether, polyoxyethylene and polyoxypropylene having an HLB of 1 to 18, sorbitan fatty acid ester, glycerol fatty acid ester, polyglycerol fatty acid ester, sucrose fatty acid ester, propylene glycol fatty acid ester, polyoxyethylene glycerol fatty acid ester and polyoxyethylene sorbitan fatty acid ester having an HLB of less than 7.

### [Cationic dispersant]

The dispersant may comprise a cationic dispersant. The cationic dispersant may be a cationic surfactant. The cationic dispersant may be a compound not having an amide group.

The cationic dispersant may be of low molecular weight (with a molecular weight of 2,000 or less, in particular, 10,000 or less) or of high molecular weight (with a molecular weight of, for example, 2,000 or more). The cationic dispersant may not have an amide group. The cationic dispersant may have a molecular weight of 100 or more, 500 or more, 1,000 or more, 2,000 or more, 4,000 or more, or 6,000 or more. The cationic dispersant may have a molecular weight of 1,000,000 or less, 750,000 or less, 500,000 or less, 250,000 or less, 100,000 or less, 50,000 or less, 10,000 or less, 7,500 or less, 5,000 or less, 2,500 or less, 750 or less, or 250 or less.

The cationic dispersant may be aliphatic or aromatic, and examples thereof include an ammonium salt (e.g., quaternary ammonium salt). The cationic dispersant may be oxyethylene-added ammonium salt. Specific examples thereof include an amine salt dispersant such as alkylamine salt, an amino alcohol fatty acid derivative, a polyamine fatty acid derivative and imidazoline; a quaternary ammonium salt dispersant such as alkyl trimethyl ammonium salt, dialkyl dimethyl ammonium salt, alkyl dimethyl benzyl ammonium salt, pyridinium salt, alkyl isoquinolinium salt, benzalkonium chloride and benzethonium chloride; and a polymer cationic dispersant such as polyquaternium-1 to 47. Examples of cationic dispersants include alkyl amine salt and quaternary ammonium salt.

The low molecular weight cationic dispersant may be a compound represented by the formula:

R²¹-N⁺(-R²²)(-R²³)(-R²⁴)X⁻

[wherein R²¹, R²², R²³ and R²⁴ are a hydrogen or a hydrocarbon group having 1 to 40 carbon atoms, and
X is an anionic group].

Specific examples of R²¹, R²², R²³ and -R²⁴ include an alkyl group (e.g., a methyl group, a butyl group, a stearyl group, a palmityl group). Specific examples of X include a halogen (e.g., chlorine) and an acid (e.g., hydrochloric acid and acetic acid). The cationic dispersant may be monoalkyltrimethylammonium salt (in which alkyl has 4 to 40 carbon atoms).

More specifically, the low molecular weight cationic dispersant may be an ammonium salt represented by the formula:

R¹ₚ-N⁺-R²_{q}X⁻

[wherein R¹ is a C12 or higher (e.g., C₁₂ to C₅₀) linear and/or branched aliphatic (saturated and/or unsaturated) group,
R² is H or a C1 to 4 alkyl group, a benzyl group, a polyoxyethylene group (in which the number of oxyethylene groups is for example, 1 (in particular 2, and especially 3) to 50) (particularly preferably CH₃, C₂H₅),
X is a halogen atom (e.g., chlorine) or a C₁ to C₄ fatty acid salt or a C₁ to C₄ sulfonate,
p is 1 or 2, q is 2 or 3 and p + q = 4.]
R¹ may have 12 to 50, and for example 12 to 30 carbon atoms.

Examples of the low molecular weight cationic dispersants may include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl]oleamide hydrochloride.

The high molecular weight cationic dispersant may be a polymer having a cationic group (for example, an ammonium group, a quaternary ammonium group) (for example, polypolyquaternium-1 to 47). Examples of high molecular weight cationic dispersants include a cationic natural product (in particular, cationic sugar) such as cationic starch, cationic cellulose (e.g., O-(2-hydroxy-3-(trimethylammonio)propylhydroxyethyl cellulose chloride), cationic guar gum, cationic xanthan gum and chitosan; a polymer of a cationic group-containing monomer such as aziridine, vinyl imidazole, aminoalkyl methacrylate, N,N,N',N'-tetramethyl-2-butene-1,4-diamine, quaternary dimethyl ammonium ethyl methacrylic acid, diallyldimethylammonium chloride, dimethylaminopropylamine and quaternary vinyl imidazole.

### [Anionic dispersant]

The dispersant may comprise an anionic dispersant. The anionic dispersant may be an anionic surfactant. The dispersant may not include an anionic dispersant.

The anionic dispersant may be of low molecular weight or of high molecular weight. The anionic dispersant may have a molecular weight of 100 or more, 500 or more, 1,000 or more, 2,000 or more, 4,000 or more, or 6,000 or more. The anionic dispersant may have a molecular weight of 100,000 or less, 10,000 or less, 7,500 or less, 5,000 or less, 25,000 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an α-sulfone fatty acid salt, a N-acylamino acid dispersant, a phosphate mono- or diester dispersant, and a sulfosuccinic acid ester. Examples of anionic dispersants include a carboxylic acid salt (e.g., fatty acid salt).

### [Amphoteric dispersant]

The dispersant may comprise an amphoteric dispersant. The amphoteric dispersant may be an amphoteric surfactant.

The amphoteric dispersant may be of low molecular weight or of high molecular weight. The amphoteric dispersant may have a molecular weight of 100 or more, 500 or more, 1,000 or more, 2,000 or more, 4,000 or more, or 6,000 or more. The amphoteric dispersant may have a molecular weight of 100,000 or less, 10,000 or less, 7,500 or less, 5,000 or less, 25,000 or less, 750 or less, or 250 or less.

Examples of the amphoteric dispersants include, for example, alanines, imidazolinium betaines, amidobetaines, and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

### [Inorganic dispersant]

The dispersant may comprise an inorganic dispersant.

The inorganic dispersant has an average primary particle size of 5 nm or larger, 30 nm or larger, 100 nm or larger, 1 µm or larger, 10 µm or larger, or 25 µm or larger. The inorganic dispersant has an average primary particle size of 100 µm or smaller, 50 µm or smaller, 10 µm or smaller, 1 µm or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

### [Amount of Dispersant]

The amount of dispersant may be 0.01 parts by weight or more, 0.1 parts by weight or more, 1 part by weight or more, 3 parts by weight or more, 5 parts by weight or more, 10 parts by weight, 15 parts by weight or more, 20 parts by weight or more, 50 parts by weight or more, 75 parts by weight or more, or 100 parts by weight or more, relative to 100 parts by weight of the liquid-repellent compound. The amount of dispersant may be 500 parts by weight or less, 300 parts by weight or less, 200 parts by weight or less, 100 parts by weight or less, 80 parts by weight or less, 50 parts by weight or less, 30 parts by weight or less, 20 parts by weight or less, 10 parts by weight or less, 5 parts by weight or less, 3 parts by weight or less, or 1 part by weight or less relative to 100 parts by weight of the liquid-repellent compound.

### {Excipient}

The oil-resistant agent composition of the present disclosure includes an excipient. The excipient is included for molding, bulking, and dilution of the oil-resistant agent composition of the present disclosure. The excipient may be at least one selected from an organic excipient and an inorganic excipient. The excipient may be an organic excipient, an inorganic excipient, or a combination of an organic excipient and an inorganic excipient.

### [Organic excipient]

The excipient may include an organic excipient. The organic excipient may be either a natural organic excipient or a synthetic organic excipient. Examples of the natural organic excipient include lactose, cellulose and a derivative thereof, starch and a derivative thereof, and a sugar alcohol. The derivatives also include a decomposition product by enzymes and the like. Specific examples of the natural organic excipient include glucose, fructose, galactose, dextrin, sucrose, lactose, a lactose composition, a lactose hydrate, crystalline cellulose, hydroxyethyl cellulose, hydroxypropyl cellulose, methyl cellulose, carboxymethyl cellulose, isomaltodextrin (an enzymatic hydrolysate of starch), mannitol, sorbitol, trehalose, maltose, erythritol, xylitol, carrageenan, xanthan gum, chitosan, guar gum, glucomannan, gluten, pullulan, locust bean gum, tamarind seed gum, gum arabic, karaya gum, pectin, konjac mannan, agar, alginic acid, gellan gum, Agrobacterium succinoglycan, cationized guar gum, rice bran, rice bran oil cake, corn starch, α-starch, carboxymethyl starch, corn starch, and potato starch. Examples of the synthetic organic excipient include polyvinyl alcohol, poly(meth)acrylic acid and a salt thereof, poly(methyl methacrylate), polyvinylpyrrolidone, and sucrose fatty acid ester.

Cellulose may be cellulose nanofiber. Cellulose nanofiber is obtained by finely subdividing pulp or the like, which is a raw material of cellulose, to a nanometer level, and is a fine fiber having a fiber width of, for example, about 1 to 500 nm. The cellulose nanofiber may be an unmodified cellulose nanofiber, or may be an anionic or cationic nanofiber. For example, the cellulose nanofiber may be a carboxymethyl cellulose nanofiber.

Examples of sucrose fatty acid esters include at least one selected from the group consisting of sucrose laurate, sucrose myristate, sucrose palmitate, sucrose stearate, and sucrose oleate.

### [Inorganic excipient]

Examples of the inorganic excipient include silicic acid, silicates (for example, calcium silicate and magnesium silicate), light anhydrous silicic acid, diatomaceous earth, zeolite, talc, vermiculite, bentonite, dicalcium phosphate, calcium sulfate, calcium carbonate, and magnesium carbonate.

In one embodiment, the excipient may include at least one selected from the group consisting of a sugar, a polysaccharide and a polysaccharide derivative, a water-soluble vinyl polymer and a salt thereof, and a silicate.

### [Amount of excipient]

The amount of the excipient may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more based on 100 parts by weight of the liquid-repellent compound. The amount of the excipient may be 500 parts by weight or less, 300 parts by weight or less, 200 parts by weight or less, 100 parts by weight or less, 80 parts by weight or less, 50 parts by weight or less, 30 parts by weight or less, 20 parts by weight or less, 10 parts by weight or less, 5 parts by weight or less, 3 parts by weight or less, or 1 part by weight or less based on 100 parts by weight of the liquid-repellent compound.

### {Lubricant}

The oil-resistant agent composition of the present disclosure may include a lubricant. The lubricant adheres to the surfaces of particles of the liquid-repellent compound, the dispersant, and the excipient, and tends to weaken adhesive forces between the particles. Accordingly, the particles are less likely to adhere to each other and can be more easily separated. In addition, when molding the oil-resistant agent composition, adhesion of the oil-resistant agent composition to molding equipment tends to be suppressed, which can contribute to prevention of contamination of the forming equipment. Examples of the lubricant include magnesium stearate, calcium stearate, anhydrous silicic acid, talc, sucrose fatty acid esters, glycerol fatty acid esters, polyethylene glycol, hydrogenated oils and sodium stearyl fumarate.

### [Amount of lubricant]

The amount of the lubricant may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more based on 100 parts by weight of the liquid-repellent compound. The amount of the lubricant may be 500 parts by weight or less, 300 parts by weight or less, 200 parts by weight or less, 100 parts by weight or less, 80 parts by weight or less, 50 parts by weight or less, 30 parts by weight or less, 20 parts by weight or less, 10 parts by weight or less, 5 parts by weight or less, 3 parts by weight or less, or 1 part by weight or less based on 100 parts by weight of the liquid-repellent compound.

### {Binder}

The oil-resistant agent composition of the present disclosure may include a binder. The binder can contribute to integration of the liquid-repellent compound, the dispersant, and the excipient. In particular, when the liquid-repellent compound, the dispersant, and the excipient are powders, the binder facilitates aggregation of these powders with each other, thereby making it easier to mold the oil-resistant agent composition. By including the binder, the strength of the oil-resistant agent composition can be improved, and cracking and chipping of the oil-resistant agent composition during transportation can be more easily suppressed. Examples of the binder include a cellulose-based binder such as hydroxypropyl cellulose, hypromellose phthalate, hydroxypropyl methylcellulose acetate succinate, crystalline cellulose, powdered cellulose, low-substituted hydroxypropyl cellulose, carmellose sodium, ethyl cellulose, methyl cellulose, and Hypromellose, a starch-based binder such as corn starch, potato starch, wheat starch, rice starch, partially pregelatinized starch, and pregelatinized starch, a silicate-based binder such as magnesium aluminometasilicate, synthetic aluminum silicate, light anhydrous silicic acid, and calcium silicate, gum arabic, sodium alginate, dextrin, gelatin, pullulan, povidone, and carboxyvinyl polymer. Cellulose-based binders are preferable, and hydroxypropyl cellulose is particularly preferable.

### [Amount of binder]

The amount of the binder may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more based on 100 parts by weight of the liquid-repellent compound. The amount of the binder may be 500 parts by weight or less, 300 parts by weight or less, 200 parts by weight or less, 100 parts by weight or less, 80 parts by weight or less, 50 parts by weight or less, 30 parts by weight or less, 20 parts by weight or less, 10 parts by weight or less, 5 parts by weight or less, 3 parts by weight or less, or 1 part by weight or less based on 100 parts by weight of the liquid-repellent compound.

### {Disintegrant}

The oil-resistant agent composition of the present disclosure may include a disintegrant. The disintegrant readily absorbs the surrounding liquid medium. Accordingly, the oil-resistant agent composition containing the disintegrant more readily absorbs the liquid medium, which is expected to promote dissolution, reduce mechanical strength due to swelling, and increase the permeation rate of the liquid medium into the oil-resistant agent composition, thereby making the oil-resistant agent composition more easily finely divided in the liquid medium. When the oil-resistant agent composition is in tablet form (for example, as a tablet), the tablet more readily disintegrates and is broken down into coarse particles, thereby making it easier to efficiently prepare a dispersion of the oil-resistant agent composition.

Examples of the disintegrant include sodium starch glycolate, croscarmellose sodium, low-substituted hydroxypropyl cellulose, crospovidone, carboxymethyl cellulose, and carboxymethyl cellulose calcium.

### [Amount of disintegrant]

The amount of the disintegrant may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more based on 100 parts by weight of the liquid-repellent compound. The amount of the disintegrant may be 500 parts by weight or less, 300 parts by weight or less, 200 parts by weight or less, 100 parts by weight or less, 80 parts by weight or less, 50 parts by weight or less, 30 parts by weight or less, 20 parts by weight or less, 10 parts by weight or less, 5 parts by weight or less, 3 parts by weight or less, or 1 part by weight or less based on 100 parts by weight of the liquid-repellent compound.

### {Liquid medium}

The oil-resistant agent composition in the present disclosure may comprise a liquid medium. The liquid medium may be water, an organic solvent, or a mixture of water and an organic solvent. The oil-resistant agent composition may be a dispersion or a solution. The oil-resistant agent composition of the present disclosure may comprise at least water.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used alone, or two or more of them may be used in combination.

### [Amount of liquid medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more relative to 1 part by weight of the liquid-repellent compound. The amount of liquid medium may be 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the liquid-repellent compound.

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more based on 1 part by weight of the liquid-repellent compound. The amount of water may be 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less based on 1 part by weight of the liquid-repellent compound.

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more relative to 1 part by weight of the liquid-repellent compound. The amount of the organic solvent may be 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the liquid-repellent compound.

### {Silicone}

The oil-resistant agent composition according to the present disclosure may contain silicone (polyorganosiloxane). By containing silicone, the oil-resistant agent composition exhibits improved liquid repellency.

As the silicone, a known silicone may be used. Examples of the silicone include polydimethylsiloxane and modified silicones (such as amino-modified silicone, epoxy-modified silicone, carboxy-modified silicone, and methyl hydrogen silicone). The silicone may be a silicone wax having wax-like properties. These may be used alone, or two or more of them may be used in combination.

The silicone may have a weight average molecular weight of 1,000 or more, 10,000 or more, or 50,000 or more. The silicone may have a weight average molecular weight of 500,000 or less, 2,500,000 or less, 100,000 or less, or 50,000 or less.

### [Amount of silicone]

The amount of the silicone may be 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more based on 100 parts by weight of the liquid-repellent compound. The amount of the silicone may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less based on 100 parts by weight of the liquid-repellent compound.

### {Wax}

The oil-resistant agent composition of the present disclosure may contain a wax. By containing a wax, liquid repellency can be favorably imparted to a substrate.

Examples of the wax include paraffin wax, microcrystalline wax, Fischer-Tropsch wax, polyolefin wax (such as polyethylene wax and polypropylene wax), oxidized polyolefin wax, silicone wax, animal and plant waxes, and mineral waxes. Paraffin wax is preferred. Specific examples of compounds constituting the wax include normal alkanes (for example, tricosane, tetracosane, pentacosane, hexacosane, heptacosane, octacosane, nonacosane, triacontane, hentriacontane, dotriacontane, tritriacontane, tetratriacontane, pentatriacontane, and hexatriacontane), and normal alkenes (for example, 1-eicosene, 1-docosene, 1-tricosene, 1-tetracosene, 1-pentacosene, 1-hexacosene, 1-heptacosene, 1-octacosene, nonacosane, triacontane, hentriacontane, dotriacontane, tritriacontane, tetratriacontane, pentatriacontane, and hexatriacontane). The compounds constituting the wax have preferably 20 to 60, for example, 25 to 45 carbon atoms. The wax may have a molecular weight of 200 to 2,000, for example, 250 to 1,500, or 300 to 1,000. These may be used alone, or two or more of them may be used in combination.

The wax may have a melting point of 50°C or more, 55°C or more, 60°C or more, 65°C or more, or 70°C or more, and is preferably 55°C or more, more preferably 60°C or more. The melting point of the wax is measured according to JIS K 2235-1991.

### [Amount of wax]

The amount of the wax may be 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, based on 100 parts by weight of the liquid-repellent compound. The amount of the wax may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less, based on 100 parts by weight of the liquid-repellent compound.

### {Organic Acid}

The oil-resistant agent composition of the present disclosure may contain an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use.

### [Amount of Organic Acid]

The amount of organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the liquid-repellent compound. The amount of organic acid may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less relative to 100 parts by weight of the liquid-repellent compound. The amount of organic acid may be adjusted so that a pH of the oil-resistant agent composition is 3 to 10, for example 5 to 9, particularly 6 to 8. For example, the oil-resistant agent composition may be acidic (pH of 7 or less, for example 6 or less).

### {Curing Agent}

The oil-resistant agent composition of the present disclosure may contain a curing agent (active hydrogen-reactive compound or active hydrogen-containing compound).

The curing agent (cross-linking agent) in the oil-resistant agent composition can effectively cure the liquid-repellent compound. The curing agent may be an active hydrogen-reactive compound or an active hydrogen-containing compound, which reacts with an active hydrogen of the liquid-repellent compound or an active hydrogen-reactive group. Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an araliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the araliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4"-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in solution and can be used in the same solution as solution of the oil-resistant agent composition.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include an epoxy compound having a polyoxyalkylene group, for example, polyglycerol polyglycidyl ether and polypropylene glycol diglycidyl ether, and sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

### [Amount of Curing Agent]

The amount of the curing agent may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the liquid-repellent compound. The amount of the curing agent may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less relative to 100 parts by weight of the liquid-repellent compound.

### {Other Component}

The oil-resistant agent composition may contain a component other than the aforementioned components. Examples of the other components include, for example, polysaccharides, a paper strengthening agent, an agglomerating agent, a yield improver, a coagulant, a binder resin, a sizing agent, a filler, an antiseptic agent, an antibacterial agent, a deodorant, and a fragrance. These may be used singly or in combination of two or more thereof. In addition to the above components, as other components, other water-repellent and/or oil-repellent agents, a dispersant, a softening agent, a flame retarder, a coating material fixing agent, a drying rate adjuster, a cross-linking agent, a film formation agent, a compatibilizing agent, a viscosity adjuster, a pH adjuster, an insect repellent, an antifoaming agent, a shape retention agent, clay, pigment, a polymer dispersant, a soil release agent, enzymes such as cellulase, amylase, protease, lipase, and keratinase as fiber surface modifiers, and a foam inhibitor may be blended. These may be used singly or in combination of two or more thereof.

### [Polysaccharide]

Examples of the polysaccharide include starch, xanthan gum, karaya gum, welan gum, guar gum, pectin, tamarind gum, carrageenan, chitosan, gum arabic, locust bean gum, cellulose, alginic acid, agar, dextran, cellulose, carboxymethyl cellulose, hydroxyethyl cellulose, hydroxypropyl cellulose, chitin nanofiber, cellulose nanofiber, and pullulan. The polysaccharide may be a modified polysaccharide obtained by substitution (excluding the liquid-repellent compound described above), and in particular may be a modified polysaccharide into which a hydroxyl group or a cationic group has been introduced.

### [Paper strengthening agent, agglomerating agent, yield improver or coagulant]

Examples of the paper strengthening agent, agglomerating agent, yield improver, or coagulant include a styrene-based polymer (styrene/maleic acid-based polymer, a styrene/acrylic acid-based polymer), a urea-formaldehyde polymer, polyethyleneimine, a melamine-formaldehyde polymer, a polyamideamine-epichlorohydrin polymer, a polyacrylamide-based polymer, a polyamine-based polymer, poly(diallyldimethylammonium chloride), an alkylamine-epichlorohydrin condensation product, a condensation product of alkylene dichloride and polyalkylene polyamine, a dicyandiamide-formalin condensation product, a dimethyldiallylammonium chloride polymer, and an olefin/maleic anhydride polymer.

### [Sizing agent]

Examples of the sizing agent include a cellulose-reactive sizing agent, a rosin-based sizing agent such as a rosin-based soap, a rosin-based emulsion/dispersion, a cellulose-reactive sizing agent, an emulsion/dispersion of acid anhydride such as alkyl and alkenyl succinic anhydride (ASA), alkenyl and alkyl ketene dimers (AKD) and multimers, and anionic, cationic, and amphoteric polymers of ethylenically unsaturated monomers such as a copolymer of styrene and acrylate.

### [Antistatic agent]

Examples of the antistatic agent include a quaternary ammonium salt, a pyridinium salt, and a cationic antistatic agent having a cationic functional group such as a primary, secondary, or tertiary amino group; an anionic antistatic agent having an anionic functional group, such as a sulfonate, a sulfate ester, a phosphonate, and a phosphate ester; an amphoteric antistatic agent such as alkyl betaine and a derivative thereof, imidazoline and a derivative thereof, and alanine and a derivative thereof; and a nonionic antistatic agent such as amino alcohol and a derivative thereof, glycerol and a derivative thereof, polyethylene glycol and a derivative thereof. An ion-conductive polymer obtained by polymerization or copolymerization of monomers having cationic, anionic, and amphoteric ionic conductive groups may also be used. These may be used alone or in combination of two or more of them.

### [Preservative]

The preservative may be mainly used to enhance preservative efficacy and bactericidal activity, thereby maintaining preservability during long-term storage. Examples of the preservative include an isothiazolone-based organic sulfur compound, a benzisothiazolone-based organic sulfur compound, benzoic acids, and 2-bromo-2-nitro-1,3-propanediol.

### [Ultraviolet absorber]

The ultraviolet absorber is an agent having an effect of protecting against ultraviolet radiation, and is a component that absorbs ultraviolet radiation and converts it into infrared radiation, visible light, or the like, and emits the converted radiation. Examples of the ultraviolet absorber include an aminobenzoic acid derivative, a salicylic acid derivative, a cinnamic acid derivative, a benzophenone derivative, an azole-based compounds, and 4-t-butyl-4'-methoxybenzoylmethane.

### [Antibacterial agent]

The antibacterial agent is a component having an effect of suppressing proliferation of bacteria on fibers and further suppressing generation of unpleasant odors derived from decomposition products of microorganisms. Examples of the antibacterial agent include a cationic bactericide such as quaternary ammonium salts, zinc bis(2-pyridylthio-1-oxide), polyhexamethylene biguanide hydrochloride, 8-hydroxyquinoline, and polylysine.

### [Deodorant]

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and aminocarboxylic acid-based metal complexes (for example, a zinc complex of trisodium methylglycine diacetate described in WO 2012/090580).

### [Amount of Other Component]

Each amount or the total amount of other components may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the liquid-repellent compound. Each amount or the total amount of other components may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less, relative to 100 parts by weight of the liquid-repellent compound.

### <Pulp composition>

The pulp composition in the present disclosure comprises the liquid-repellent compound and a pulp substrate. The pulp composition in the present disclosure exhibits excellent oil resistance and/or water resistance, preferably both.

The pulp composition in the present disclosure is obtained by adding the liquid-repellent compound to a pulp substrate. The pulp composition may be obtained by treating a pulp substrate with an oil-resistant agent composition containing the liquid-repellent compound. In that case the amount of the oil-resistant agent composition added and the composition of the oil-resistant agent composition may be adjusted to achieve the desired amounts of the respective components. The components to be contained in the oil-resistant agent composition may also be separately added to the pulp composition as an additive.

The pulp composition in the present disclosure does not need to have any one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group, and a compound having a fluorine atom. The pulp composition in the present disclosure can impart liquid-repellency to a substrate without including these fluorine-containing compounds.

The pulp composition may have a pH of 3 to 10, for example, 5 to 9, and in particular 6 to 8. The amount of the respective components may be adjusted to achieve such pH.

### {Pulp substrate}

The pulp composition comprises a pulp substrate. The pulp substrate is composed of pulp, which may be wood pulp, non-wood pulp and wastepaper pulp, and may include at least bagasse pulp.

### [Wood pulp]

Wood pulp includes softwood kraft pulp from the genera Fir, Pine, and the like, and hardwood kraft pulp from the genera Acacia, Eucalyptus, Beech, and Aspen (e.g., poplar). Softwood kraft pulp includes, for example, unbleached softwood kraft pulp (NUKP), bleached softwood pulp (NBKP), semi-bleached softwood kraft pulp (NSBKP), and softwood sulfite pulp. Examples of hardwood kraft pulp include unbleached hardwood kraft pulp (LUKP), bleached hardwood kraft pulp (LBKP), semi-bleached hardwood kraft pulp (LSBKP), and hardwood sulfite pulp. The pulp may be used singly or in combination.

In addition to softwood kraft pulp and hardwood kraft pulp, wood pulp includes a mechanical pulp such as stone ground pulp (SGP), pressure stone ground pulp (PGW), refiner ground pulp (RGP), thermoground pulp (TGP), chemiground pulp (CGP), crushed wood pulp (GP) and thermomechanical pulp (TMP). Furthermore, wastepaper pulp includes a disintegrated wastepaper pulp, a disintegrated and deinked wastepaper pulp and a disintegrated, deinked and bleached wastepaper pulp produced from recycled brown paper, recycled kraft envelopes, wastepaper of magazines, wastepaper of newspapers, wastepaper of flyers, sorted office paper, wastepaper of cardboard, hard white shavings wastepaper, Kent wastepaper, wastepaper of poster paper and bond paper.

### [Non-wood pulp]

Examples of non-wood pulp include pulp prepared from bagasse, kenaf, bamboo, linter, cotton, linen, hemp, ramie, straw, esparto, Manila hemp, Xyzal hemp, yellow hemp, flax, ganpi, paper bush and kozo (Japanese paper mulberry).

### [Synthetic fiber]

The pulp composition may contain synthetic fiber. Examples of usable synthetic fibers include polyamide fibers, polyester-based fibers typified by polyethylene terephthalate fibers (hereinafter also referred to as PET or PET fibers), acrylic fibers, polyolefin fibers such as polyethylene fibers and polypropylene fibers, aramid fibers, polyethylene naphthalate fibers, polybutylene terephthalate fibers, polyphenylene sulfide fibers (hereinafter also referred to as PPS fibers), polyacetal fibers, liquid crystal polymer fibers, glass fibers, and polyimide fibers. Examples also include pulps obtained from these.

### [Fiber length of pulp]

The pulp has an average fiber length of preferably 0.1 mm or more, more preferably 0.3 mm or more, further preferably 0.5 mm or more from the viewpoint of the improvement in the oil resistance, and preferably 5.0 mm or less, more preferably 4.0 mm or less, further preferably 3.0 mm or less, particularly preferably 2.0 mm or less, most preferably 1.2 mm or less from the viewpoint of ease of manufacture.

### [Fiber width of pulp]

The pulp has an average fiber diameter of preferably 5 µm or more, more preferably 10 µm or more, and further preferably 15 µmm or more, and preferably 50 µm or less, more preferably 40 um or less, and further preferably 30 µm or less from the viewpoint of the improvement in the oil resistance.

### [Composition of pulp substrate]

When bagasse pulp is used, the amount of the bagasse pulp in the pulp substrate may be more than 0% by weight, 10% by weight or more, 20% by weight or more, 30% by weight or more, 40% by weight or more, 50% by weight or more, 60% by weight or more, or 70% by weight or more, preferably 20% by weight or more, and may be 100% by weight or less, 90% by weight or less, 80% by weight or less, 70% by weight or less, 60% by weight or less, 50% by weight or less, 40% by weight or less, 30% by weight or less, 20% by weight or less, or 10% by weight or less, for example, 80% by weight or less.

The total amount of pulps other than bagasse may be 0% by weight or more, 10% by weight or more, 20% by weight or more, 30% by weight or more, 40% by weight or more, 50% by weight or more, 60% by weight or more, or 70% by weight or more, and may be 99% by weight or less, 90% by weight or less, 80% by weight or less, 70% by weight or less, 60% by weight or less, 50% by weight or less, 40% by weight or less, 30% by weight or less, 20% by weight or less, or 10% by weight or less in the pulp substrate.

The amount of wood pulp in the pulp substrate may be 0% by weight or more, 10% by weight or more, 20% by weight or more, 30% by weight or more, 40% by weight or more, 50% by weight or more, 60% by weight or more, or 70% by weight or more, and may be 99% by weight or less, 90% by weight or less, 80% by weight or less, 70% by weight or less, 60% by weight or less, 50% by weight or less, 40% by weight or less, 30% by weight or less, 20% by weight or less, or 10% by weight or less.

### [Form of pulp substrate]

The form of the pulp substrate when the liquid-repellent compound is added thereto may be pulp alone, pulp slurry, or a pulp product. Specific examples thereof include bleached or unbleached chemical pulp such as kraft pulp or sulfite pulp; bleached or unbleached high-yield pulp such as groundwood pulp, mechanical pulp, or thermomechanical pulp; pulp slurry including the above pulp; and a pulp product such as paper, a paper container and a pulp formed article.

### [Amount of pulp substrate]

The amount of the pulp substrate may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, or 90% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. Typically when the pulp composition is prepared by internal addition, the amount of the pulp substrate is 30% by weight or less in the pulp composition; when the pulp composition is prepared by external addition, the amount of the pulp substrate may be 75% by weight or more in the pulp composition.

The amount of the pulp substrate may be 50% by weight or more, 60% by weight or more, 70% by weight or more, 80% by weight or more, 90% by weight or more, 95% by weight or more, or 99% by weight or more, and 99.9% by weight or less, 95% by weight or less, 90% by weight or less, 85% by weight or less, 75% by weight or less, 65% by weight or less, or 55% by weight or less in the pulp composition excluding liquid medium.

### {Liquid medium}

The pulp composition may comprise a liquid medium. The liquid medium may be water, an organic solvent, or a mixture of water and an organic solvent. The liquid medium is typically an aqueous medium, and in particular, water. The liquid medium may comprise a liquid medium derived from the oil-resistant agent composition.

The amount of the liquid medium may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, 90% by weight or more, or 95% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. Typically, when the pulp composition is prepared by internal addition, the amount of the liquid medium is 50% by weight or more, and in particular 90% by weight or more in the pulp composition; when the pulp composition is prepared by external addition, the amount of the liquid medium is 30% by weight or less, and in particular, 10% by weight or less in the pulp composition.

### {Liquid-repellent compound}

The pulp composition includes a liquid-repellent compound. Details of the type of the liquid-repellent compound are as described for the liquid-repellent compound in <Oil-resistant agent composition>.

### [Amount of liquid-repellent compound]

The amount of the liquid-repellent compound may be 0.1% by weight or more, 0.3% by weight or more, 0.5% by weight or more, 0.75% by weight or more, 1.0% by weight or more, 2.0% by weight or more, or 3.0% by weight or more, preferably 0.5% by weight or more, and may be 25% by weight or less, 20% by weight or less, 15% by weight or less, 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, for example, 15% by weight or less, 5.0% by weight or less, or 3.0% by weight or less based on the pulp substrate.

The amount of the liquid-repellent compound that is a modified body of amine may be 0.1% by weight or more, 0.3% by weight or more, 0.5% by weight or more, 0.75% by weight or more, 1.0% by weight or more, 2.0% by weight or more, or 3.0% by weight or more, preferably 0.5% by weight or more, and may be 25% by weight or less, 20% by weight or less, 15% by weight or less, 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, for example, 15% by weight or less, 5.0% by weight or less, or 3.0% by weight or less based on the pulp substrate.

The amount of the liquid-repellent compound that is a modified body of polyol may be 0.1% by weight or more, 0.3% by weight or more, 0.5% by weight or more, 0.75% by weight or more, 1.0% by weight or more, 2.0% by weight or more, or 3.0% by weight or more, preferably 0.5% by weight or more, and may be 25% by weight or less, 20% by weight or less, 15% by weight or less, 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, for example, 15% by weight or less, 5.0% by weight or less, or 3.0% by weight or less based on the pulp substrate.

The amount of the liquid-repellent compound that is a modified body of polycarboxylic acid may be 0.1% by weight or more, 0.3% by weight or more, 0.5% by weight or more, 0.75% by weight or more, 1.0% by weight or more, 2.0% by weight or more, or 3.0% by weight or more, preferably 0.5% by weight or more, and may be 25% by weight or less, 20% by weight or less, 15% by weight or less, 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, for example, 15% by weight or less, 5.0% by weight or less, or 3.0% by weight or less based on the pulp substrate.

The surface of the pulp substrate (for example, a pulp product such as paper, a paper container and a pulp formed article) may be subjected to external addition treatment with the liquid-repellent compound. The amount of the liquid-repellent compound included in the coating layer formed by the external addition treatment may be 0.01 g/m² or more, 0.03 g/m² or more, 0.05 g/m² or more, 0.1 g/m² or more, 0.3 g/m² or more, 0.5 g/m² or more, or 1.0 g/m² or more, and 5.0 g/m² or less, 4.0 g/m² or less, 3.0 g/m² or less, 2.0 g/m² or less, 1.0 g/m² or less, 0.5 g/m² or less, 0.3 g/m² or less, or 0.1 g/m² or less.

### {Dispersant}

The pulp composition may comprise a dispersant. Details of the type of the dispersant are as described for the dispersant in <Oil-resistant agent composition>.

### [Amount of dispersant]

The amount of the dispersant may be 0.001% by weight or more, 0.01% by weight or more, 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, preferably 5.0% by weight or less, and more preferably 3.0% by weight or less based on the pulp substrate.

### {Paper strength agent}

The pulp composition may comprise a paper strength agent. Examples of the paper strength agent include:
a polyacrylamide-based paper strength agent such as cationic polyacrylamide, anionic polyacrylamide, and amphoteric polyacrylamide;
a polysaccharide-based paper strength agent such as starch, enzyme modified starch, thermochemically modified starch, oxidized starch, esterified starch, etherified starch (e.g., hydroxyethylated starch), aldehyde starch, cationized starch, starch, xanthan gum, gum karaya, welan gum, guar gum, pectin, tamarind gum, carrageenan, chitosan, gum arabic, locust bean gum, cellulose, alginic acid, agar, dextran, cellulose, carboxymethylcellulose, hydroxyethylcellulose, hydroxypropylcellulose, chitin nanofiber, cellulose nanofiber, cellulose nanocrystal, and pullulan, and a modified polysaccharide thereof (e.g., a modified polysaccharide prepared by introducing a hydroxyl group or a cationic group thereinto);
a polyamide-based paper strength agent such as polyamide resin, polyamine resin, polyamide-polyamine resin, polyamide-epichlorohydrin resin, polyamide-polyamine-epichlorohydrin resin, polyamide-polyurea-formaldehyde resin and epoxidized polyamide resin;
a urea/melamine-based paper strength agent such as urea resin, melamine resin, urea-formaldehyde resin, and melamine-formaldehyde resin;
a polyvinyl alcohol-based paper strength agent such as polyvinyl alcohol, completely saponified polyvinyl alcohol, partially saponified polyvinyl alcohol, ethylene-modified polyvinyl alcohol, carboxyl-modified polyvinyl alcohol, silanol-modified polyvinyl alcohol, acetoacetyl group-modified polyvinyl alcohol, cation-modified polyvinyl alcohol, diacetone group-modified polyvinyl alcohol, and terminal alkyl-modified polyvinyl alcohol;
a styrene butadiene copolymer, polyvinyl acetate, a vinyl chloride-vinyl acetate copolymer, polyvinyl chloride, polyvinylidene chloride, polyacrylic ester, fatty acid diamide, polyethyleneimine resin and ketone aldehyde resin.

A polyacrylamide-based paper strength agent, a polysaccharide-based paper strength agent and a polyamide-based paper strength agent are preferred as the paper strength agent in the present disclosure.

### [Amount of paper strength agent]

The amount of the paper strength agent may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, preferably 5.0% by weight or less based on the pulp.

### {Sizing agent}

The pulp composition may comprise a sizing agent. Examples of sizing agents include a cationic sizing agent, an anionic sizing agent, a neutral sizing agent and an amphoteric sizing agent, a rosin-based sizing agent (for example, an acidic rosin-based sizing agent and a neutral rosin-based sizing agent), alkyl ketene dimer and alkenyl succinic anhydride.

### [Amount of sizing agent]

The amount of the sizing agent may be 0.1% by weight or more, 0.2% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less based on the pulp.

### [Binder]

A binder such as a water-soluble polymer including casein, a polyester-based resin, a polyurethane-based resin, a styrene-butadiene-based resin, a vinyl acetate-based resin, an ethylene-vinyl acetate-based resin, an acrylonitrile-butadiene-based resin, a polyethylene-based resin, a polypropylene-based resin, a carboxymethyl cellulose-based resin, a polyamide-based resin, a vinyl chloride-based resin, and a vinylidene chloride-based resin may be included.

### [Pigment]

An inorganic pigment such as kaolin, light calcium carbonate, heavy calcium carbonate, magnesium carbonate, magnesium oxide, aluminum hydroxide, alumina, silica, magnesium aluminosilicate, calcium silicate, white carbon, bentonite, zeolite, sericite, smectite, calcium sulfate, barium sulfate, synthetic mica, titanium dioxide, and zinc oxide; and an organic pigment such as a polydiene including polyisoprene, polyneoprene, and polybutadiene, a polyalkene including polybutene, polyisobutylene, and polypropylene, a polymer and copolymer of a vinyl-based monomer such as vinyl acetate, styrene, (meth)acrylic acid, (meth)acrylic acid alkyl ester, (meth)acrylamide, and methyl vinyl ether, and various dense, hollow, or through-hole particles of a polyurethane-based resin, a polyester-based resin, a polyamide-based resin, a urea-based resin, a melamine-based resin, and a benzoguanamine-based resin, may be included.

### {Other additives}

The pulp composition may also include other additives used for producing a pulp product in addition to the above components, including a combination chemical for paper such as a fixing agent (e.g., aluminum sulfate), a coagulant and an agglomerating agent (e.g., polyamine-based resin), a yield improver (e.g., polyacrylamide-based resin), an organic acid (e.g., formic acid, acetic acid), a dye, a slime control agent, an antifoaming agent, a polyvalent carboxylic acid, a wax, and a penetrating agent.

### [Amount of other additives]

The amount of other additives may be 0.01% by weight or more, 0.1% by weight or more, 1% by weight or more, 3% by weight or more, 5% by weight or more, and 30% by weight or less, 20% by weight or less, 10% by weight or less, 5% by weight or less, 3% by weight or less, or 1% by weight or less, respectively, based on the pulp substrate.

Specific examples of the paper products include, for example, paper, a paper container, a pulp formed article, a food packaging material, a food container, gypsum board base paper, coated base paper, medium-quality paper, a general liner and core, neutral pure white roll paper, a neutral liner, a rust-proof liner, and metal pasted paper, kraft paper, neutral printing writing paper, neutral coated base paper, neutral PPC paper, neutral thermal paper, neutral pressure-sensitive base paper, neutral inkjet paper and neutral information paper. Preferred examples of pulp products include a food packaging material and a food container, in particular, a pulp formed article for food contact.

### <Method for producing oil-resistant agent composition>

The method for producing an oil-resistant agent composition of the present disclosure comprises:
mixing a liquid-repellent compound, a dispersant, an excipient, and a liquid medium to obtain a precursor mixture; and
subjecting the precursor mixture to a heat treatment or a drying treatment to obtain an oil-resistant agent composition in solid form.

### [Mixing step]

The mixing step is a step of mixing a liquid-repellent compound, a dispersant, and an excipient to obtain a precursor mixture. In this step, components other than the liquid-repellent compound, the dispersant, and the excipient (for example, components of the present disclosure such as a binder and a disintegrant) may also be mixed.

The mixing method is not limited, and known mixing apparatuses may be used. For example, a paddle mixer, a ribbon mixer, a butterfly mixer, or a drum mixer may be used. For example, mixing and/or kneading may be performed using a spatula. Furthermore, a known granulation apparatus capable of mixing and/or kneading may also be used. As the granulator, for example, an extrusion granulator, a stirring granulator, a fluidized-bed granulator, and a compression granulator may be used. Because the precursor mixture obtained by the granulator is particulate, handleability of the precursor mixture in subsequent steps may be improved.

From the viewpoint of performing mixing more efficiently, before mixing, the liquid-repellent compound, the dispersant, and/or the excipient may be pulverized using a known pulverizer such as a jet mill or a ball mill. By micronization, the liquid-repellent compound, the dispersant, and the excipient can be more easily mixed uniformly.

A small amount of a liquid medium may be added together with the liquid-repellent compound, the dispersant, and the excipient. Alternatively, a dispersion or an aqueous solution of the liquid-repellent compound, the dispersant, and/or the excipient may be used. By adding a small amount of a liquid medium, kneading becomes easier.

### [Heating step and drying step]

The heating step and the drying step are steps of vaporizing and reducing the amount of the liquid medium contained in the precursor mixture. By subjecting the precursor mixture to heat treatment or drying treatment, an oil-resistant agent composition in solid form of the present disclosure can be obtained.

The heating time and the drying time may be, for example, 30 minutes or more, 60 minutes or more, 90 minutes or more, 120 minutes or more, 180 minutes or more, 240 minutes or more, or 300 minutes or more. The heating time and the drying time may be, for example, 600 minutes or less, 480 minutes or less, 420 minutes or less, 360 minutes or less, 300 minutes or less, 240 minutes or less, 180 minutes or less, or 120 minutes or less.

The heating temperature and the drying temperature may be, for example, 100°C or higher, 120°C or higher, or 150°C or higher. The heating temperature and the drying temperature may be, for example, 200°C or lower, 180°C or lower, 150°C or lower, or 130°C or lower.

### [Molding step]

In one embodiment, a molding step of forming the oil-resistant agent composition may be included. The molding step may be performed after the mixing step and before the heating step or the drying step, or may be performed after the heating step or the drying step.

In the molding of the oil-resistant agent composition, the oil-resistant agent composition may be molded into tablet form (as a tablet). As an apparatus capable of such molding, a tableting machine may be used. That is, the oil-resistant agent composition of the present disclosure may be tableted. The type of the tableting machine is not limited, and a known tableting machine can be used. For example, the tableting machine may be a single-punch tableting machine that manufactures tablets by compressing and forming the oil-resistant agent composition filled in a die by a pair of upper and lower punches, or a rotary tableting machine in which dies are embedded at equal intervals in the outer periphery of a horizontally rotating turntable, and a series of operations of filling, compressing, and discharging the oil-resistant agent composition are continuously performed while the turntable rotates.

In the molding of the oil-resistant agent composition, the oil-resistant agent composition in solid form obtained by heat treatment or drying treatment may be coarsely crushed or pulverized. Although the coarsely crushed product or the pulverized product has an irregular shape, high production efficiency can be achieved when there is no need to mold the oil-resistant agent composition of the present disclosure into a specific shape and when it is desired to adjust the product to a predetermined size or less. Coarse crushing or pulverization may be performed using a known crusher or pulverizer.

### <Method for producing treated textile product or paper product>

The method for producing a product treated with the oil-resistant agent composition of the present disclosure includes a treatment step of treating a substrate with the oil-resistant agent composition described above.

The term "treatment" means applying the oil-resistant agent composition to a substrate by dipping, spraying, coating, or the like. By the treatment, the liquid-repellent compound, which is an active ingredient of the oil-resistant agent composition, adheres to the inside and/or the surface of the substrate. Here, adhesion may be physical adhesion or chemical adhesion; for example, the liquid-repellent compound may be physically or chemically modified (by reaction) onto the hydroxyl group of the substrate (such as fiber, paper, or glass).

### [Substrate]

The substrate to be treated with the oil-resistant agent composition of the present disclosure is not limited, but is preferably a textile product or a paper product, particularly a paper product.

The oil-resistant agent composition of the present disclosure imparts liquid repellency to a substrate (for example, a fiber substrate or a paper substrate), and can function as at least one selected from the group consisting of a water-repellent agent, an oil-repellent agent, an oil-resistant agent, and a water-resistant agent. The substrate treated with the oil-resistant agent composition of the present disclosure is, for example, greaseproof paper or water-resistant paper.

Examples of textile products include an animal or plant natural fiber such as cotton, hemp, wool and silk, a synthetic fiber such as polyamide, polyester, polyvinyl alcohol, polyacrylonitrile, polyvinyl chloride and polypropylene, a semi-synthetic fiber such as rayon and acetate, an inorganic fiber such as glass fiber, carbon fiber and asbestos fiber, and a mixed fiber thereof. Textile products include a woven fabric, a knitted fabric and a non-woven fabric, a fabric in the form of clothing (e.g., water-repellent clothing, e.g., raincoats) and a carpet, but treatment may also be done on fibers, yarns and intermediate fiber products (e.g., slivers or coarse yarns) before being made into fabric.

Examples of paper product substrates include: paper made of bleached or unbleached chemical pulp such as kraft pulp or sulfite pulp; paper made of bleached or unbleached high-yield pulp such as groundwood pulp, mechanical pulp, or thermomechanical pulp; paper made of wastepaper pulp such as newspaper wastepaper, magazine wastepaper, corrugated cardboard wastepaper, or deinked wastepaper; containers made of paper; and formed articles made of paper. Specific examples of paper products include a food packaging material, a food container, gypsum board base paper, coated base paper, medium-quality paper, a general liner and core, neutral pure white roll paper, a neutral liner, a rust-proof liner, and metal pasted paper, kraft paper, neutral printing writing paper, neutral coated base paper, neutral PPC paper, neutral thermal paper, neutral pressure-sensitive base paper, neutral inkjet paper and neutral information paper, and molded paper (a molded container). Preferred examples include a food packaging material and a food container.

Examples of substrates to be treated with the oil-resistant agent composition according to the present disclosure are not limited to textile products or paper products, but also include stone, a filter (e.g., an electrostatic filter), a dust mask, a fuel cell component (e.g., a gas diffusion electrode and a gas diffusion support), glass, wood, leather, fur, asbestos, brick, cement, metal and oxide, a ceramic product, plastics, a painted surface, and plaster.

When the substrate is glass, the glass product to be produced may be an optical component. Some layer (or film) may be formed on the surface (outermost layer) of the glass substrate, such as a hard coat layer or antireflection layer. Both a single-layer antireflection layer and a multilayer antireflection layer may be used for the antireflection layer. Examples of inorganic substances that can be used for the antireflection layer include SiO₂, SiO, ZrO₂, TiO₂, TiO, Ti₂O₃, Ti₂O₃, Al₂O₃, Ta₂O₅, CeO₂, MgO, Y₂O₃, SnO₂, MgF₂ and WO₃. These inorganic substances may be used alone or in combination of two or more (e.g., in a mixture). When forming a multilayer antireflection layer, it is preferable to use SiO₂ and/or SiO for the outermost layer. If the article to be produced is an optical glass component for a touch panel, it may have a thin film of transparent electrode, e.g., indium tin oxide (ITO) or indium zinc oxide, on part of the surface of the substrate (glass). The substrate may also have an insulating layer, an adhesive layer, a protective layer, a decorative frame layer (I-CON), an atomizing film layer, a hard coating film layer, a polarizing film, a phase difference film, and a liquid crystal display module, depending on its specific specifications and the like.

### [Treatment method]

The oil-resistant agent composition of the present disclosure can be applied to a pulp substrate as a treatment agent (particularly a surface-treating agent) by a conventionally known method. The treatment method may be a method in which the oil-resistant agent composition of the present disclosure is dispersed in an organic solvent or water, if necessary, to dilute it and the resultant is allowed to adhere to the inside and/or on the surface of the substrate by a known method such as dip coating, spray coating, and foam coating. After drying, a textile product to which the solid component of the oil-resistant agent composition is adhered, is obtained. If necessary, the oil-resistant agent composition of the present disclosure may be applied in combination with a suitable cross-linking agent, and curing may be carried out. The oil-resistant agent composition of the present disclosure may further be used in combination with various additives such as a water-repellent and/or oil-repellent agent, an anti-slip agent, an antistatic agent, a texture modifier, a softening agent, an antibacterial agent, a flame retarder, a coating material fixing agent, a wrinkle-resistant agent, a drying rate adjuster, a cross-linking agent, a film formation agent, a compatibilizer, an antifreezing agent, a viscosity modifier, an ultraviolet absorber, an antioxidant, a pH adjuster, an insect repellent, and an antifoaming agent, as necessary. Examples of the additives may be the same as those described under "Other components" in the above description. The concentration of the oil-resistant agent composition in the treatment agent brought into contact with the substrate may be appropriately changed depending on the application, but may be 0.01 to 10% by weight, for example, 0.05 to 5% by weight.

The oil-resistant agent composition can be applied to a substrate by any method known for treating a substrate with liquid. The substrate may be immersed in the oil-resistant agent composition, or a solution may be adhered or sprayed onto the substrate. The treated substrate is preferably dried and cured by heating in order to develop liquid-repellency. The heating temperature may be, for example, 100°C to 200°C, 100°C to 170°C, or 100°C to 120°C. In the present disclosure, good performance can be obtained even by low-temperature heating (for example, 100°C to 140°C). In the present disclosure, the heating time may be 5 seconds to 60 minutes, for example, 30 seconds to 3 minutes. When the textile product is paper, the oil-resistant agent composition may be applied to paper, or solution may be adhered or sprayed onto paper, or the oil-resistant agent composition may be mixed with pulp slurry before papermaking to perform treatment. The treatment may be external addition treatment or internal addition treatment. Alternatively, the oil-resistant agent composition may be applied to a textile product by a cleaning method, for example, by washing application or dry cleaning.

### [Treatment of paper product]

Examples of the paper substrate include paper, a container made of paper, and a formed article made of paper (for example, pulp mold).

The method for producing a paper product of the present disclosure comprises: mixing the oil-resistant agent composition of the present disclosure with liquid medium to prepare a water dispersion of the oil-resistant agent composition; and
treating paper with the water dispersion by external addition treatment or internal addition treatment.

Since the oil-resistant agent composition of the present disclosure is in solid form, the oil-resistant agent composition of the present disclosure is dispersed in a liquid medium before treating paper with the oil-resistant agent composition of the present disclosure. Because the oil-resistant agent composition of the present disclosure contains a dispersant, a dispersion (for example, a water dispersion) of the oil-resistant agent composition can be obtained by adding the oil-resistant agent composition to the liquid medium. From the viewpoint of efficiently preparing the dispersion, the oil-resistant agent composition may be stirred for a predetermined time after the oil-resistant agent composition is added to the liquid medium. As the liquid medium, the liquid medium according to the present disclosure may be used; for example, water may be used.

The amount of the oil-resistant agent composition in the dispersion of the oil-resistant agent composition of the present disclosure may be 1% by weight or more, 3% by weight or more, 5% by weight or more, 7% by weight or more, 10% by weight or more, 15% by weight or more, 20% by weight or more, or 25% by weight or more. The amount of the oil-resistant agent composition in the dispersion of the oil-resistant agent composition of the present disclosure may be 50% by weight or less, 40% by weight or less, 30% by weight or less, 25% by weight or less, 20% by weight or less, or 15% by weight or less.

The amount of the liquid-repellent compound in the dispersion of the oil-resistant agent composition of the present disclosure may be 1% by weight or more, 3% by weight or more, 5% by weight or more, 7% by weight or more, 10% by weight or more, 15% by weight or more, 20% by weight or more, or 25% by weight or more. The amount of the liquid-repellent compound in the dispersion of the oil-resistant agent composition of the present disclosure may be 50% by weight or less, 40% by weight or less, 30% by weight or less, 25% by weight or less, 20% by weight or less, or 15% by weight or less.

Paper may be produced by a conventionally known papermaking method. An internal addition treatment method in which the oil-resistant agent composition is added to a pulp slurry before papermaking, or an external addition treatment method in which the oil-resistant agent composition is applied to paper after papermaking, may be used.

The size press used in an external addition treatment method, can be divided into the following types depending on the coating method.

One coating method involves supplying a coating liquid (size liquid) to a nip portion formed by passing paper between two rubber rolls, creating a pool of the coating liquid called a pond, and allowing the paper to pass through this pool to coat both sides of the paper with the size liquid, which is a method employed for a so-called pound-type two-roll size press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of the paper. In the surface transfer type, a coating layer is likely to stay on a surface of paper more than in the pound-type two-roll size press, and the amount of coating layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example up to 200°C, and particularly the temperature range of 80°C to 180°C, depending on the nature of the paper, as a result of which excellent oil resistance, water resistance, and the like can be exhibited.

The internal addition treatment method may mean a treatment method in which the oil-resistant agent composition is added to pulp slurry before papermaking. In the internal addition treatment method, a pulp mold product can be produced by filling a mold with a pulp slurry to which the oil-resistant agent composition has been added, and allowing water to pass through the mold to form pulp. Specifically, the method may include one or more of a step of adding a water dispersion of the oil-resistant agent composition to pulp slurry and stirring and mixing the mixture; a step of sucking and dehydrating the pulp composition prepared in the step through a net-like body of predetermined shape and depositing the pulp composition then to form a pulp mold intermediate; and a step of molding and drying the pulp mold intermediate by using a heated molding mold to obtain a pulp mold product, specifically paper, a container made of paper, or a formed article made of paper, but is not limited thereto. Examples of the method for allowing water in the pulp slurry to pass through the mold include a method in which water is naturally allowed to pass through the mold under normal pressure, and a method in which water is forcibly allowed to pass through the mold by reducing the pressure outside the mold. After having been lightly dried at room temperature or elevated temperature, the treated paper may be optionally subjected to heat treatment, depending on the nature of the paper. Temperature of the heat treatment may be 150°C or higher, 180°C or higher, or 210°C or higher, and may be 300°C or lower, 250°C or lower, or 200°C or lower, particularly 80°C to 180°C. Carrying out the heat treatment in such a temperature range enables exhibiting, for example, excellent oil resistance and water resistance.

The present disclosure can be used in gypsum board base paper, coated base paper, medium-quality paper, a general liner and core, neutral pure white roll paper, a neutral liner, a rust-proof liner, and metal pasted paper, kraft paper, and the like. It can also be used in neutral printing writing paper, neutral coated base paper, neutral PPC paper, neutral thermal paper, neutral pressure-sensitive base paper, neutral inkjet paper and neutral information paper.

As the pulp raw material, any of bleached or unbleached chemical pulp such as kraft pulp or sulfite pulp, bleached or unbleached high-yield pulp such as groundwood pulp, mechanical pulp, or thermomechanical pulp, and wastepaper pulp such as newspaper wastepaper, magazine wastepaper, corrugated cardboard wastepaper, or deinked wastepaper may be used. A mixture of the above pulp raw material with asbestos or a synthetic fiber such as polyamide, polyimide, polyester, polyolefin, and polyvinyl alcohol may also be used.

The water resistance of paper can be improved by adding a sizing agent. Examples of the sizing agent include a cationic sizing agent, an anionic sizing agent, and a rosin-based sizing agent (for example, an acidic rosin-based sizing agent and a neutral rosin-based sizing agent). The amount of the sizing agent may be 0.01 to 5% by weight based on the pulp.

For paper, if necessary, additives used in paper production, such as a paper strengthening agent including starch, modified starch, carboxymethyl cellulose, and a polyamido-polyamine-epichlorohydrin resin, an agglomerating agent, a fixing agent, a yield improver, a dye, a fluorescent dye, a slime control agent, and an antifoaming agent, may be used as a papermaking chemical in an amount commonly employed. Starch and modified starch are preferably used. Starch and modified starch are preferably used. The oil-resistant agent composition may be applied to paper by a size press, a gate roll coater, a bill blade coater, a calender, or the like, optionally using starch, polyvinyl alcohol, a dye, a coating color or an anti-slip agent.

In external addition, the amount of the liquid-repellent compound contained in the coating layer is preferably 0.01 to 2.0 g/m², and particularly preferably 0.1 to 1.0 g/m². The coating layer is preferably formed of the oil-resistant agent composition and starch and/or modified starch. The solid content of the oil-resistant agent composition for paper in the coating layer is preferably 2 g/m² or less.

In internal addition, the oil-resistant agent composition is preferably mixed with pulp so that the amount of the oil-resistant agent composition is 0.01 to 50 parts by weight or 0.01 to 30 parts by weight, for example 0.01 to 10 parts by weight, and particularly 0.2 to 5.0 parts by weight based on 100 parts by weight of the pulp constituting the paper.

In external addition, oil resistance can be imparted to paper even by using a so-called pond-type two-roll size press treatment in which a treatment liquid is retained between rolls, and base paper is passed through the treatment liquid between the rolls at any roll speed and nip pressure.

In external addition treatment, the paper substrate may contain additives such as a sizing agent, a paper strengthening agent, an agglomerating agent, a yield improver, or a coagulant. The additive may be nonionic, cationic, anionic, or amphoteric. The additive may have an ionic charge density of -10,000 to 10,000 µeq/g, preferably -4,000 to 8,000 µeq/g, and more preferably - 1,000 to 7,000 µeq/g. Additives such as a sizing agent, a paper strengthening agent, an agglomerating agent, a yield improver, or a coagulant (in terms of solids or active components) may be used in an amount of 0.1 to 10% by weight (for example, 0.2 to 5.0% by weight) based on the pulp. When the paper substrate contains a cationic additive (for example, a sizing agent, a paper strengthening agent, an agglomerating agent, a yield improver, or a coagulant), the oil-resistant agent composition is preferably anionic.

In internal addition treatment, it is preferable to perform papermaking using a pulp slurry having a pulp concentration of 0.5 to 5.0% by weight (for example, 2.5 to 4.0% by weight). An additive (for example, a sizing agent, a paper strengthening agent, an agglomerating agent, a yield improver, or a coagulant) and a liquid-repellent compound may be added to the pulp slurry. Examples of the additive (for example, a sizing agent, a paper strengthening agent, an agglomerating agent, a yield improver, or a coagulant) include alkyl ketene dimer, alkenyl succinic anhydride, a styrene-based polymer (styrene/maleic acid-based polymer, styrene/acrylic acid-based polymer), a urea-formaldehyde polymer, polyethyleneimine, a melamine-formaldehyde polymer, a polyamidoamine-epichlorohydrin polymer, a polyacrylamide-based polymer, a polyamine-based polymer, polydiallyldimethylammonium chloride, an alkylamine-epichlorohydrin condensation product, a condensation product of alkylene dichloride and polyalkylene polyamine, a dicyandiamide-formalin condensation product, a dimethyldiallylammonium chloride polymer, and an olefin/maleic anhydride polymer.

### [Pre-treatment of textile product]

The textile product may be pre-treated before being treated with the oil-resistant agent composition of the present disclosure. By performing the pre-treatment of the textile product, excellent fastness can be imparted to the textile product after treatment with the oil-resistant agent composition.

Examples of the pre-treatment of the textile product include cationization treatment by reaction with a reactive quaternary ammonium salt, anionization treatment such as sulfonation, carboxylation, and phosphorylation, acetylation treatment after anionization treatment, benzoylation treatment, carboxymethylation treatment, grafting treatment, tannic acid treatment, and polymer coating treatment.

The method for pre-treating the textile product is not limited, and the textile product may be pre-treated by a conventionally known method. The pre-treatment liquid may be dispersed in an organic solvent or water, if necessary, to dilute it and the resultant is allowed to adhere to the inside and/or on the surface of the textile product by a known method such as dip coating, spray coating, and foam coating, followed by drying. The pH and temperature of the pre-treatment liquid may be adjusted depending on the desired level of treatment. As one example of the method for pre-treating a textile product, a method for pre-treating a textile product with the above treatment agent will be described in detail.

The pre-treatment method of the textile product may include a step of imparting, to the fiber, one or more functional groups (hereinafter also referred to as a "specific functional group") selected from the group consisting of a monovalent group represented by -SO₃M¹ (wherein M¹ represents a monovalent cation), a monovalent group represented by -COOM² (wherein M² represents a monovalent cation), and a monovalent group represented by -O-P(O)(OX¹)(OX²) (wherein X¹ and X² each independently represent a hydrogen atom or an alkyl group having 1 to 22 carbon atoms).

Examples of M¹ include H, K, Na, or an ammonium ion optionally having a substituent. Examples of M² include H, K, Na, or an ammonium ion optionally having a substituent. When X¹ or X² is an alkyl group, X¹ or X² is preferably an alkyl group having 1 to 22 carbon atoms, and more preferably an alkyl group having 4 to 12 carbon atoms.

The fiber containing the above specific functional group (hereinafter also referred to as a "functional group-containing fiber") may be prepared, for example, by the following methods:
(i) Adhering a compound having the above specific functional group to a fiber material. The adhesion of the compound may be in a state in which a portion of the compound and a portion of the fiber are chemically bonded together, provided that the above specific functional group remains in a sufficient amount.
(ii) Preparing a fiber in which the above specific functional group is directly introduced into the fiber material.

In (i), for example, the functional group-containing fiber can be obtained by a functional group introduction step in which a fiber material is treated with a pre-treatment liquid containing one or more of the compounds having the above specific functional group.

The raw material of the fiber material is not limited, and examples thereof include natural fibers such as cotton, hemp, silk, and wool, semi-synthetic fibers such as rayon and acetate, synthetic fibers such as polyamide (nylon and the like), polyester, polyurethane, and polypropylene, and composite fibers and blended fibers thereof. The form of the fiber material may be any form such as fiber (tow, sliver, and the like), yarn, knitted fabric (including interknitting), woven fabric (including cross-weaving), and nonwoven fabric.

In the present embodiment, from the viewpoint of improving the water-repellency of the resulting textile product, it is preferable to use a fiber material containing polyamide and polyester as raw materials, and particularly preferable to use nylon such as nylon 6 and nylon 6,6, polyester such as polyethylene terephthalate (PET), polytrimethyl terephthalate, and polylactic acid, and blended fibers containing these.

As the compound having -SO₃M¹ described above, a phenol-based polymer may be used. Examples of the phenol-based polymer include those containing at least one of the compounds represented by the following formula. 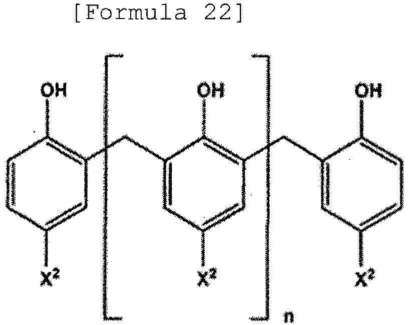 wherein X² represents -SO₃M³ in which M³ represents a monovalent cation or a group represented by the following formula, and n is an integer of 20 to 3,000. 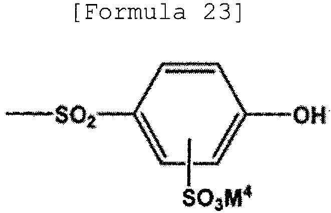 wherein M⁴ represents a monovalent cation.

Examples of the above M³ include H, K, Na, or an ammonium ion optionally having a substituent.

Examples of the above M⁴ include H, K, Na, or an ammonium ion optionally having a substituent.

The compound represented by the above formula may be, for example, a formalin condensation product of phenolsulfonic acid or a formalin condensation product of sulfonated bisphenol S.

Examples of the compound having -COOM² described above include a polycarboxylic acid-based polymer.

As the polycarboxylic acid-based polymer, for example, a polymer synthesized by a conventionally known radical polymerization method using acrylic acid, methacrylic acid, maleic acid, or the like as a monomer, or a commercially available product may be used.

Examples of the method for producing the polycarboxylic acid-based polymer include a method in which a radical polymerization initiator is added to an aqueous solution of the above monomer and/or a salt thereof, and the mixture is heated and reacted at 30 to 150°C for 2 to 5 hours. At this time, an alcohol such as methanol, ethanol, and isopropyl alcohol, or an aqueous solvent such as acetone may be added to the aqueous solution of the above monomer and/or a salt thereof. Examples of the radical polymerization initiator include persulfates such as potassium persulfate, sodium persulfate, and ammonium persulfate, a redox-type polymerization initiator comprising a persulfate and sodium bisulfite or the like, hydrogen peroxide, and a water-soluble azo polymerization initiator. These radical polymerization initiators may be used alone or in combination of two or more. Furthermore, in radical polymerization, a chain transfer agent (for example, octyl thioglycolate) may be added for the purpose of adjusting the degree of polymerization.

In radical polymerization, a copolymerizable monomer may be used in addition to the above monomers. Examples of the copolymerizable monomer include vinyl-based monomers such as ethylene, vinyl chloride, and vinyl acetate, acrylamide, acrylates, and methacrylates. Acrylates and methacrylates preferably have a hydrocarbon group having 1 to 3 carbon atoms and optionally having a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, and propyl methacrylate. These copolymerizable monomers may be used alone or in combination of two or more.

The carboxyl groups in the polycarboxylic acid-based polymer may be free, or may be neutralized with an alkali metal compound, an amine-based compound, or the like. Examples of alkali metals include sodium, potassium, and lithium. Examples of the amine-based compound include ammonia, monoethanolamine, diethanolamine, and triethanolamine.

The polycarboxylic acid-based polymer has a weight average molecular weight of preferably 1,000 to 20,000, and more preferably 3,000 to 15,000 from the viewpoint of achieving good water-repellency of the resulting textile product.

As the polycarboxylic acid-based polymer, commercially available products such as "NEOCRYSTAL 770" (manufactured by NICCA Chemical Co., Ltd., product name) and "Celopol PC-300" (manufactured by Sanyo Chemical Industries, Ltd., product name) may be used.

Examples of the compound having -O-P(O)(OX¹)(OX²) described above include a phosphate ester compound represented by the following formula: 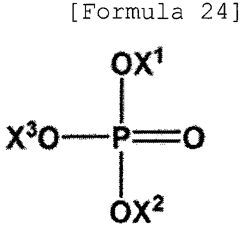 wherein X¹ and X² are as described above, and X³ represents an alkyl group having 1 to 22 carbon atoms.

As the above phosphate ester compound, phosphate monoesters, diesters and triesters in which the alkyl group of the ester has 1 to 22 carbon atoms, and mixtures thereof, may be used.

Lauryl phosphate or decyl phosphate is preferably used from the viewpoint of achieving good water-repellency of the resulting textile product.

As the phosphate ester compound, commercially available products such as "Phosphanol ML-200" (manufactured by Toho Chemical Industry Co., Ltd., product name) may be used.

The pretreatment liquid containing one or more of the compounds having the above specific functional group may be, for example, an aqueous solution of the above compound. The pretreatment liquid may further contain an acid, an alkali, a surfactant, a chelating agent, or the like.

Examples of the method for treating the fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment include a method involving using an air spray that nebulizes and sprays a treatment liquid by compressed air, or an air spray by hydraulic pressure nebulization system. The treatment conditions, such as the concentration of the treatment liquid and heat treatment after application, may be appropriately adjusted in view of the intended purpose and various factors such as performance. When the pretreatment liquid contains water, it is preferable to dry the fiber material after adhesion of the pretreatment liquid to the fiber material in order to remove the water. The drying method is not limited and may be either a dry heat method or a moist heat method. The drying temperature is also not limited, and for example, drying may be performed at room temperature to 200°C for 10 seconds to several days. If necessary, after drying, heat treatment may be performed at 100 to 180°C for about 10 seconds to 5 minutes.

When the fiber material is to be dyed, the treatment with the pretreatment liquid may be carried out before dyeing or in the same bath as that used for dyeing. However, when reduction soaping is performed, the above compound having a specific functional group (for example, a phenol-based polymer compound) that has been adsorbed may be desorbed during the process; therefore, it is preferable to perform the treatment after reduction soaping carried out after dyeing.

The treatment temperature in the dip treatment may be 60 to 130°C. The treatment time may be 5 to 60 minutes.

In the functional group introduction step using the pretreatment liquid, it is preferable to perform the treatment so that the adhesion amount of the above compound having a specific functional group is 1.0 to 7.0 parts by weight based on 100 parts by weight of the fiber material. Within this range, durable water-repellency and texture can be achieved at high levels.

The pH of the pretreatment liquid is preferably adjusted to a pH of 3 to 5. The pH may be adjusted using a pH adjuster such as acetic acid or malic acid.

In the pretreatment liquid, a salt may be used in combination in order to effectively adsorb the above compound having a specific functional group onto the fiber material by a salting-out effect. Examples of usable salts include sodium chloride, sodium carbonate, ammonium sulfate, and sodium sulfate.

In the functional group introduction step using the pretreatment liquid, it is preferable to remove any excess of the above compound having a specific functional group. The removal method may be washing with water. By sufficiently removing the excess compound, it is possible to prevent inhibition of water repellency development during the subsequent water-repellent treatment while also achieving a favorable hand feel in the resulting textile product. The resulting functional group-containing fiber is preferably sufficiently dried before being brought into contact with the above treatment agent.

(ii) Examples of the fiber in which the above specific functional group is directly introduced into the fiber material include cation-dyeable polyester (CD-PET).

The functional group-containing fiber has a surface zeta potential of preferably -100 to -0.1 mV, and more preferably -50 to -1 mV from the viewpoint of achieving good water-repellency of the resulting textile product. The surface zeta potential of the fiber may be measured, for example, using a zeta potential and particle size analyzer ELSZ-1000ZS (manufactured by Otsuka Electronics Co., Ltd.).

### <Pulp composition/ method for producing pulp product>

The pulp composition according to the present disclosure may be obtained by treating a pulp substrate with an oil-resistant agent composition containing the liquid-repellent compound.

A pulp product may be obtained by subjecting the resulting pulp composition to a treatment step of drying, heating and forming according to need.

The oil-resistant agent composition of the present disclosure may be applied to a pulp substrate as a treatment agent (particularly a surface-treating agent) by a conventionally known method. The treatment method may be a method in which the oil-resistant agent composition of the present disclosure is dispersed in an organic solvent or water, if necessary, to dilute it and the resultant is allowed to adhere to the inside and/or on the surface of the substrate by a known method such as dip coating, spray coating, and foam coating, followed by drying. The dilution factor may be changed depending on the concentration and the purpose of use of the oil-resistant agent composition, and may range from 3 to 2,000 times, and for example, 10 to 100 times. After drying, a pulp product to which the solid component of the oil-resistant agent composition is adhered, is obtained. If necessary, the oil-resistant agent composition of the present disclosure may be applied in combination with a suitable cross-linking agent, and curing may be carried out.

The oil-resistant agent composition can be applied to a pulp substrate by any method known for treating a pulp substrate with liquid. The pulp substrate may be immersed in the oil-resistant agent composition, or the pulp substrate and the oil-resistant agent composition may be mixed, or a solution may be adhered or sprayed onto the pulp substrate. The treated pulp substrate is preferably dried and cured by heating in order to develop liquid-repellency. The heating temperature may be, for example, 100°C to 200°C, 100°C to 170°C, or 100°C to 120°C. In the present disclosure, the heating time may be 5 seconds to 60 minutes, for example, 30 seconds to 3 minutes.

The method for treating a pulp substrate may be an internal addition treatment method in which the oil-resistant agent composition is added to a pulp substrate before papermaking (e.g., in the form of pulp slurry), or an external addition treatment method in which the oil-resistant agent composition is applied to a pulp substrate after papermaking (e.g., a pulp product). Examples of internal addition treatment methods include mixing and dipping, and the internal addition treatment method may include a step of adding an oil-resistant agent composition to pulp slurry and mixing it with stirring. Examples of external addition treatment methods include spraying, coating, dipping and foam coating and more specifically a pound-type two-roll size press, a gate roll type size press and a rod metering type size press. The treatment may be external addition treatment or internal addition treatment. For example, when the pulp substrate is paper, the repellent may be applied to paper, or solution may be adhered or sprayed onto paper, or the repellent may be mixed with pulp slurry before papermaking to perform treatment. When the pulp substrate is a fiber material, examples of treatment methods include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment include a method involving using an air spray that nebulizes and sprays a treatment liquid by compressed air, or an air spray by hydraulic pressure nebulization system.

The method of treatment may be internal addition treatment in which an oil-resistant agent composition is added to pulp slurry before papermaking. The internal addition treatment method may include, but is not limited to, one or more of a step of adding the oil-resistant agent composition to pulp slurry and stirring and mixing them; a step of sucking and dehydrating the pulp composition prepared in the step through a net-like body of predetermined shape and depositing the pulp composition then to form a pulp formed article intermediate; and a step of molding and drying the pulp formed article intermediate by using a heated molding mold to obtain a pulp formed article. After having been lightly dried at room temperature or elevated temperature, the treated paper may be optionally subjected to heat treatment, depending on the nature of the paper. Temperature of the heat treatment may be 150°C or higher, 180°C or higher, or 210°C or higher, and may be 300°C or lower, 250°C or lower, or 200°C or lower, particularly 80°C to 180°C. Carrying out the heat treatment in such a temperature range enables exhibiting, for example, excellent oil resistance and water resistance, and the like. The pulp substrate which has undergone internal addition treatment may be subjected to external addition treatment to be treated with the oil-resistant agent composition, allowing another liquid-repellent compound to be adhered to the surface.

The treatment method may be an external addition treatment method in which the oil-resistant agent composition is applied to a pulp substrate after papermaking. The size press used in an external addition treatment method, can be divided into the following types depending on the coating method. One coating method involves supplying a coating liquid (size liquid) to a nip portion formed by passing paper between two rubber rolls, creating a pool of the coating liquid called a pond, and allowing the paper to pass through this pool to coat both sides of the paper with the size liquid, which is a method employed for a so-called pound-type two-roll size press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of the paper. In the surface transfer type, a coating layer is likely to stay on a surface of paper more than in the pound-type two-roll size press, and the amount of coating layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example up to 200°C, and particularly the temperature range of 80°C to 180°C, depending on the nature of the paper, as a result of which excellent oil resistance, water resistance, and the like can be exhibited.

Embodiments have been described above, but it will be understood that various modifications can be made to embodiments and details without departing from the spirit and the scope of the claims.

### Examples

Hereinafter, the present disclosure will be described in detail with reference to Examples, but the present disclosure is not limited to these Examples.

The test procedures are as follows.

### [Preparation of pulp mold]

Pulp mold was molded using an automatic mold molding machine. In the lower part thereof, a reticular body was arranged on a pulp mold molding mold made of metal with many suction holes, a metal tank was arranged in the upper part, and a mixture of pulp slurry and a water dispersion composition was charged in the upper metal tank. From the opposite side of the pulp mold molding mold to the side where the reticular body was arranged, the pulp-containing aqueous composition was suctioned and dehydrated through the pulp mold molding mold and the reticular body by a vacuum pump, and solids (pulp, etc.) contained in the pulp-containing aqueous composition were allowed to deposit on the reticular body to obtain a pulp mold intermediate. Next, the resulting pulp mold intermediate was dried by applying a pressure of 0.05 to 5 MPa from the tops and bottoms of male and female molding molds made of metal, which had been heated to 60 to 250°C. Thus, a pulp mold product formed in the form of a container was produced.

### [Practical oil resistance test at 65°C]

Pulp mold was pre-treated by storing under conditions of 23°C and a humidity of 50% for 12 hours. After pouring 100 ml of corn oil at 65°C into the pulp mold and allowing it to stand at room temperature for 45 minutes, the corn oil was removed from the pulp mold, and the degree of oil staining in the pulp mold was evaluated. The evaluation scores were set as follows according to the degree of staining.
5: No stains inside the pulp mold.
4: Stains inside the pulp mold. No stains on the backside.
3: Stains inside the pulp mold. Slight stain bleed out on the backside.
2: Stains inside the pulp mold. The area of stain bleed out to the backside is less than 50% of the total area.
1: Stains inside the pulp mold. The area of stain bleed out to the backside is 50% or more and less than 100% of the total area.
0: Stains over the backside.

### [Practical water resistance test at 100°C]

Pulp mold was pre-treated by storing under conditions of 23°C and a humidity of 50% for 12 hours. After pouring 100 ml of water at 100°C into the pulp mold and allowing it to stand at room temperature for 45 minutes, the water was removed from the pulp mold, and the degree of staining in the pulp mold was evaluated. Evaluation scores were set as follows depending on the degree of penetration.
5: No stains inside the pulp mold.
4: Stains inside the pulp mold. No stains on the backside.
3: Stains inside the pulp mold. Slight stain bleed out on the backside.
2: Stains inside the pulp mold. The area of stain bleed out to the backside is less than 50% of the total area.
1: Stains inside the pulp mold. The area of stain bleed out to the backside is 50% or more and less than 100% of the total area.
0: Stains over the backside.

### [Water redispersibility]

2 g of the solid oil-resistant agent composition was mixed with 18 g of water and the mixture was stirred for 5 hours to prepare a water dispersion composition of the oil-resistant agent composition. The volume abundance ratio and the median diameter (D50) of particles with a size of 100 µm or more in the water dispersion composition were measured. When the volume abundance ratio of particles with a size of 100 µm or more was 30% and the median diameter D50 was 200 µm or less, the water redispersibility was evaluated as "Good."

### [Volume abundance ratio of particles with size of 100 µm or more]

The abundance ratio of particles with a size of 100 µm or more was calculated from the volume-based frequency distribution (volume distribution) obtained by the measurement of the water dispersion composition prepared in Examples and Reference Examples using a laser diffraction/scattering apparatus, and the calculated value was defined as the volume abundance ratio of particles with a size of 100 µm or more.

### [Median diameter (D50)]

The median diameter (D50) was determined by the measurement of the water dispersion composition prepared in Examples and Reference Examples using a laser diffraction/scattering apparatus.

### [Particle size of solid oil-resistant agent composition]

The particle size of the solid oil-resistant agent composition was determined by measuring the particle size using a laser microscope. The maximum diameters of 100 particles of the solid oil-resistant agent composition were measured, and the average value was defined as the average particle size.

### [Particle size of tablet-form oil-resistant agent composition]

The particle size of the tablet-form oil-resistant agent composition was determined by measuring the particle size using a caliper in accordance with JIS B 7507. The maximum diameters of 100 particles of the tablet-form oil-resistant agent composition were measured, and the average value was defined as the particle size.

### [HD contact angle]

A solution (or dispersion) of the liquid-repellent compound having a solid content concentration of 1.0% was spin-coated onto a silicon wafer at 2,500 rpm for 25 seconds to prepare a spin-coated film. The film was heated at 140°C for 1 minute to prepare a silicon wafer treated with the liquid-repellent compound. Chloroform was used as the solvent or dispersion medium. 2 µl of HD (hexadecane) was dropped onto the silicon wafer treated with the liquid-repellent compound, and the contact angle one second after the droplet reached the film was defined as the HD contact angle of the liquid-repellent compound.

### [Water contact angle]

A solution (or dispersion) of the liquid-repellent compound having a solid content concentration of 1.0% was spin-coated onto a silicon wafer at 2,500 rpm for 25 seconds to prepare a spin-coated film. The film was heated at 140°C for 1 minute to prepare a silicon wafer treated with the liquid-repellent compound. Chloroform was used as the solvent or dispersion medium. 2 µl of water was dropped onto the silicon wafer treated with the liquid-repellent compound, and the contact angle one second after the droplet reached the film was defined as the water contact angle of the liquid-repellent compound.

### <Evaluation Example>

### [Evaluation Example 1]

Table 1 shows the measurement results of the HD contact angle (n-hexadecane contact angle) of the liquid-repellent compounds N,N'-xylylenebis(12-hydroxystearamide), N,N'-ethylenebis(stearamide), N,N-ethylenebis(12-hydroxystearamide), and N,N'-ethylenebis(oleamide).

**[Table 1]**

| Table 1 Measurement results of contact angle | | |
|---|---|---|
| Name of liquid-repellent compound | HD contact angle (n-hexadecane) static contact angle /° | Water static contact angle /° |
| N,N'-ethylenebis(stearamide) | 36.1 | 85.1 |
| N,N'-ethylenebis(oleamide) | 42.7 | 103.4 |
| N,N'-xylylenebis(12-hydroxystearamide) | 38.6 | 90.1 |
| N,N'-ethylenebis(12-hydroxystearamide) | 32.9 | 68.2 |

### [Evaluation Example 2]

A biodegradation test was conducted on N,N'-ethylenebis(oleamide) (biobased content: 96%; melting point: 116°C), which was used as the liquid-repellent compound, according to JIS K 6953-1:2011. The biodegradation was 65% at 30 days and 77% at 60 days.

### <Examples and Reference Examples>

### [Example 1]

0.2 g of hydroxyethyl cellulose serving as an excipient and 1 g of water were mixed and heated with stirring at 70°C for 4 hours to prepare an aqueous hydroxyethyl cellulose solution. The resulting aqueous hydroxyethyl cellulose solution was mixed with 2 g of N,N-xylylenebis(12-hydroxystearamide) (biobased content: 83%, particle size after pulverization: 9 µm) which had been subjected to pulverization treatment using a jet mill and 0.2 g of polyethylene glycol trimethylnonyl ether (HLB 13), followed by kneading with a spatula for 10 minutes. Thereafter, the mixture was dried at 90°C for 6 hours and pulverized with a spatula to prepare a solid oil-resistant agent composition. The solid oil-resistant agent had a particle size of 5.3 mm.

2 g of the solid oil-resistant agent composition was mixed with 18 g of water and stirred for 5 hours to prepare a water dispersion composition (volume abundance ratio of particles with a size of 100 µm or more: 0%, volume median diameter: 9 µm). The water dispersion composition exhibited good water redispersibility.

The water dispersion composition was added to a 0.5 wt% pulp slurry such that its solid content amounted to 3 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C and the practical water resistance test at 100°C, both of which scored 4 points. The results are shown in Table 2.

### [Example 2]

0.2 g of polyvinyl alcohol (degree of polymerization: 300) serving as an excipient and 1 g of water were mixed and heated with stirring at 70°C for 4 hours to prepare an aqueous polyvinyl alcohol solution. The resulting aqueous polyvinyl alcohol solution was mixed with 2 g of N,N-xylylenebis(12-hydroxystearamide) (biobased content: 83%, particle size after pulverization: 9 µm) which had been subjected to pulverization treatment using a jet mill and 0.2 g of polyethylene glycol trimethylnonyl ether (HLB 13), followed by kneading with a spatula for 10 minutes. Thereafter, the mixture was dried at 90°C for 6 hours and pulverized with a spatula to prepare a solid oil-resistant agent composition. The solid oil-resistant agent had a particle size of 6.4 mm.

2 g of the solid oil-resistant agent composition was mixed with 18 g of water and stirred for 5 hours to prepare a water dispersion composition (volume abundance ratio of particles with a size of 100 µm or more: 0%, volume median diameter: 9 µm). The water dispersion composition exhibited good water redispersibility.

The water dispersion composition was added to a 0.5 wt% pulp slurry such that its solid content amounted to 3 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C and the practical water resistance test at 100°C, both of which scored 4 points. The results are shown in Table 2.

### [Example 3]

0.2 g of polyacrylic acid (molecular weight: 5,000) serving as an excipient and 1 g of water were mixed and heated with stirring at 70°C for 4 hours to prepare an aqueous polyacrylic acid solution. The resulting aqueous polyacrylic acid solution was mixed with 2 g of N,N-xylylenebis(12-hydroxystearamide) (biobased content: 83%, particle size after pulverization: 9 µm) which had been subjected to pulverization treatment using a jet mill and 0.2 g of polyethylene glycol trimethylnonyl ether (HLB 13), followed by kneading with a spatula for 10 minutes. Thereafter, the mixture was dried at 90°C for 6 hours and pulverized with a spatula to prepare a solid oil-resistant agent composition. The solid oil-resistant agent had a particle size of 5.8 mm.

2 g of the solid oil-resistant agent composition was mixed with 18 g of water and stirred for 5 hours to prepare a water dispersion composition (volume abundance ratioof particles with a size of 100 µm or more: 0%, volume median diameter: 9 µm). The water dispersion composition exhibited good water redispersibility.

The water dispersion composition was added to a 0.5 wt% pulp slurry such that its solid content amounted to 3 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C and the practical water resistance test at 100°C, both of which scored 4 points. The results are shown in Table 2.

### [Example 4]

0.2 g of hydroxyethyl cellulose serving as an excipient and 1 g of water were mixed and heated with stirring at 70°C for 4 hours to prepare an aqueous hydroxyethyl cellulose solution. The resulting aqueous hydroxyethyl cellulose solution was mixed with 2 g of N,N'-ethylenebis(stearamide) (biobased content: 97%, melting point: 143°C, particle size after pulverization: 18 µm) which had been subjected to pulverization treatment using a jet mill and 0.2 g of polyethylene glycol trimethylnonyl ether (HLB 13), followed by kneading with a spatula for 10 minutes. Thereafter, the mixture was dried at 90°C for 6 hours and pulverized with a spatula to prepare a solid oil-resistant agent composition. The solid oil-resistant agent had a particle size of 4.8 mm.

2 g of the solid oil-resistant agent composition was mixed with 18 g of water and stirred for 5 hours to prepare a water dispersion composition (volume abundance ratio of particles with a size of 100 µm or more: 4.2%, volume median diameter: 18 µm). The water dispersion composition exhibited good water redispersibility.

The water dispersion composition was added to a 0.5 wt% pulp slurry such that its solid content amounted to 3 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C and the practical water resistance test at 100°C, both of which scored 4 points. The results are shown in Table 2.

### [Example 5]

0.2 g of hydroxyethyl cellulose serving as an excipient and 1 g of water were mixed and heated with stirring at 70°C for 4 hours to prepare an aqueous hydroxyethyl cellulose solution. The resulting aqueous hydroxyethyl cellulose solution was mixed with 2 g of N,N'-ethylenebis(12-hydroxystearamide) (biobased content: 95%, melting point: 145°C, particle size after pulverization: 17 µm) which had been subjected to pulverization treatment using a jet mill and 0.2 g of polyethylene glycol trimethylnonyl ether (HLB 13), followed by kneading with a spatula for 10 minutes. Thereafter, the mixture was dried at 90°C for 6 hours and pulverized with a spatula to prepare a solid oil-resistant agent composition. The solid oil-resistant agent had a particle size of 6.9 mm.

2 g of the solid oil-resistant agent composition was mixed with 18 g of water and stirred for 5 hours to prepare a water dispersion composition (volume abundance ratio of particles with a size of 100 µm or more: 6%, volume median diameter: 17 µm). The water dispersion composition exhibited good water redispersibility.

The water dispersion composition was added to a 0.5 wt% pulp slurry such that its solid content amounted to 5 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C and the practical water resistance test at 100°C, both of which scored 4 points. The results are shown in Table 2.

### [Example 6]

0.2 g of hydroxyethyl cellulose serving as an excipient and 1 g of water were mixed and heated with stirring at 70°C for 4 hours to prepare an aqueous hydroxyethyl cellulose solution. The resulting aqueous hydroxyethyl cellulose solution was mixed with 2 g of N,N'-ethylenebis(oleamide) (biobased content: 96%, melting point: 116°C, particle size after pulverization: 24 µm) which had been subjected to pulverization treatment using a jet mill and 0.2 g of polyethylene glycol trimethylnonyl ether (HLB 13), followed by kneading with a spatula for 10 minutes. Thereafter, the mixture was dried at 80°C for 7 hours and pulverized with a spatula to prepare a solid oil-resistant agent composition. The solid oil-resistant agent had a particle size of 8.9 mm.

2 g of the solid oil-resistant agent composition was mixed with 18 g of water and stirred for 5 hours to prepare a water dispersion composition (volume abundance ratio of particles with a size of 100 µm or more: 0%, volume median diameter: 24 µm). The water dispersion composition exhibited good water redispersibility.

The water dispersion composition was added to a 0.5 wt% pulp slurry such that its solid content amounted to 7 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C and the practical water resistance test at 100°C, both of which scored 4 points. The results are shown in Table 2.

### [Example 7]

0.1 g of carboxymethyl cellulose nanofiber serving as an excipient and 5 g of water were mixed and heated with stirring at 70°C for 4 hours to prepare an aqueous carboxymethyl cellulose nanofiber solution. 2 g of polyglycerol fatty acid ester (biobased content: 100%, melting point: 70°C), 0.2 g of polyethylene glycol trimethylnonyl ether (HLB 13), and 2.0 g of water were mixed and heated to 80°C, and then emulsified using an ultrasonic homogenizer. The resulting emulsion and the aqueous carboxymethyl cellulose nanofiber solution were mixed with a spatula. Thereafter, the mixture was dried at 60°C for 2 hours to prepare a solid oil-resistant agent.

The resulting solid oil-resistant agent was mixed with 17.8 g of water and stirred for 5 hours to prepare a water dispersion composition (volume abundance ratio of particles with a size of 100 µm or more: 6.0%, volume median diameter: 27 µm). The water dispersion composition had a particle size equivalent to that of Comparative Example 2.

The water-dispersible repellent was added to a pulp slurry having a concentration of 0.5 wt% so that the ratio of the water-dispersible repellent was 5 wt% in terms of the solid content, relative to pulp, to prepare a pulp-containing water-dispersible repellent. The pulp-containing water-dispersible repellent was charged into an automatic mold molding machine to prepare a pulp mold.

The pulp mold was subjected to the practical oil resistance test at 65°C, which scored 4 points. The results are shown in Table 1.

### [Example 8]

13.6 g of an aqueous solution of unmodified cellulose nanofiber (solid content concentration: 1.5 wt%) serving as an excipient was mixed with 2 g of N,N'-ethylenebis(stearamide) (biobased content: 97%, melting point: 143°C, particle size after pulverization: 18 µm) which had been subjected to pulverization treatment using a jet mill and 0.2 g of polyethylene glycol trimethylnonyl ether (HLB 13), followed by kneading with a spatula for 10 minutes. Thereafter, the mixture was dried at 60°C for 2 hours to prepare a solid oil-resistant agent.

The resulting solid oil-resistant agent was mixed with 17.8 g of water and stirred for 5 hours to prepare a water dispersion composition (volume abundance ratio of particles with a size of 100 µm or more: 10%, volume median diameter: 44 µm).

### [Example 9]

0.2 g of sucrose stearate serving as an excipient and 1 g of water were mixed and heated with stirring at 70°C for 4 hours to prepare an aqueous sucrose stearate solution. The resulting aqueous sucrose stearate solution was mixed with 2 g of N,N'-ethylenebis(stearamide) (biobased content: 97%, melting point: 143°C, particle size after pulverization: 18 µm) which had been subjected to pulverization treatment using a jet mill and 0.2 g of polyethylene glycol trimethylnonyl ether (HLB 13), followed by kneading with a spatula for 10 minutes. Thereafter, the mixture was dried at 60°C for 2 hours to prepare a solid oil-resistant agent.

The resulting solid oil-resistant agent was mixed with 17.8 g of water and stirred for 5 hours to prepare a water dispersion composition (volume abundance ratio of particles with a size of 100 µm or more: 0%, volume median diameter: 8 µm).

### [Example 10]

12.5 g of a polystearyl acrylate water dispersion (particle size: 20 µm, concentration of the aqueous solution: 12 wt%), 0.2 g of polyethylene glycol trimethylnonyl ether (HLB 13), and 0.15 g of hydroxyethyl cellulose serving as an excipient were mixed. Thereafter, the mixture was stirred at 70°C for 3 hours and then dried at 40°C for 16 hours to prepare a solid oil-resistant agent composition. The solid oil-resistant agent had a particle size of 5.0 mm.

2 g of the solid oil-resistant agent composition was mixed with 18 g of water and stirred for 5 hours to prepare a water dispersion composition (volume abundance ratio of particles with a size of 100 µm or more: 6.0%, volume median diameter: 29 µm). The water dispersion composition exhibited good water redispersibility.

### [Reference Example 1]

2 g of N,N-xylylenebis(12-hydroxystearamide) (biobased content: 83%, particle size after pulverization: 9 µm) which had been subjected to pulverization treatment using a jet mill, 0.2 g of polyethylene glycol trimethylnonyl ether (HLB 13), and 17.8 g of water were mixed to prepare a water dispersion composition (volume abundance ratio of particles with a size of 100 µm or more: 0%, volume median diameter: 9 µm).

The water dispersion composition was added to a 0.5 wt% pulp slurry such that its solid content amounted to 3 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C and the practical water resistance test at 100°C, both of which scored 4 points. The results are shown in Table 3.

### [Reference Example 2]

2 g of N,N'-ethylenebis(stearamide) (biobased content: 97%, melting point: 143°C, particle size after pulverization: 18 µm) which had been subjected to pulverization treatment using a jet mill, 0.2 g of polyethylene glycol trimethylnonyl ether (HLB 13), and 17.8 g of water were mixed to prepare a water dispersion composition (volume abundance ratio of particles with a size of 100 µm or more: 3.9%, volume median diameter: 18 µm).

The water dispersion composition was added to a 0.5 wt% pulp slurry such that its solid content amounted to 3 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C and the practical water resistance test at 100°C, both of which scored 4 points. The results are shown in Table 3.

### [Reference Example 3]

2 g of N,N'-ethylenebis(12-hydroxystearamide) (biobased content: 95%, melting point: 145°C, particle size after pulverization: 17 µm) which had been subjected to pulverization treatment using a jet mill, 0.2 g of EO/PO polyalkylene glycol natural alcohol ether, and 17.8 g of water were mixed to prepare a water dispersion composition (volume abundance ratio of particles with a size of 100 µm or more: 5%, volume median diameter: 17 µm).

The water dispersion composition was added to a 0.5 wt% pulp slurry such that its solid content amounted to 5 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C and the practical water resistance test at 100°C, both of which scored 4 points. The results are shown in Table 3.

### [Reference Example 4]

2 g of N,N'-ethylenebis(oleamide) (biobased content: 96%, melting point: 116°C, particle size after pulverization: 24 µm) which had been subjected to pulverization treatment using a jet mill, 0.2 g of EO/PO polyalkylene glycol alcohol ether (HLB 7), and 17.8 g of water were mixed to prepare a water dispersion composition (volume abundance ratio of particles with a size of 100 µm or more: 0%, volume median diameter: 24 µm).

The water dispersion composition was added to a 0.5 wt% pulp slurry such that its solid content amounted to 7 wt% relative to the pulp, thereby preparing a pulp-containing water dispersion composition. The pulp-containing water dispersion composition was charged into an automatic mold molding machine to prepare a pulp mold.

The pulp mold was subjected to the practical oil resistance test at 65°C, which scored 4 points. The results are shown in Table 3.

**[Table 2]**

| Table 2. Evaluation Results for Examples 1-10 | | | | | | | | | | | |
|---|---|---|---|---|---|---|---|---|---|---|---|
| | | Exemple1 | Example2 | Example3 | Example4 | Example5 | Example6 | Example7 | Example8 | Example9 | Example1 0 |
| Oil-resistant agent | N,N'-xylylenebis(12-hydroxystearamide) | 2 g | 2 g | 2 g | - | - | - | | | | |
| | N,N'-ethylenebis(stearamide) | - | - | - | 2 g | - | - | | 2 g | 2 g | |
| | N,N'-ethylenebis(12-hydroxystearamide) | - | - | - | - | 2 g | | | | | |
| | N,N'-ethylenebis(oleamide) | - | - | - | - | - | 2 g | | | | |
| | Polyglycerol fatty acid ester | | | | | | | 2 g | | | |
| | Polystearyl acrylate | | | | | | | | | | 1.5g |
| | Hydroxyethyl cellulose | 0.2 g | - | - | 0.2 g | 0.2 g | 0.2 g | | | | 0.15g |
| | Polyvinyl alcohol (degree of polymerization: 300) | - | 0.2 g | - | - | - | - | | | | |
| | Polyacrylic acid (molecular weight: 6,000) | | | 0.2 g | - | - | - | | | | |
| | Carboxymethyl cellulose nanofiber | | | | | | | 0.1g | | | |
| | Aqueous solution of unmodified cellulose nanofiber | | | | | | | | 13.6g | | |
| | Sucrose stearate | | | | | | | | | 0.2g | |
| Dispersant | Polyethylene glycol trimethylnonyl ether (HLB 13) | 0.2 g | 0.2 g | 0.2 g | 0.2 g | 0.2 g | 0.2 g | 0.2g | 0.2g | 0.2g | 0.2g |
| Evaluation | Water redispersibility | ○: Good | ○: Good | ○: Good | ○: Good | ○: Good | ○: Good | | - | | ○: Good |
| | Volume abundance ratio of particles with else of 100 µm or more | 0% | 0% | 0% | 4.2% | 6% | 0% | 6.0% | 10% | 0% | 6.0% |
| | Volume median diameter | 9µm | 9µm | 9µm | 18µm | 17µm | 24µm | 27µm | 44µm | 8µm | 29µm |
| | *Practical oil resistance test at 65*°*C* | 4 points | 4 points | 4 points | 4 points | 4 points | 4 points | 4 points | - | - | - |
| | Practical water resistance test at 100°C | 4 points | 4 points | 4 points | 4 points | 4 points | - | - | - | - | - |

**[Table 3]**

| Table 3. Evaluation Results for Examples 1-4 | | | | | |
|---|---|---|---|---|---|
| | | Reference Example 1 | Reference Example 2 | Reference Example 3 | Reference Example 4 |
| Oil-resistant agent | N,N'-xylylenebis(12-hydroxystearamide) | 2 g | - | - | - |
| | N,N'-ethylenebis(stearamide) | - | 2 g | - | - |
| | N,N'-ethylenebis(12-hydroxystearamide) | - | - | 2 g | |
| | N,N'-ethylenebis(oleamide) | - | - | - | 2 g |
| Dispersant | Polyethylene glycol trimethylnonyl ether (HLB 13) | 0.2 g | 0.2 g | 0.2 g | 0.2 g |
| Evaluation | Water redispersibility | - | - | - | - |
| | Volume abundance ratio of particles with size of 100 µm or more | 0 % | 3.9% | 5% | 0% |
| | Volume median diameter | 9µm | 18µm | 17µm | 24µm |
| | Practical oil resistance test at 65°C | 4 points | 4 points | 4 points | 4 points |
| | Practical water resistance test at 100°C | 4 points | 4 points | 4 points | - |

## Claims

1. An oil-resistant agent composition in solid form, comprising a liquid-repellent compound, a dispersant, and an excipient.

2. The oil-resistant agent composition according to claim 1, wherein the liquid-repellent compound has a hydrocarbon group having 6 or more and 40 or less carbon atoms or a polysiloxane group.

3. The oil-resistant agent composition according to claim 1 or 2, wherein the liquid-repellent compound comprises at least one selected from the group consisting of a modified body of amine, a modified body of polyol, a modified body of polycarboxylic acid, and other solid oils.

4. The oil-resistant agent composition according to any one of claims 1 to 3, wherein
the liquid-repellent compound is selected from the group consisting of a modified body of amine, a modified body of polyol, and a modified body of polycarboxylic acid,
the modified body of amine is a compound having an amine backbone and one or more groups represented by the following formula:
-Y^{N}-Z^{N}ₙ
wherein Y^{N} is a 1+n valent group composed of one or more selected from the group consisting of Y^{N1} and Y^{N2},
Y^{N1} is a group composed of one or more selected from the group consisting of a direct bond, -O-, -C(=O)-, -C(=NR')-, -C(=S)-, -S-, -S(=O)₂-, -NR'-, -C(OR')R'-, - C(OR')(-)₂, and -N(-)₂ wherein R' is independently at each occurrence a hydrogen atom or a hydrocarbon group having 1 to 30 carbon atoms,
Y^{N2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
Z^{N} is a monovalent hydrocarbon group having 1 or more and 40 or less carbon atoms and optionally having a substituent, or a monovalent polysiloxane group, and
n is an integer of 1 or more and 3 or less,
in which at least one -Y^{N}-Z^{N}ₙ is bonded to a nitrogen atom of the amine backbone;
the modified body of polyol is a compound formed by replacing one or more hydroxy groups of the polyol by a group represented by the following formula:
-Y^{O}-Z^{O}ₙ
wherein Y^{O} is a 1+n valent group composed of one or more selected from the group consisting of Y^{O1} and Y^{O2},
Y^{O1} is a group composed of one or more selected from the group consisting of a direct bond, -O-, -C(=O)-, -C(=NR')-, -C(=S)-, -S-, -S(=O)₂-, -NR'-, -C(OR')R'-, - C(OR')(-)₂, and -N(-)₂ wherein R' is independently at each occurrence a hydrogen atom or a hydrocarbon group having 1 to 30 carbon atoms,
Y^{O2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
Z^{O} is a monovalent hydrocarbon group having 1 or more and 40 or less carbon atoms and optionally having a substituent, or a monovalent polysiloxane group, and
n is an integer of 1 or more and 3 or less; and
the modified body of polycarboxylic acid is a compound formed by replacing a hydroxyl group(s) of one or more carboxyl groups of the polycarboxylic acid by a group represented by the following formula:
-Y^{C}-Z^{C}ₙ
wherein Y^{C} is a 1+n valent group composed of one or more selected from the group consisting of Y^{C1} and Y^{C2},
Y^{C1} is a group composed of one or more selected from the group consisting of a direct bond, -O-, -C(=O)-, -C(=NR')-, -C(=S)-, -S-, -S(=O)₂-, -NR'-, -C(OR')R'-, - C(OR')(-)₂, and -N(-)₂ wherein R' is independently at each occurrence a hydrogen atom or a hydrocarbon group having 1 to 30 carbon atoms,
Y^{C2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
Z^{C} is a monovalent hydrocarbon group having 1 or more and 40 or less carbon atoms and optionally having a substituent, or a monovalent polysiloxane group, and
n is an integer of 1 or more and 3 or less.

5. The oil-resistant agent composition according to claim 4, wherein
the amine backbone is obtained by removing at least one hydrogen atom bonded to a nitrogen atom of at least one amine compound selected from the group consisting of:
ethylenediamine, propylenediamine, butylenediamine, pentanediamine, hexamethylenediamine;
diethylenetriamine, triethylenetetramine, tetraethylenepentamine, pentaethylenehexamine, dipropylenetriamine, tripropylenetetramine, tetrapropylenepentamine;
2-amino-1,3-propanediol;
o-, m-, or p-xylylenediamine; and
4,4'-diaminodiphenyl ether, 4,4'-diaminodiphenylmethane, and 4,4'-oxydianiline,
the polyol is at least one selected from the group consisting of:
glucose, fructose, galactose, and xylose;
sucrose, cycloamylose, cyclodextrin, maltose, trehalose, lactose, and sucralose;
sorbitol, maltitol, erythritol, isomalt, lactitol, mannitol, xylitol, sorbitan, and lactitol;
starch, cellulose, curdlan, pullulan, alginic acid, carrageenan, guar gum, chitin, chitosan, locust bean gum, kappa-carrageenan, iota-carrageenan, isomaltodextrin, gellan gum, and tamarind seed gum;
kojic acid, quinic acid, chlorogenic acid, and gluconic acid;
glucosamine;
ascorbic acid and inositol;
catechin, quercetin, and anthocyanin;
glycerol, ethylene glycol, propylene glycol, diethylene glycol, triethylene glycol, tetraethylene glycol, neopentyl glycol, trimethylene glycol, trimethylolpropane, and trimethylolethane; and
polyglycerol, polyvinyl alcohol, hydroxyethyl (meth)acrylate polymer, hydroxypropyl (meth)acrylate polymer, and hydroxybutyl (meth)acrylate polymer, and
the polycarboxylic acid is at least one selected from the group consisting of:
citric acid, malic acid, glutaric acid, adipic acid, phthalic acid, alginic acid, tartaric acid, oxalic acid, malonic acid, succinic acid, fumaric acid, maleic acid, and aldaric acid;
tricarballylic acid, t-aconitic acid, and trimellitic acid;
pyromellitic acid;
a polymer comprising a repeating unit derived from a compound represented by the following formula:
CH₂=C(-Q)-C(=O)-OH
wherein Q is a hydrogen atom, a monovalent organic group, or a halogen atom; and
a derivative thereof.

6. The oil-resistant agent composition according to any one of claims 3 to 5, wherein the other solid oil comprises at least one selected from the group consisting of rice wax, carnauba wax, hydrogenated castor oil, hydrogenated soybean oil, hydrogenated jojoba oil, hydrogenated rapeseed oil, sunflower wax, candelilla wax, 12-hydroxystearic acid, and Chinese wax.

7. The oil-resistant agent composition according to any one of claims 1 to 6, wherein the amount of the dispersant is 0.1 to 80 parts by weight and the amount of the excipient is 0.1 to 100 parts by weight based on 100 parts by weight of the liquid-repellent compound.

8. The oil-resistant agent composition according to any one of claims 1 to 7, wherein the excipient comprises at least one selected from the group consisting of a sugar, a polysaccharide and a derivative of a polysaccharide, a water-soluble vinyl polymer and a salt thereof, and a silicate.

9. The oil-resistant agent composition according to any one of claims 1 to 8, wherein the excipient comprises at least one selected from the group consisting of glucose, fructose, galactose, dextrin, sucrose, lactose, hydroxyethyl cellulose, hydroxypropyl cellulose, methyl cellulose, carboxymethyl cellulose, starch, modified starch, pullulan, guar gum, locust bean gum, tamarind seed gum, chitosan, gum arabic, karaya gum, pectin, konjac glucomannan, carrageenan, isomaltodextrin, mannitol, sorbitol, agar, alginic acid, xanthan gum, gellan gum, Agrobacterium succinoglycan, cationized guar gum, polyvinyl alcohol, polyacrylic acid, and sodium polyacrylate.

10. The oil-resistant agent composition according to any one of claims 1 to 9, wherein the dispersant comprises at least one selected from the group consisting of a nonionic surfactant, a cationic surfactant, an anionic surfactant, an amphoteric surfactant, and a polymer dispersant.

11. The oil-resistant agent composition according to any one of claims 1 to 10, wherein the oil-resistant agent composition is in a tablet form, and has a particle size of 2,000 to 100,000 µm.

12. The oil-resistant agent composition according to any one of claims 1 to 11, wherein the water content of the oil-resistant agent composition is 0.01% by weight to 20% by weight.

13. The oil-resistant agent composition according to any one of claims 1 to 12, further comprising at least one selected from the group consisting of a lubricant, a binder, and a disintegrant.

14. The oil-resistant agent composition according to claim 1, wherein
the liquid-repellent compound is a modified body of amine, and
the modified body of amine is a compound represented by the following formula:
N(-C(=O)-Z^{N})ₚ(-H)_{q}-L¹-[N(-C(=O)-Z^{N})ᵣ(-H)ₛ-L¹-]ₜ-N(- C(=O)-Z^{N})ₚ(-H)_{q}
wherein Z^{N} is independently at each occurrence an alkyl group having 14 or more and 24 or less carbon atoms;
L¹ is independently at each occurrence a divalent aliphatic hydrocarbon group having 2 to 20 carbon atoms or an aromatic hydrocarbon group;
p is independently at each occurrence an integer of 1 or 2;
q is independently at each occurrence 0 or 1;
p + q is 2 in each N(-C(=O)-Z^{N})ₚ(-H)_{q};
r is independently at each occurrence 0 or 1;
s is independently at each occurrence 0 or 1;
r + s is 1 in each N(-C(=O)-Z^{N})ᵣ(-H)ₛ; and
t is an integer of 0 to 3.

15. An oil-resistant paper comprising the liquid-repellent compound, the dispersant, and the excipient in the oil-resistant agent composition according to any one of claims 1 to 14.

16. The oil-resistant paper according to claim 15,
wherein the oil-resistant paper is a pulp mold product.

17. A method for producing an oil-resistant agent composition, comprising:
mixing a liquid-repellent compound, a dispersant, an excipient, and a liquid medium to obtain a precursor mixture; and
subjecting the precursor mixture to a heat treatment or a drying treatment to obtain an oil-resistant agent composition in solid form.

18. The method for producing an oil-resistant agent composition according to claim 17, further comprising tableting the oil-resistant agent composition.

19. A method for producing a paper product, comprising:
mixing the oil-resistant agent composition according to any one of claims 1 to 14 with water to prepare a water dispersion of the oil-resistant agent composition; and
treating paper with the water dispersion by external addition treatment or internal addition treatment.

20. A method for producing a pulp mold, comprising:
mixing the oil-resistant agent composition according to any one of claims 1 to 14 with water to prepare a water dispersion of the oil-resistant agent composition; and
filling a mold with the water dispersion and a pulp substrate, and allowing water to pass through the mold to form pulp.
